# EUROPEAN PATENT APPLICATION

(11) **EP 3 913 950 A1**
(43) Date of publication of application: **24.11.2021**
(21) Application number: 20766335.2
(22) Date of filing: 04.02.2020
(51) Int. Cl.: H04W 12/02, H04W 12/10

(54) **COMMUNICATION METHOD AND DEVICE**

(30) Priority: 01.03.2019 CN 201910155966
(71) Applicant: Huawei Technologies Co., Ltd., Shenzhen, Guangdong 518129 (CN)
(72) Inventor: WU, Rong, Shenzhen, Guangdong 518129 (CN); LI, He, Shenzhen, Guangdong 518129 (CN)
(74) Representative: Epping - Hermann - Fischer
(86) International application number: PCT/CN2020/074284
(87) International publication number: WO 2020/177503

(57) **Abstract**

Embodiments of this application relate to a communication method and device. The communication method includes: receiving, by a terminal device, a first message from an access network device, where the first message includes first information, and the first information is used to indicate whether to activate a user plane data integrity protection function, or is used to indicate whether the access network device supports a user plane data integrity protection function; and if the terminal device cannot identify the first information, discarding or storing the first information. After one or more network elements in a 4G network are upgraded, the method provided in the embodiments of this application can be performed to implement collaborative processing on user plane data integrity protection between devices. For example, the method may enable all the devices to activate a user plane data integrity protection function or enable no device to activate a user plane data integrity protection function, so that the devices keep consistent in processing manners, thereby reducing an error probability.

## Description

### CROSS-REFERENCE TO RELATED APPLICATIONS

This application claims priority to Chinese Patent Application No. 201910155966.5, filed with the China National Intellectual Property Administration on March 1, 2019 and entitled "COMMUNICATION METHOD AND DEVICE", which is incorporated herein by reference in its entirety.

### TECHNICAL FIELD

This application relates to the field of communications technologies, and in particular, to a communication method and device.

### BACKGROUND

In a 4th generation (the 4^{th} generation, 4G) long term evolution (long term evolution, LTE) system, integrity protection is not performed on user plane (user plane, UP) data. However, in a 5th generation (the 5^{th} generation, 5G) system, it is currently discussed that user plane data integrity protection can be supported.

In an initial stage of 5G system deployment, a device in a 4G system, for example, a terminal device, an access network device, or a core network device, is continuously upgraded to finally meet a requirement of the 5G system. In a device upgrade process, a 4G network function and an upgraded network function may coexist for a period of time. For example, if the access network device is upgraded, but neither the terminal device nor the core network device is upgraded, the terminal device and the core network device that have a 4G network function coexist with the upgraded access network device. In such a coexistence scenario, how to implement collaborative processing on user plane data integrity protection between a plurality of devices is a problem that needs to be resolved.

### SUMMARY

Embodiments of this application provide a communication method and device, to support collaborative processing on user plane data integrity protection between devices after one or more devices in a 4G network are upgraded.

According to a first aspect, a first type of communication method is provided, where the method includes: A terminal device receives a first message from an access network device, where the first message includes first information, and the first information is used to indicate whether to activate a user plane data integrity protection function, or is used to indicate whether the access network device supports a user plane data integrity protection function. If the terminal device cannot identify the first information, the terminal device discards or stores the first information.

The method may be performed by a first communications apparatus. The first communications apparatus may be a terminal device or a communications apparatus that can support a terminal device in implementing a function required by the method. Certainly, the first communications apparatus may alternatively be another communications apparatus, for example, a chip system. Herein, an example in which the first communications apparatus is the terminal device is used.

In this embodiment of this application, the access network device may determine whether to activate the user plane data integrity protection function, or determine whether the access network device supports the user plane data integrity protection function, and the access network device may notify the terminal device of a determining result. In this case, the terminal device may determine, based on the first information sent by the access network device, whether the terminal device needs to activate the user plane data integrity protection function. For example, the terminal device is a device that is not upgraded, and the terminal device that is not upgraded cannot support the user plane data integrity protection function. In this case, the terminal device may not activate the user plane data integrity protection function. It can be learned that after one or more network elements in a 4G network are upgraded, the method provided in this embodiment of this application can be performed to implement collaborative processing on user plane data integrity protection between devices. For example, the method may enable all the devices to activate the user plane data integrity protection function or enable no device to activate the user plane data integrity protection function, so that the devices keep consistent in processing manners, thereby reducing an error probability.

With reference to the first aspect, in a possible implementation of the first aspect, the method further includes: The terminal device sends an exception report to the access network device, where the exception report is used to indicate that the terminal device cannot identify the first information.

If the terminal device cannot identify the first information, the terminal device may further send the exception report to the access network device, so that the access network device determines that the terminal device cannot activate the user plane data integrity protection function. Therefore, the access network device can take measures as much as possible to keep consistent with the terminal device, or continue to negotiate with the terminal device. This reduces a possibility of errors caused by different manners of processing a user plane data integrity protection function by different devices (for example, some devices have activated the user plane data integrity protection function, but some devices have not activated the user plane data integrity protection function). Certainly, if the terminal device cannot identify the first information, the terminal device may alternatively not send the exception report, and the access network device may also determine, in a subsequent procedure, that an exception occurs in the terminal device. In this way, signaling overheads between the terminal device and the access network device can be reduced.

With reference to the first aspect, in a possible implementation of the first aspect, the method further includes: The terminal device sends a second message to the access network device, where the second message is used to indicate a processing result of the terminal device for the user plane data integrity protection function.

Regardless of whether the terminal device has activated the user plane data integrity protection function or has not activated the user plane data integrity protection function, the terminal device may notify the access network device of the processing result of the terminal device for the user plane data integrity protection function, so that the access network device can determine the processing result of the terminal device, thereby performing corresponding processing.

With reference to the first aspect, in a possible implementation of the first aspect, the processing result is used to indicate whether the terminal device has activated the user plane data integrity protection function; or the processing result includes a failure indication, and a cause value of the failure indication is used to indicate whether the terminal device has activated the user plane data integrity protection function, or a cause value of the failure indication is used to indicate that the terminal device cannot identify the first information.

The processing result may simply indicate whether the terminal device has activated the user plane data integrity protection function. In this case, the access network device can determine a processing status of the terminal device based on the processing result. In addition, because content indicated by the processing result is relatively simple, the processing result does not need to occupy a relatively large quantity of bits. This helps reduce signaling overheads. Alternatively, the processing result may include the failure indication, and a cause value of the failure indication may indicate a relatively detailed processing result of the terminal device for the user plane data integrity protection function. For example, if the terminal device has not activated the user plane data integrity protection function, the terminal device sends the failure indication to the network device, so that the access network device not only can learn that the terminal device has not activated the user plane data integrity protection function, but also can determine a cause why the terminal device has not activated the user plane data integrity protection function. It can be learned that, the processing result sent to the access network device is more detailed and clear, and this is more helpful for the access network device to perform corresponding processing.

With reference to the first aspect, in a possible implementation of the first aspect, the method further includes: The terminal device sends third information to the access network device, to send the third information to a first core network device through the access network device, where the third information is used to indicate whether to activate the user plane data integrity protection function, or is used to indicate whether the terminal device supports the user plane data integrity protection function.

In this optional manner, the terminal device may further send capability information of the terminal device for user plane data integrity protection to the first core network device. The capability information includes, for example, information indicating whether to activate the user plane data integrity protection function, or information indicating whether the terminal device supports the user plane data integrity protection function. Therefore, the first core network device can also obtain the capability information of the terminal device for the user plane data integrity protection. For example, the first core network device may not need to obtain the capability information of the terminal device for the user plane data integrity protection in manners such as querying subscription data. In addition, in this manner, initiative of the terminal device is further improved.

Herein, that the terminal device transparently transmits the third information to the first core network device through the access network device is used as an example. Alternatively, in another manner, the terminal device may also send the third information to the access network device, instead of transparently transmitting the third information to the first core network device through the access network device. In this case, the access network device may obtain the third information, so that the access network device can determine a capability of the terminal device for user plane data integrity protection. After obtaining the third information, the access network device may further send the third information to the first core network device, or may not send the third information to the first core network device. This is not specifically limited.

With reference to the first aspect, in a possible implementation of the first aspect, the third information is used to indicate whether to activate the user plane data integrity protection function, or is used to indicate whether the terminal device supports the user plane data integrity protection function; or the third information includes third integrity protection policy information, and the third integrity protection policy information is used to indicate whether to activate the user plane data integrity protection function.

In the first implementation of the third information, the third information may be directly used to indicate whether to activate the user plane data integrity protection function, or is used to indicate whether the terminal device supports the user plane data integrity protection function. In this case, it may also be considered that the third information is specifically indication information, for example, referred to as third indication information, or referred to as an integrity protection indication. A specific name is not limited. This implementation of the third information is relatively simple. Alternatively, in the second implementation of the third information, the third information may include the third integrity protection policy information, and the third integrity protection policy information may be used to indicate whether to activate the user plane data integrity protection function. The third integrity protection policy information may also be referred to as a third user plane security policy or the like, and a name is not limited. When the third information includes the third integrity protection policy information, more complete content may be indicated, and this is more helpful for negotiation between devices.

With reference to the first aspect, in a possible implementation of the first aspect, the third integrity protection policy information is used to indicate that the user plane data integrity protection function needs to be activated; the third integrity protection policy information is used to indicate that the user plane data integrity protection function tends to be activated; or the third integrity protection policy information is used to indicate that the user plane data integrity protection function does not need to be activated.

It can be learned that, if the third information includes the third integrity protection policy information, indicated content is relatively loose. For example, in addition to indicating that the user plane data integrity protection function needs to be activated, the third information may further indicate that the user plane data integrity protection function tends to be activated. For a device (for example, the first core network device) receiving the third information, there may be more freedom in an aspect of determining whether to activate the user plane data integrity protection function. This can better reflect value of "negotiation" between devices.

With reference to the first aspect, in a possible implementation of the first aspect, the third information further includes third encryption and decryption policy information, and the third encryption and decryption policy information is used to indicate whether to activate user plane data encryption and decryption functions.

The third encryption and decryption policy information is included, so that content included in the third information can be more complete.

According to a second aspect, a second type of communication method is provided, where the method includes: A terminal device receives a first message from an access network device, where the first message includes first information, and the first information is used to indicate whether to activate a user plane data integrity protection function; or is used to indicate whether the access network device supports a user plane data integrity protection function. The terminal device determines, based on the first information, whether the terminal device is to activate the user plane data integrity protection function.

The method may be performed by a second communications apparatus. The second communications apparatus may be a terminal device or a communications apparatus that can support a terminal device in implementing a function required by the method. Certainly, the second communications apparatus may alternatively be another communications apparatus, for example, a chip system. Herein, an example in which the second communications apparatus is the terminal device is used.

In this embodiment of this application, the access network device may determine whether to activate the user plane data integrity protection function, or determine whether the access network device supports the user plane data integrity protection function, and the access network device may notify the terminal device of a determining result. In this case, the terminal device may determine, based on the first information sent by the access network device, whether the terminal device needs to activate the user plane data integrity protection function. For example, the terminal device is a device that is upgraded, and the terminal device that is upgraded can support the user plane data integrity protection function. In this case, the terminal device may activate the user plane data integrity protection function. It can be learned that after one or more network elements in a 4G network are upgraded, the method provided in this embodiment of this application can be performed to implement collaborative processing on user plane data integrity protection between devices. For example, the method may enable all the devices to activate the user plane data integrity protection function or enable no device to activate the user plane data integrity protection function, so that the devices keep consistent in processing manners, thereby reducing an error probability.

With reference to the second aspect, in a possible implementation of the second aspect, after that the terminal device determines, based on the first information, whether the terminal device is to activate the user plane data integrity protection function, the method further includes: The terminal device sends a fifth message to the access network device, where the fifth message includes fourth information, and the fourth information is used to indicate whether to activate the user plane data integrity protection function.

Regardless of whether the terminal device has activated the user plane data integrity protection function or has not activated the user plane data integrity protection function, the terminal device may send the fourth information to the access network device, where the fourth information may indicate whether to activate the user plane data integrity protection function. This may be understood as: Both the first information and the fourth information are used for negotiation between the access network device and the terminal device, and a negotiation process enables the terminal device and the access network device to keep consistent as much as possible on whether to activate the user plane data integrity protection function.

With reference to the second aspect, in a possible implementation of the second aspect, the first information is used to indicate to activate the user plane data integrity protection function, or is used to indicate the access network device to support the user plane data integrity protection function; and the fourth information is used to indicate that the user plane data integrity protection function needs to be activated; the fourth information is used to indicate that the user plane data integrity protection function tends to be activated; or the fourth information is used to indicate that the user plane data integrity protection function does not need to be activated.

The terminal device may determine the fourth information based on the first information, or the terminal device may determine the fourth information based on the first information and related information of the terminal device. For example, the related information of the terminal device includes information such as a transmission rate required after the user plane data integrity protection function is activated and/or a maximum data rate supported by the terminal device. In this case, if the first information is used to indicate to activate the user plane data integrity protection function, or is used to indicate that the access network device supports the user plane data integrity protection function, the terminal device may determine that the user plane data integrity protection function can be activated. In this case, the fourth information determined by the terminal device may indicate that the user plane data integrity protection function needs to be activated, or indicate that the user plane data integrity protection function tends to be activated. Alternatively, even if the first information is used to indicate to activate the user plane data integrity protection function, or is used to indicate that the access network device supports the user plane data integrity protection function, the terminal device may determine that the user plane data integrity protection function cannot be activated. In this case, the fourth information determined by the terminal device may indicate that the user plane data integrity protection function does not need to be activated. It can be learned that even if the access network device indicates that the user plane data integrity protection function can be activated, the terminal device may determine that the user plane data integrity protection function cannot be activated. The terminal device does not directly perform a corresponding operation based on an indication of the access network device, but reflects a negotiation process. Therefore, the terminal device is more intelligent.

With reference to the second aspect, in a possible implementation of the second aspect, the first information is used to indicate not to activate the user plane data integrity protection function, or is used to indicate that the access network device does not support the user plane data integrity protection function; and the method further includes: The terminal device discards or stores the first information.

If the first information is used to indicate not to activate the user plane data integrity protection function, or is used to indicate that the access network device does not support the user plane data integrity protection function, the terminal device may discard the first information or store the first information. In addition, to keep consistent with the access network device, the fourth information sent by the terminal device may indicate not to activate the user plane data integrity protection function. Naturally, the terminal device does not activate the user plane data integrity protection function either.

With reference to the second aspect, in a possible implementation of the second aspect, before that a terminal device receives a first message from an access network device, the method further includes: The terminal device sends third information to the access network device, to send the third information to a first core network device through the access network device, where the third information is used to indicate whether to activate the user plane data integrity protection function, or is used to indicate whether the terminal device supports the user plane data integrity protection function.

In this optional manner, the terminal device may further send capability information of the terminal device for user plane data integrity protection to the first core network device. The capability information includes, for example, information indicating whether to activate the user plane data integrity protection function, or information indicating whether the terminal device supports the user plane data integrity protection function. Therefore, the first core network device can also obtain the capability information of the terminal device for the user plane data integrity protection. For example, the first core network device may not need to obtain the capability information of the terminal device for the user plane data integrity protection in manners such as querying subscription data. In addition, in this manner, initiative of the terminal device is further improved.

Herein, that the terminal device transparently transmits the third information to the first core network device through the access network device is used as an example. Alternatively, in another manner, the terminal device may also send the third information to the access network device, instead of transparently transmitting the third information to the first core network device through the access network device. In this case, the access network device may obtain the third information, so that the access network device can determine a capability of the terminal device for user plane data integrity protection. After obtaining the third information, the access network device may further send the third information to the first core network device, or may not send the third information to the first core network device. This is not specifically limited.

With reference to the second aspect, in a possible implementation of the second aspect, the third information is used to indicate whether to activate the user plane data integrity protection function, or is used to indicate whether the terminal device supports the user plane data integrity protection function; or the third information includes third integrity protection policy information, and the third integrity protection policy information is used to indicate whether the first core network device is to activate the user plane data integrity protection function.

With reference to the second aspect, in a possible implementation of the second aspect, the third integrity protection policy information is used to indicate that the user plane data integrity protection function needs to be activated; the third integrity protection policy information is used to indicate that the user plane data integrity protection function tends to be activated; or the third integrity protection policy information is used to indicate that the user plane data integrity protection function does not need to be activated.

With reference to the second aspect, in a possible implementation of the second aspect, the third information further includes third encryption and decryption policy information, and the third encryption and decryption policy information is used to indicate whether to activate user plane data encryption and decryption functions.

For technical effects achieved by some possible implementations of the second aspect, refer to the descriptions of the technical effects of corresponding possible implementations of the first aspect.

According to a third aspect, a third type of communication method is provided, where the method includes: An access network device determines first information, where the first information is used to indicate whether to activate a user plane data integrity protection function, or is used to indicate whether the access network device supports a user plane data integrity protection function. The access network device sends a first message to a terminal device, where the first message carries the first information.

The method may be performed by a third communications apparatus. The third communications apparatus may be an access network device or a communications apparatus that can support an access network device in implementing a function required by the method. Certainly, the third communications apparatus may alternatively be another communications apparatus, for example, a chip system. Herein, an example in which the third communications apparatus is the access network device is used.

In this embodiment of this application, the access network device may determine whether to activate the user plane data integrity protection function, or determine whether the access network device supports the user plane data integrity protection function, and the access network device may notify the terminal device of a determining result. In this case, the terminal device may determine, based on the first information sent by the access network device, whether the terminal device needs to activate the user plane data integrity protection function. For example, the terminal device is a device that is not upgraded, and the terminal device that is not upgraded cannot support the user plane data integrity protection function. In this case, the terminal device may not activate the user plane data integrity protection function. Alternatively, the terminal device is a device that is upgraded, and the terminal device that is upgraded can support the user plane data integrity protection function. In this case, the terminal device may activate the user plane data integrity protection function. It can be learned that after one or more network elements in a 4G network are upgraded, the method provided in this embodiment of this application can be performed to implement collaborative processing on user plane data integrity protection between devices. For example, the method may enable all the devices to activate the user plane data integrity protection function or enable no device to activate the user plane data integrity protection function, so that the devices keep consistent in processing manners, thereby reducing an error probability.

With reference to the third aspect, in a possible implementation of the third aspect, the first information is used to indicate whether to activate the user plane data integrity protection function, or is used to indicate whether the access network device supports the user plane data integrity protection function; or the first information includes first integrity protection policy information, and the first integrity protection policy information is used to indicate whether to activate the user plane data integrity protection function.

In the first implementation of the first information, the first information may be directly used to indicate whether to activate the user plane data integrity protection function, or is used to indicate whether the access network device supports the user plane data integrity protection function. In this case, it may also be considered that the first information is specifically indication information, for example, referred to as first indication information, or referred to as an integrity protection indication. A specific name is not limited. This implementation of the first information is relatively simple. Alternatively, in the second implementation of the first information, the first information may include the first integrity protection policy information, and the first integrity protection policy information may be used to indicate whether to activate the user plane data integrity protection function. The first integrity protection policy information may also be referred to as a first user plane security policy or the like, and a name is not limited. When the first information includes the first integrity protection policy information, more complete content may be indicated, and this is more helpful for negotiation between devices.

With reference to the third aspect, in a possible implementation of the third aspect, the first integrity protection policy information is used to indicate that the user plane data integrity protection function needs to be activated; the first integrity protection policy information is used to indicate that the user plane data integrity protection function tends to be activated; or the first integrity protection policy information is used to indicate that the user plane data integrity protection function does not need to be activated.

It can be learned that, if the first information includes the first integrity protection policy information, indicated content is relatively loose. For example, in addition to indicating that the user plane data integrity protection function needs to be activated, the first information may further indicate that the user plane data integrity protection function tends to be activated. For a device (for example, the terminal device) receiving the first information, there may be more freedom in an aspect of determining whether to activate the user plane data integrity protection function. This can better reflect value of "negotiation" between devices.

With reference to the third aspect, in a possible implementation of the third aspect, the first information further includes first encryption and decryption policy information, and the first encryption and decryption policy information is used to indicate whether to activate user plane data encryption and decryption functions.

The first encryption and decryption policy information is included, so that content included in the first information can be more complete.

With reference to the third aspect, in a possible implementation of the third aspect, the method further includes: The access network device receives a second message from the terminal device, where the second message is used to indicate a processing result of the terminal device for the user plane data integrity protection function.

Regardless of whether the terminal device has activated the user plane data integrity protection function or has not activated the user plane data integrity protection function, the terminal device may notify the access network device of the processing result of the terminal device for the user plane data integrity protection function, so that the access network device can determine the processing result of the terminal device, thereby performing corresponding processing.

With reference to the third aspect, in a possible implementation of the third aspect, the method further includes: If the processing result is used to indicate that the terminal device cannot activate the user plane data integrity protection function, the access network device deactivates the user plane data integrity protection function.

If the processing result of the terminal device indicates that the terminal device cannot activate the user plane data integrity protection function, and the access network device has activated the user plane data integrity protection function, the access network device may directly deactivate the user plane data integrity protection function, to keep consistent with the terminal device. Alternatively, even if the processing result of the terminal device indicates that the terminal device cannot activate the user plane data integrity protection function, the access network device may further determine, based on related information of the access network device, whether the user plane data integrity protection function can be activated. The related information of the access network device includes, for example, whether the access network device can meet a requirement on a maximum data transmission rate that can be allowed or accepted after the user plane data integrity protection function is activated, and/or load of the access network device. For example, if the access network device comprehensively determines that the user plane data integrity protection function cannot be activated, and the access network device has activated the user plane data integrity protection function, the access network device can deactivate the user plane data integrity protection function. Alternatively, if the access network device still determines that the user plane data integrity protection function can be activated, the access network device may further negotiate with the terminal device.

With reference to the third aspect, in a possible implementation of the third aspect, the method further includes: If the processing result is used to indicate that the terminal device has activated the user plane data integrity protection function, the access network device activates the user plane data integrity protection function.

If the processing result of the terminal device indicates that the terminal device has activated the user plane data integrity protection function, and the access network device has not activated the user plane data integrity protection function, the access network device may directly activate the user plane data integrity protection function, to keep consistent with the terminal device. Alternatively, even if the processing result of the terminal device indicates that the terminal device has activated the user plane data integrity protection function, and the access network device has not activated the user plane data integrity protection function, the access network device may further determine, based on related information of the access network device, whether the user plane data integrity protection function can be activated. The related information of the access network device includes, for example, whether the access network device can meet a requirement on a maximum data transmission rate that can be allowed or accepted after the user plane data integrity protection function is activated, and/or load of the access network device. For example, if the access network device comprehensively determines that the user plane data integrity protection function can be activated, and the access network device has not activated the user plane data integrity protection function, the access network device can activate the user plane data integrity protection function. Alternatively, if the access network device comprehensively determines that the user plane data integrity protection function cannot be activated, the access network device may further negotiate with the terminal device.

With reference to the third aspect, in a possible implementation of the third aspect, the method further includes: The access network device receives a third message from a first core network device, where the third message is used to indicate whether to activate the user plane data integrity protection function, is used to indicate whether the first core network device supports the user plane data integrity protection function, or is used to indicate whether subscription data has been configured to support the user plane data integrity protection function.

If the first core network device is an upgraded core network device, that is, the first core network device may support the user plane data integrity protection function, the first core network device may further participate in determining whether to activate the user plane data integrity protection function.

For example, the first core network device may view whether the first core network device has been configured with information used to indicate whether the user plane data integrity protection function is supported, or has been configured with information used to indicate whether to activate the user plane data integrity protection function. If the first core network device has been configured with the information, the first core network device may directly determine the third message. Alternatively, if the first core network device has not been configured with the information used to indicate whether the user plane data integrity protection function is supported, and has not been configured with the information used to indicate whether to activate the user plane data integrity protection function, the first core network device may obtain, from a subscription database, for example, an HSS, information that is associated with subscription data of the terminal device and that is used to indicate whether the user plane data integrity protection function is supported (that is, determine whether the subscription data has been configured to support the user plane data integrity protection function), or obtain information used to indicate whether to activate the user plane data integrity protection function, and determine the third message based on the obtained information. Alternatively, even if the first core network device has been configured with the information used to indicate whether the user plane data integrity protection function is supported, and/or has been configured with the information used to indicate whether to activate the user plane data integrity protection function, the first core network device may obtain, from a subscription database, for example, an HSS, information that is associated with subscription data of the terminal device and that is used to indicate whether the user plane data integrity protection function is supported, or obtain information used to indicate whether to activate the user plane data integrity protection function, and determine the third message based on the information configured on a side of the first core network device and the obtained information. In addition, the first core network device may send the third message to the access network device, to negotiate with a device, for example, the access network device, so that the first core network device can also participate in a negotiation process.

According to a fourth aspect, a fourth type of communication method is provided, where the method includes: An access network device receives a third message from a first core network device, where the third message includes second information, and the second information is used to indicate whether to activate a user plane data integrity protection function, or is used to indicate whether the first core network device supports a user plane data integrity protection function. If the access network device cannot identify the second information, the access network device discards or stores the second information.

The method may be performed by a fourth communications apparatus. The fourth communications apparatus may be an access network device or a communications apparatus that can support an access network device in implementing a function required by the method. Certainly, the fourth communications apparatus may alternatively be another communications apparatus, for example, a chip system. Herein, an example in which the fourth communications apparatus is the access network device is used.

The first core network device may send the third message to the access network device, to negotiate with a device, for example, the access network device, so that the first core network device can also participate in a negotiation process. If the access network device is a legacy access network device, the access network device does not support the user plane data integrity protection function, and the access network device possibly cannot identify the second information. In this case, the access network device may directly discard the second information, or the access network device may store the second information. In this way, after the access network device is upgraded, the access network device may further process the second information.

With reference to the fourth aspect, in a possible implementation of the fourth aspect, the method further includes: The access network device sends an exception report to the first core network device, where the exception report is used to indicate that the access network device cannot identify the second information.

If the access network device cannot identify the second information, the access network device may send the exception report to the first core network device, so that the first core network device determines that the access network device cannot activate the user plane data integrity protection function. Alternatively, if the access network device cannot identify the second information, the access network device may not send the exception report to the first core network device, and the first core network device may also determine, in some subsequent procedures, that an exception occurs in the access network device, thereby reducing signaling overheads between the access network device and the first core network device.

According to a fifth aspect, a fifth type of communication method is provided, where the method includes: An access network device receives third information, where the third information is used to indicate whether to activate a user plane data integrity protection function, or is used to indicate whether a terminal device supports a user plane data integrity protection function. The access network device determines, based on the third information, whether to activate the user plane data integrity protection function.

The method may be performed by a fifth communications apparatus. The fifth communications apparatus may be an access network device or a communications apparatus that can support an access network device in implementing a function required by the method. Certainly, the fifth communications apparatus may alternatively be another communications apparatus, for example, a chip system. Herein, an example in which the fifth communications apparatus is the access network device is used.

For example, the terminal device may send the third information to only the access network device, or may transparently transmit the third information to a first core network device through the access network device. If the terminal device sends the third information to only the access network device, the access network device may directly receive the third information from the terminal device. Alternatively, if the terminal device transparently transmits the third information to the first core network device through the access network device, the access network device cannot obtain the third information. However, after receiving the third information, if the first core network device sends the third information to the access network device, the access network device may receive the third information from the first core network device. The third information may be used to indicate capability information of the terminal device for user plane data integrity protection. The access network device may determine, based on the third information, whether to activate the user plane data integrity protection function. Alternatively, the access network device may determine, based on the third information and related information of the access network device, whether to activate the user plane data integrity protection function. The related information of the access network device includes, for example, whether the access network device can meet a requirement on a maximum data transmission rate that can be allowed or accepted after the user plane data integrity protection function is activated, and/or load of the access network device.

With reference to the fifth aspect, in a possible implementation of the fifth aspect, the method further includes: The access network device determines that the third information indicates to activate the user plane data integrity protection function, or indicates that the terminal device supports the user plane data integrity protection function, and the access network device supports activating the user plane data integrity protection function. The access network device activates the user plane data integrity protection function, and sends, to the terminal device, information about an algorithm applicable to the user plane integrity protection function.

If the third information indicates to activate the user plane data integrity protection function, or indicates that the terminal device supports the user plane data integrity protection function, and the access network device supports activating the user plane data integrity protection function, the access network device may directly activate the user plane data integrity protection function, to keep consistent with the terminal device. Alternatively, even if the third information indicates to activate the user plane data integrity protection function, or indicates that the terminal device supports the user plane data integrity protection function, and the access network device supports activating the user plane data integrity protection function, the access network device may further determine, based on the related information of the access network device, whether to activate the user plane data integrity protection function. For example, if the access network device determines, based on the related information of the access network device, that the user plane data integrity protection function can be activated, the access network device may activate the user plane data integrity protection function, and may send, to the terminal device, the information about the algorithm applicable to the user plane integrity protection function. Alternatively, if the access network device determines, based on the related information of the access network device, that the user plane data integrity protection function cannot be activated, the access network device may further negotiate with the terminal device, to find a processing manner that better meets a condition of each device.

With reference to the fifth aspect, in a possible implementation of the fifth aspect, the method further includes: The access network device determines that the user plane data integrity protection function is not supported, or determines that activating the user plane data integrity protection function is not suggested. The access network device sends a sixth message to the terminal device, where the sixth message is used to indicate that the access network device does not support the user plane data integrity protection function, or indicate not to activate the user plane data integrity protection function.

For example, if the access network device does not support the user plane data integrity protection function, or the access network device determines, based on the related information of the access network device, that activating the user plane data integrity protection function is not suggested, the access network device may send the sixth message to the terminal device, to further negotiate with the terminal device.

With reference to the fifth aspect, in a possible implementation of the fifth aspect, that the access network device determines, based on the third information, whether to activate the user plane data integrity protection function includes: After receiving the third information, the access network device sends a query request message to a second core network device, where the query request message is used to query whether the second core network device supports activating the user plane data integrity protection function. The access network device receives a query response message from the second core network device, where the query response message is used to indicate whether the user plane data integrity protection function is supported, or indicate whether to activate the user plane data integrity protection function. The access network device determines, based on the query response message, whether to activate the user plane data integrity protection function.

When determining whether to activate the user plane data integrity protection function, in addition to considering the third information, the access network device may further obtain corresponding information from the second core network device (for example, an HSS or another subscription database) for comprehensive determining. Certainly, in addition to considering the information in the two aspects, the access network device may further consider the related information of the access network device, so that a determining result is more reasonable.

According to a sixth aspect, a sixth type of communication method is provided, where the method includes: A first core network device determines second information, where the second information is used to indicate whether to activate a user plane data integrity protection function, or is used to indicate whether the first core network device supports a user plane data integrity protection function. The first core network device sends a third message to an access network device, where the third message carries the second information.

The method may be performed by a sixth communications apparatus. The sixth communications apparatus may be a core network device or a communications apparatus that can support a core network device in implementing a function required by the method. Certainly, the sixth communications apparatus may be another communications apparatus, for example, a chip system. Herein, an example in which the fifth communications apparatus is the first core network device is used.

If the first core network device is an upgraded core network device, that is, the first core network device may support the user plane data integrity protection function, the first core network device may further participate in determining whether to activate the user plane data integrity protection function.

For example, the first core network device may view whether the first core network device has been configured with information used to indicate whether the user plane data integrity protection function is supported, or has been configured with information used to indicate whether to activate the user plane data integrity protection function. If the first core network device has been configured with the information, the first core network device may directly determine the third message. Alternatively, if the first core network device has not been configured with the information used to indicate whether the user plane data integrity protection function is supported, and has not been configured with the information used to indicate whether to activate the user plane data integrity protection function, the first core network device may obtain, from a subscription database, for example, an HSS, information that is associated with subscription data of the terminal device and that is used to indicate whether the user plane data integrity protection function is supported (that is, determine whether the subscription data has been configured to support the user plane data integrity protection function), or obtain information used to indicate whether to activate the user plane data integrity protection function, and determine the third message based on the obtained information. Alternatively, even if the first core network device has been configured with the information used to indicate whether the user plane data integrity protection function is supported, and/or has been configured with the information used to indicate whether to activate the user plane data integrity protection function, the first core network device may obtain, from a subscription database, for example, an HSS, information that is associated with subscription data of the terminal device and that is used to indicate whether the user plane data integrity protection function is supported, or obtain information used to indicate whether to activate the user plane data integrity protection function, and determine the third message based on the information configured on a side of the first core network device and the obtained information. In addition, the first core network device may send the third message to the access network device, to negotiate with a device, for example, the access network device, so that the first core network device can also participate in a negotiation process.

With reference to the sixth aspect, in a possible implementation of the sixth aspect, the second information is used to indicate whether to activate the user plane data integrity protection function, or is used to indicate whether the first core network device supports the user plane data integrity protection function; or the second information includes second integrity protection policy information, and the second integrity protection policy information is used to indicate whether to activate the user plane data integrity protection function.

In the first implementation of the second information, the second information may be directly used to indicate whether to activate the user plane data integrity protection function, or is used to indicate whether the first core network device supports the user plane data integrity protection function. In this case, it may also be considered that the second information is specifically indication information, for example, referred to as second indication information, or referred to as an integrity protection indication. A specific name is not limited. This implementation of the second information is relatively simple. Alternatively, in the second implementation of the second information, the second information may include the second integrity protection policy information, and the second integrity protection policy information may be used to indicate whether to activate the user plane data integrity protection function. The second integrity protection policy information may also be referred to as a second user plane security policy or the like, and a name is not limited. When the second information includes the second integrity protection policy information, more complete content may be indicated, and this is more helpful for negotiation between devices.

With reference to the sixth aspect, in a possible implementation of the sixth aspect, the second integrity protection policy information is used to indicate that the user plane data integrity protection function needs to be activated; the second integrity protection policy information is used to indicate that the user plane data integrity protection function tends to be activated; or the second integrity protection policy information is used to indicate that the user plane data integrity protection function does not need to be activated.

It can be learned that, if the second information includes the second integrity protection policy information, indicated content is relatively loose. For example, in addition to indicating that the user plane data integrity protection function needs to be activated, the second information may further indicate that the user plane data integrity protection function tends to be activated. For a device (for example, the access network device) receiving the second information, there may be more freedom in an aspect of determining whether to activate the user plane data integrity protection function. This can better reflect value of "negotiation" between devices.

With reference to the sixth aspect, in a possible implementation of the sixth aspect, the second information further includes second encryption and decryption policy information, and the second encryption and decryption policy information is used to indicate whether to activate user plane data encryption and decryption functions.

The second encryption and decryption policy information is included, so that content included in the second information can be more complete.

With reference to the sixth aspect, in a possible implementation of the sixth aspect, the method further includes: The first core network device receives a fourth message from the access network device, where the fourth message includes third information, and the third information is used to indicate whether to activate the user plane data integrity protection function, or is used to indicate whether the terminal device supports the user plane data integrity protection function.

For example, the terminal device may transparently transmit capability information of the terminal device for user plane data integrity protection to the first core network device through the access network device, where the capability information includes, for example, information indicating whether to activate the user plane data integrity protection function, or information indicating whether the terminal device supports the user plane data integrity protection function. Therefore, the first core network device can also obtain the capability information of the terminal device for the user plane data integrity protection. For example, the first core network device may not need to obtain the capability information of the terminal device for the user plane data integrity protection in manners such as querying subscription data. In addition, in this manner, initiative of the terminal device is further improved.

Alternatively, the terminal device may send the third information to the access network device, instead of transparently transmitting the third information to the first core network device through the access network device. In this case, the access network device may obtain the third information, so that the access network device can determine a capability of the terminal device for user plane data integrity protection. After obtaining the third information, the access network device may further send the third information to the first core network device, so that the first core network device can obtain the third information.

With reference to the sixth aspect, in a possible implementation of the sixth aspect, the third information is used to indicate whether to activate the user plane data integrity protection function, or is used to indicate whether the terminal device supports the user plane data integrity protection function; or the third information includes third integrity protection policy information, and the third integrity protection policy information is used to indicate whether to activate the user plane data integrity protection function.

With reference to the sixth aspect, in a possible implementation of the sixth aspect, the third integrity protection policy information is used to indicate that the user plane data integrity protection function needs to be activated; the third integrity protection policy information is used to indicate that the user plane data integrity protection function tends to be activated; or the third integrity protection policy information is used to indicate that the user plane data integrity protection function does not need to be activated.

With reference to the sixth aspect, in a possible implementation of the sixth aspect, the third information further includes third encryption and decryption policy information, and the third encryption and decryption policy information is used to indicate whether to activate user plane data encryption and decryption functions.

For technical effects achieved by the sixth aspect or some possible implementations of the sixth aspect, refer to the descriptions of the technical effects of corresponding possible implementations of the first aspect.

According to a seventh aspect, a first type of communications apparatus is provided. For example, the communications apparatus is the first communications apparatus described above. The communications apparatus is configured to perform the method according to any one of the first aspect or the possible implementations of the first aspect. Specifically, the communications apparatus may include modules configured to perform the method according to any one of the first aspect or the possible implementations of the first aspect, for example, include a processing module and a transceiver module that are coupled to each other. For example, the communications apparatus is a terminal device.

The transceiver module is configured to receive a first message from an access network device, where the first message includes first information, and the first information is used to indicate whether to activate a user plane data integrity protection function, or is used to indicate whether the access network device supports a user plane data integrity protection function.

The processing module is configured to: if the first information cannot be identified, discard or store the first information.

With reference to the seventh aspect, in a possible implementation of the seventh aspect, the transceiver module is further configured to send an exception report to the access network device, where the exception report is used to indicate that the terminal device cannot identify the first information.

With reference to the seventh aspect, in a possible implementation of the seventh aspect, the transceiver module is further configured to send a second message to the access network device, where the second message is used to indicate a processing result of the terminal device for the user plane data integrity protection function.

With reference to the seventh aspect, in a possible implementation of the seventh aspect, the processing result is used to indicate whether the terminal device has activated the user plane data integrity protection function; or the processing result includes a failure indication, and a cause value of the failure indication is used to indicate whether the terminal device has activated the user plane data integrity protection function, or a cause value of the failure indication is used to indicate that the terminal device cannot identify the first information.

With reference to the seventh aspect, in a possible implementation of the seventh aspect, the transceiver module is further configured to send third information to the access network device, to send the third information to a first core network device through the access network device, where the third information is used to indicate whether to activate the user plane data integrity protection function, or is used to indicate whether the terminal device supports the user plane data integrity protection function.

With reference to the seventh aspect, in a possible implementation of the seventh aspect, the third information is used to indicate whether to activate the user plane data integrity protection function, or is used to indicate whether the terminal device supports the user plane data integrity protection function; or the third information includes third integrity protection policy information, and the third integrity protection policy information is used to indicate whether to activate the user plane data integrity protection function.

With reference to the seventh aspect, in a possible implementation of the seventh aspect, the third integrity protection policy information is used to indicate that the user plane data integrity protection function needs to be activated; the third integrity protection policy information is used to indicate that the user plane data integrity protection function tends to be activated; or the third integrity protection policy information is used to indicate that the user plane data integrity protection function does not need to be activated.

With reference to the seventh aspect, in a possible implementation of the seventh aspect, the third information further includes third encryption and decryption policy information, and the third encryption and decryption policy information is used to indicate whether to activate user plane data encryption and decryption functions.

For technical effects achieved by the seventh aspect or the possible implementations of the seventh aspect, refer to the descriptions of the technical effects of the first aspect or the possible implementations of the first aspect.

According to an eighth aspect, a second type of communications apparatus is provided. For example, the communications apparatus is the second communications apparatus described above. The communications apparatus is configured to perform the method according to any one of the second aspect or the possible implementations of the second aspect. Specifically, the communications apparatus may include modules configured to perform the method according to any one of the second aspect or the possible implementations of the second aspect, for example, include a processing module and a transceiver module that are coupled to each other. For example, the communications apparatus is a terminal device.

The transceiver module is configured to receive a first message from an access network device, where the first message includes first information, and the first information is used to indicate whether to activate a user plane data integrity protection function, or is used to indicate whether the access network device supports a user plane data integrity protection function.

The processing module is configured to determine, based on the first information, whether the terminal device is to activate the user plane data integrity protection function.

With reference to the eighth aspect, in a possible implementation of the eighth aspect, the transceiver module is further configured to: after the processing module determines, based on the first information, whether the terminal device is to activate the user plane data integrity protection function, send a fifth message to the access network device, where the fifth message includes fourth information, and the fourth information is used to indicate whether to activate the user plane data integrity protection function.

With reference to the eighth aspect, in a possible implementation of the eighth aspect, the first information is used to indicate to activate the user plane data integrity protection function, or is used to indicate that the access network device supports the user plane data integrity protection function.

The fourth information is used to indicate that the user plane data integrity protection function needs to be activated.

Alternatively, the fourth information is used to indicate that the user plane data integrity protection function tends to be activated.

Alternatively, the fourth information is used to indicate that the user plane data integrity protection function does not need to be activated.

With reference to the eighth aspect, in a possible implementation of the eighth aspect, the first information is used to indicate not to activate the user plane data integrity protection function, or is used to indicate that the access network device does not support the user plane data integrity protection function; and the processing module is further configured to discard or store the first information.

With reference to the eighth aspect, in a possible implementation of the eighth aspect, the transceiver module is further configured to: before receiving the first message from the access network device, send third information to the access network device, to send the third information to a first core network device through the access network device, where the third information is used to indicate whether to activate the user plane data integrity protection function, or is used to indicate whether the terminal device supports the user plane data integrity protection function.

With reference to the eighth aspect, in a possible implementation of the eighth aspect, the third information is used to indicate whether to activate the user plane data integrity protection function, or is used to indicate whether the terminal device supports the user plane data integrity protection function; or the third information includes third integrity protection policy information, and the third integrity protection policy information is used to indicate whether the first core network device is to activate the user plane data integrity protection function.

With reference to the eighth aspect, in a possible implementation of the eighth aspect, the third integrity protection policy information is used to indicate that the user plane data integrity protection function needs to be activated; the third integrity protection policy information is used to indicate that the user plane data integrity protection function tends to be activated; or the third integrity protection policy information is used to indicate that the user plane data integrity protection function does not need to be activated.

With reference to the eighth aspect, in a possible implementation of the eighth aspect, the third information further includes third encryption and decryption policy information, and the third encryption and decryption policy information is used to indicate whether to activate user plane data encryption and decryption functions.

For technical effects achieved by the eighth aspect or the possible implementations of the eighth aspect, refer to the descriptions of the technical effects of the second aspect or the possible implementations of the second aspect.

According to a ninth aspect, a third type of communications apparatus is provided. For example, the communications apparatus is the third communications apparatus described above. The communications apparatus is configured to perform the method according to any one of the third aspect or the possible implementations of the third aspect. Specifically, the communications apparatus may include modules configured to perform the method according to any one of the third aspect or the possible implementations of the third aspect, for example, include a processing module and a transceiver module that are coupled to each other. For example, the communications apparatus is an access network device.

The processing module is configured to determine first information, where the first information is used to indicate whether to activate a user plane data integrity protection function, or is used to indicate whether the access network device supports a user plane data integrity protection function.

The transceiver module is configured to send a first message to a terminal device, where the first message carries the first information.

With reference to the ninth aspect, in a possible implementation of the ninth aspect, the first information is used to indicate whether to activate the user plane data integrity protection function, or is used to indicate whether the access network device supports the user plane data integrity protection function; or the first information includes first integrity protection policy information, and the first integrity protection policy information is used to indicate whether to activate the user plane data integrity protection function.

With reference to the ninth aspect, in a possible implementation of the ninth aspect, the first integrity protection policy information is used to indicate that the user plane data integrity protection function needs to be activated; the first integrity protection policy information is used to indicate that the user plane data integrity protection function tends to be activated; or the first integrity protection policy information is used to indicate that the user plane data integrity protection function does not need to be activated.

With reference to the ninth aspect, in a possible implementation of the ninth aspect, the first information further includes first encryption and decryption policy information, and the first encryption and decryption policy information is used to indicate whether to activate user plane data encryption and decryption functions.

With reference to the ninth aspect, in a possible implementation of the ninth aspect, the transceiver module is further configured to receive a second message from the terminal device, where the second message is used to indicate a processing result of the terminal device for the user plane data integrity protection function.

With reference to the ninth aspect, in a possible implementation of the ninth aspect, the processing module is further configured to: if the processing result is used to indicate that the terminal device cannot activate the user plane data integrity protection function, deactivate the user plane data integrity protection function.

With reference to the ninth aspect, in a possible implementation of the ninth aspect, the processing module is further configured to: if the processing result is used to indicate that the terminal device has activated the user plane data integrity protection function, activate the user plane data integrity protection function.

With reference to the ninth aspect, in a possible implementation of the ninth aspect, the transceiver module is further configured to receive a third message from a first core network device, where the third message is used to indicate whether to activate the user plane data integrity protection function, is used to indicate whether the first core network device supports the user plane data integrity protection function, or is used to indicate whether subscription data has been configured to support the user plane data integrity protection function.

For technical effects achieved by the ninth aspect or the possible implementations of the ninth aspect, refer to the descriptions of the technical effects of the third aspect or the possible implementations of the third aspect.

According to a tenth aspect, a fourth type of communications apparatus is provided. For example, the communications apparatus is the fourth communications apparatus described above. The communications apparatus is configured to perform the method according to any one of the fourth aspect or the possible implementations of the fourth aspect. Specifically, the communications apparatus may include modules configured to perform the method according to any one of the fourth aspect or the possible implementations of the fourth aspect, for example, include a processing module and a transceiver module that are coupled to each other. For example, the communications apparatus is an access network device.

The transceiver module is configured to receive a third message from a first core network device, where the third message includes second information, and the second information is used to indicate whether to activate a user plane data integrity protection function, or is used to indicate whether the first core network device supports a user plane data integrity protection function.

The processing module is configured to: if the second information cannot be identified, discard or store the second information.

With reference to the tenth aspect, in a possible implementation of the tenth aspect, the transceiver module is further configured to send an exception report to the first core network device, where the exception report is used to indicate that the access network device cannot identify the second information.

For technical effects achieved by the tenth aspect or the possible implementations of the tenth aspect, refer to the descriptions of the technical effects of the fourth aspect or the possible implementations of the fourth aspect.

According to an eleventh aspect, a fifth type of communications apparatus is provided. For example, the communications apparatus is the fifth communications apparatus described above. The communications apparatus is configured to perform the method according to any one of the fifth aspect or the possible implementations of the fifth aspect. Specifically, the communications apparatus may include modules configured to perform the method according to any one of the fifth aspect or the possible implementations of the fifth aspect, for example, include a processing module and a transceiver module that are coupled to each other. For example, the communications apparatus is an access network device.

The transceiver module is configured to receive third information, where the third information is used to indicate whether to activate a user plane data integrity protection function, or is used to indicate whether a terminal device supports a user plane data integrity protection function.

The processing module is configured to determine, based on the third information, whether to activate the user plane data integrity protection function.

With reference to the eleventh aspect, in a possible implementation of the eleventh aspect,
the processing module is further configured to determine that the third information indicates to activate the user plane data integrity protection function, or indicates that the terminal device supports the user plane data integrity protection function, and that the access network device supports activating the user plane data integrity protection function;
the processing module is further configured to activate the user plane data integrity protection function; and
the transceiver module is further configured to send, to the terminal device, information about an algorithm applicable to the user plane integrity protection function.

With reference to the eleventh aspect, in a possible implementation of the eleventh aspect,
the processing module is further configured to determine that the user plane data integrity protection function is not supported, or determine that activating the user plane data integrity protection function is not suggested; and
the transceiver module is further configured to send a sixth message to the terminal device, where the sixth message is used to indicate that the access network device does not support the user plane data integrity protection function, or indicate not to activate the user plane data integrity protection function.

With reference to the eleventh aspect, in a possible implementation of the eleventh aspect, the processing module is configured to determine, based on the third information and in the following manner, whether to activate the user plane data integrity protection function:
after the transceiver module receives the third information, sending a query request message to a second core network device through the transceiver module, where the query request message is used to query whether the second core network device supports activating the user plane data integrity protection function;
receiving a query response message from the second core network device through the transceiver module, where the query response message is used to indicate whether the user plane data integrity protection function is supported, or indicate whether to activate the user plane data integrity protection function; and
determining, based on the query response message, whether to activate the user plane data integrity protection function.

For technical effects achieved by the eleventh aspect or the possible implementations of the eleventh aspect, refer to the descriptions of the technical effects of the fifth aspect or the possible implementations of the fifth aspect.

According to a twelfth aspect, a sixth type of communications apparatus is provided. For example, the communications apparatus is the sixth communications apparatus described above. The communications apparatus is configured to perform the method according to any one of the sixth aspect or the possible implementations of the sixth aspect. Specifically, the communications apparatus may include modules configured to perform the method according to any one of the sixth aspect or the possible implementations of the sixth aspect, for example, include a processing module and a transceiver module that are coupled to each other. For example, the communications apparatus is a first core network device.

The processing module is configured to determine second information, where the second information is used to indicate whether to activate a user plane data integrity protection function, or is used to indicate whether the first core network device supports a user plane data integrity protection function.

The transceiver module is configured to send a third message to an access network device, where the third message carries the second information.

With reference to the twelfth aspect, in a possible implementation of the twelfth aspect, the second information is used to indicate whether to activate the user plane data integrity protection function, or is used to indicate whether the first core network device supports the user plane data integrity protection function; or the second information includes second integrity protection policy information, and the second integrity protection policy information is used to indicate whether to activate the user plane data integrity protection function.

With reference to the twelfth aspect, in a possible implementation of the twelfth aspect, the second integrity protection policy information is used to indicate that the user plane data integrity protection function should be activated; the second integrity protection policy information is used to indicate that activating the user plane data integrity protection function is suggested; or the second integrity protection policy information is used to indicate not to activate the user plane data integrity protection function.

With reference to the twelfth aspect, in a possible implementation of the twelfth aspect, the second information further includes second encryption and decryption policy information, and the second encryption and decryption policy information is used to indicate whether to activate user plane data encryption and decryption functions.

With reference to the twelfth aspect, in a possible implementation of the twelfth aspect, the transceiver module is further configured to receive a fourth message from the access network device, where the fourth message includes third information, and the third information is used to indicate whether to activate the user plane data integrity protection function, or is used to indicate whether a terminal device supports the user plane data integrity protection function.

With reference to the twelfth aspect, in a possible implementation of the twelfth aspect, the third information is used to indicate whether to activate the user plane data integrity protection function, or is used to indicate whether the terminal device supports the user plane data integrity protection function; or the third information includes third integrity protection policy information, and the third integrity protection policy information is used to indicate whether to activate the user plane data integrity protection function.

With reference to the twelfth aspect, in a possible implementation of the twelfth aspect, the third integrity protection policy information is used to indicate that the user plane data integrity protection function needs to be activated; the third integrity protection policy information is used to indicate that the user plane data integrity protection function tends to be activated; or the third integrity protection policy information is used to indicate that the user plane data integrity protection function does not need to be activated.

With reference to the twelfth aspect, in a possible implementation of the twelfth aspect, the third information further includes third encryption and decryption policy information, and the third encryption and decryption policy information is used to indicate whether to activate user plane data encryption and decryption functions.

For technical effects achieved by the twelfth aspect or the possible implementations of the twelfth aspect, refer to the descriptions of the technical effects of the sixth aspect or the possible implementations of the sixth aspect.

According to a thirteenth aspect, a seventh type of communications apparatus is provided. For example, the communications apparatus is the first communications apparatus described above. The communications apparatus includes a processor and a transceiver, and is configured to implement the method according to any one of the first aspect or the possible designs of the first aspect. For example, the communications apparatus is a chip disposed in a communications device. For example, the transceiver is implemented by using an antenna, a feeder, and a codec in the communications device. Alternatively, if the communications apparatus is the chip disposed in the communications device, the transceiver is, for example, a communications interface in the chip. The communications interface is connected to a radio frequency transceiver component in the communications device, to receive and send information through the radio frequency transceiver component. For example, the communications device is a terminal device.

The transceiver is configured to receive a first message from an access network device, where the first message includes first information, and the first information is used to indicate whether to activate a user plane data integrity protection function, or is used to indicate whether the access network device supports a user plane data integrity protection function.

The processor is configured to: if the first information cannot be identified, discard or store the first information.

With reference to the thirteenth aspect, in a possible implementation of the thirteenth aspect, the transceiver is further configured to send an exception report to the access network device, where the exception report is used to indicate that the terminal device cannot identify the first information.

With reference to the thirteenth aspect, in a possible implementation of the thirteenth aspect, the transceiver is further configured to send a second message to the access network device, where the second message is used to indicate a processing result of the terminal device for the user plane data integrity protection function.

With reference to the thirteenth aspect, in a possible implementation of the thirteenth aspect, the processing result is used to indicate whether the terminal device has activated the user plane data integrity protection function; or the processing result includes a failure indication, and a cause value of the failure indication is used to indicate whether the terminal device has activated the user plane data integrity protection function, or a cause value of the failure indication is used to indicate that the terminal device cannot identify the first information.

With reference to the thirteenth aspect, in a possible implementation of the thirteenth aspect, the transceiver is further configured to send third information to the access network device, to send the third information to a first core network device through the access network device, where the third information is used to indicate whether to activate the user plane data integrity protection function, or is used to indicate whether the terminal device supports the user plane data integrity protection function.

With reference to the thirteenth aspect, in a possible implementation of the thirteenth aspect, the third information is used to indicate whether to activate the user plane data integrity protection function, or is used to indicate whether the terminal device supports the user plane data integrity protection function; or the third information includes third integrity protection policy information, and the third integrity protection policy information is used to indicate whether to activate the user plane data integrity protection function.

With reference to the thirteenth aspect, in a possible implementation of the thirteenth aspect, the third integrity protection policy information is used to indicate that the user plane data integrity protection function needs to be activated; the third integrity protection policy information is used to indicate that the user plane data integrity protection function tends to be activated; or the third integrity protection policy information is used to indicate that the user plane data integrity protection function does not need to be activated.

With reference to the thirteenth aspect, in a possible implementation of the thirteenth aspect, the third information further includes third encryption and decryption policy information, and the third encryption and decryption policy information is used to indicate whether to activate user plane data encryption and decryption functions.

For technical effects achieved by the thirteenth aspect or the possible implementations of the thirteenth aspect, refer to the descriptions of the technical effects of the first aspect or the possible implementations of the first aspect.

According to a fourteenth aspect, an eighth type of communications apparatus is provided. For example, the communications apparatus is the second communications apparatus described above. The communications apparatus includes a processor and a transceiver, and is configured to implement the method according to any one of the second aspect or the possible designs of the second aspect. For example, the communications apparatus is a chip disposed in a communications device. For example, the transceiver is implemented by using an antenna, a feeder, and a codec in the communications device. Alternatively, if the communications apparatus is the chip disposed in the communications device, the transceiver is, for example, a communications interface in the chip. The communications interface is connected to a radio frequency transceiver component in the communications device, to receive and send information through the radio frequency transceiver component. For example, the communications device is a terminal device.

The transceiver is configured to receive a first message from an access network device, where the first message includes first information, and the first information is used to indicate whether to activate a user plane data integrity protection function, or is used to indicate whether the access network device supports a user plane data integrity protection function.

The processor is configured to determine, based on the first information, whether the terminal device is to activate the user plane data integrity protection function.

With reference to the fourteenth aspect, in a possible implementation of the fourteenth aspect, the transceiver is further configured to: after the processor determines, based on the first information, whether the terminal device is to activate the user plane data integrity protection function, send a fifth message to the access network device, where the fifth message includes fourth information, and the fourth information is used to indicate whether to activate the user plane data integrity protection function.

With reference to the fourteenth aspect, in a possible implementation of the fourteenth aspect, the first information is used to indicate to activate the user plane data integrity protection function, or is used to indicate that the access network device supports the user plane data integrity protection function.

The fourth information is used to indicate that the user plane data integrity protection function needs to be activated.

Alternatively, the fourth information is used to indicate that the user plane data integrity protection function tends to be activated.

Alternatively, the fourth information is used to indicate that the user plane data integrity protection function does not need to be activated.

With reference to the fourteenth aspect, in a possible implementation of the fourteenth aspect, the first information is used to indicate not to activate the user plane data integrity protection function, or is used to indicate that the access network device does not support the user plane data integrity protection function; and the processor is further configured to discard or store the first information.

With reference to the fourteenth aspect, in a possible implementation of the fourteenth aspect, the transceiver is further configured to: before receiving the first message from the access network device, send third information to the access network device, to send the third information to a first core network device through the access network device, where the third information is used to indicate whether to activate the user plane data integrity protection function, or is used to indicate whether the terminal device supports the user plane data integrity protection function.

With reference to the fourteenth aspect, in a possible implementation of the fourteenth aspect, the third information is used to indicate whether to activate the user plane data integrity protection function, or is used to indicate whether the terminal device supports the user plane data integrity protection function; or the third information includes third integrity protection policy information, and the third integrity protection policy information is used to indicate whether the first core network device is to activate the user plane data integrity protection function.

With reference to the fourteenth aspect, in a possible implementation of the fourteenth aspect, the third integrity protection policy information is used to indicate that the user plane data integrity protection function needs to be activated; the third integrity protection policy information is used to indicate that the user plane data integrity protection function tends to be activated; or the third integrity protection policy information is used to indicate that the user plane data integrity protection function does not need to be activated.

With reference to the fourteenth aspect, in a possible implementation of the fourteenth aspect, the third information further includes third encryption and decryption policy information, and the third encryption and decryption policy information is used to indicate whether to activate user plane data encryption and decryption functions.

For technical effects achieved by the fourteenth aspect or the possible implementations of the fourteenth aspect, refer to the descriptions of the technical effects of the second aspect or the possible implementations of the second aspect.

According to a fifteenth aspect, a ninth type of communications apparatus is provided. For example, the communications apparatus is the third communications apparatus described above. The communications apparatus includes a processor and a transceiver, and is configured to implement the method according to any one of the third aspect or the possible designs of the third aspect. For example, the communications apparatus is a chip disposed in a communications device. For example, the transceiver is implemented by using an antenna, a feeder, and a codec in the communications device. Alternatively, if the communications apparatus is the chip disposed in the communications device, the transceiver is, for example, a communications interface in the chip. The communications interface is connected to a radio frequency transceiver component in the communications device, to receive and send information through the radio frequency transceiver component. For example, the communications device is an access network device.

The processor is configured to determine first information, where the first information is used to indicate whether to activate a user plane data integrity protection function, or is used to indicate whether the access network device supports a user plane data integrity protection function.

The transceiver is configured to send a first message to a terminal device, where the first message carries the first information.

With reference to the fifteenth aspect, in a possible implementation of the fifteenth aspect, the first information is used to indicate whether to activate the user plane data integrity protection function, or is used to indicate whether the access network device supports the user plane data integrity protection function; or the first information includes first integrity protection policy information, and the first integrity protection policy information is used to indicate whether to activate the user plane data integrity protection function.

With reference to the fifteenth aspect, in a possible implementation of the fifteenth aspect, the first integrity protection policy information is used to indicate that the user plane data integrity protection function needs to be activated; the first integrity protection policy information is used to indicate that the user plane data integrity protection function tends to be activated; or the first integrity protection policy information is used to indicate that the user plane data integrity protection function does not need to be activated.

With reference to the fifteenth aspect, in a possible implementation of the fifteenth aspect, the first information further includes first encryption and decryption policy information, and the first encryption and decryption policy information is used to indicate whether to activate user plane data encryption and decryption functions.

With reference to the fifteenth aspect, in a possible implementation of the fifteenth aspect, the transceiver is further configured to receive a second message from the terminal device, where the second message is used to indicate a processing result of the terminal device for the user plane data integrity protection function.

With reference to the fifteenth aspect, in a possible implementation of the fifteenth aspect, the processor is further configured to: if the processing result is used to indicate that the terminal device cannot activate the user plane data integrity protection function, deactivate the user plane data integrity protection function.

With reference to the fifteenth aspect, in a possible implementation of the fifteenth aspect, the processor is further configured to: if the processing result is used to indicate that the terminal device has activated the user plane data integrity protection function, activate the user plane data integrity protection function.

With reference to the fifteenth aspect, in a possible implementation of the fifteenth aspect, the transceiver is further configured to receive a third message from a first core network device, where the third message is used to indicate whether to activate the user plane data integrity protection function, is used to indicate whether the first core network device supports the user plane data integrity protection function, or is used to indicate whether subscription data has been configured to support the user plane data integrity protection function.

For technical effects achieved by the fifteenth aspect or the possible implementations of the fifteenth aspect, refer to the descriptions of the technical effects of the third aspect or the possible implementations of the third aspect.

According to a sixteenth aspect, a tenth type of communications apparatus is provided. For example, the communications apparatus is the fourth communications apparatus described above. The communications apparatus includes a processor and a transceiver, and is configured to implement the method according to any one of the fourth aspect or the possible designs of the fourth aspect. For example, the communications apparatus is a chip disposed in a communications device. For example, the transceiver is implemented by using an antenna, a feeder, and a codec in the communications device. Alternatively, if the communications apparatus is the chip disposed in the communications device, the transceiver is, for example, a communications interface in the chip. The communications interface is connected to a radio frequency transceiver component in the communications device, to receive and send information through the radio frequency transceiver component. For example, the communications device is an access network device.

The transceiver is configured to receive a third message from a first core network device, where the third message includes second information, and the second information is used to indicate whether to activate a user plane data integrity protection function, or is used to indicate whether the first core network device supports a user plane data integrity protection function.

The processor is configured to: if the second information cannot be identified, discard or store the second information.

With reference to the sixteenth aspect, in a possible implementation of the sixteenth aspect, the transceiver is further configured to send an exception report to the first core network device, where the exception report is used to indicate that the access network device cannot identify the second information.

For technical effects achieved by the sixteenth aspect or the possible implementations of the sixteenth aspect, refer to the descriptions of the technical effects of the fourth aspect or the possible implementations of the fourth aspect.

According to a seventeenth aspect, an eleventh type of communications apparatus is provided. For example, the communications apparatus is the fifth communications apparatus described above. The communications apparatus includes a processor and a transceiver, and is configured to implement the method according to any one of the fifth aspect or the possible designs of the fifth aspect. For example, the communications apparatus is a chip disposed in a communications device. For example, the transceiver is implemented by using an antenna, a feeder, and a codec in the communications device. Alternatively, if the communications apparatus is the chip disposed in the communications device, the transceiver is, for example, a communications interface in the chip. The communications interface is connected to a radio frequency transceiver component in the communications device, to receive and send information through the radio frequency transceiver component. For example, the communications device is an access network device.

The transceiver is configured to receive third information, where the third information is used to indicate whether to activate a user plane data integrity protection function, or is used to indicate whether a terminal device supports a user plane data integrity protection function.

The processor is configured to determine, based on the third information, whether to activate the user plane data integrity protection function.

With reference to the seventeenth aspect, in a possible implementation of the seventeenth aspect,
the processor is further configured to determine that the third information indicates to activate the user plane data integrity protection function, or indicates that the terminal device supports the user plane data integrity protection function, and that the access network device supports activating the user plane data integrity protection function.

The processor is further configured to activate the user plane data integrity protection function.

The transceiver is further configured to send, to the terminal device, information about an algorithm applicable to the user plane integrity protection function.

With reference to the seventeenth aspect, in a possible implementation of the seventeenth aspect,
the processor is further configured to determine that the user plane data integrity protection function is not supported, or determine that activating the user plane data integrity protection function is not suggested.

The transceiver is further configured to send a sixth message to the terminal device, where the sixth message is used to indicate that the access network device does not support the user plane data integrity protection function, or indicate not to activate the user plane data integrity protection function.

With reference to the seventeenth aspect, in a possible implementation of the seventeenth aspect, the processor is configured to determine, based on the third information and in the following manner, whether to activate the user plane data integrity protection function:
after the transceiver receives the third information, sending a query request message to a second core network device through the transceiver, where the query request message is used to query whether the second core network device supports activating the user plane data integrity protection function;
receiving a query response message from the second core network device through the transceiver, where the query response message is used to indicate whether the user plane data integrity protection function is supported, or indicate whether to activate the user plane data integrity protection function; and
determining, based on the query response message, whether to activate the user plane data integrity protection function.

For technical effects achieved by the seventeenth aspect or the possible implementations of the seventeenth aspect, refer to the descriptions of the technical effects of the fifth aspect or the possible implementations of the fifth aspect.

According to an eighteenth aspect, a twelfth type of communications apparatus is provided. For example, the communications apparatus is the sixth communications apparatus described above. The communications apparatus includes a processor and a transceiver, and is configured to implement the method according to any one of the sixth aspect or the possible designs of the sixth aspect. For example, the communications apparatus is a chip disposed in a communications device. For example, the transceiver is implemented by using an antenna, a feeder, and a codec in the communications device. Alternatively, if the communications apparatus is the chip disposed in the communications device, the transceiver is, for example, a communications interface in the chip. The communications interface is connected to a radio frequency transceiver component in the communications device, to receive and send information through the radio frequency transceiver component. For example, the communications device is a first core network device.

The processor is configured to determine second information, where the second information is used to indicate whether to activate a user plane data integrity protection function, or is used to indicate whether the first core network device supports a user plane data integrity protection function.

The transceiver is configured to send a third message to an access network device, where the third message carries the second information.

With reference to the eighteenth aspect, in a possible implementation of the eighteenth aspect, the second information is used to indicate whether to activate the user plane data integrity protection function, or is used to indicate whether the first core network device supports the user plane data integrity protection function; or the second information includes second integrity protection policy information, and the second integrity protection policy information is used to indicate whether to activate the user plane data integrity protection function.

With reference to the eighteenth aspect, in a possible implementation of the eighteenth aspect, the second integrity protection policy information is used to indicate that the user plane data integrity protection function should be activated; the second integrity protection policy information is used to indicate that activating the user plane data integrity protection function is suggested; or the second integrity protection policy information is used to indicate not to activate the user plane data integrity protection function.

With reference to the eighteenth aspect, in a possible implementation of the eighteenth aspect, the second information further includes second encryption and decryption policy information, and the second encryption and decryption policy information is used to indicate whether to activate user plane data encryption and decryption functions.

With reference to the eighteenth aspect, in a possible implementation of the eighteenth aspect, the transceiver is further configured to receive a fourth message from the access network device, where the fourth message includes third information, and the third information is used to indicate whether to activate the user plane data integrity protection function, or is used to indicate whether a terminal device supports the user plane data integrity protection function.

With reference to the eighteenth aspect, in a possible implementation of the eighteenth aspect, the third information is used to indicate whether to activate the user plane data integrity protection function, or is used to indicate whether the terminal device supports the user plane data integrity protection function; or the third information includes third integrity protection policy information, and the third integrity protection policy information is used to indicate whether to activate the user plane data integrity protection function.

With reference to the eighteenth aspect, in a possible implementation of the eighteenth aspect, the third integrity protection policy information is used to indicate that the user plane data integrity protection function needs to be activated; the third integrity protection policy information is used to indicate that the user plane data integrity protection function tends to be activated; or the third integrity protection policy information is used to indicate that the user plane data integrity protection function does not need to be activated.

With reference to the eighteenth aspect, in a possible implementation of the eighteenth aspect, the third information further includes third encryption and decryption policy information, and the third encryption and decryption policy information is used to indicate whether to activate user plane data encryption and decryption functions.

For technical effects achieved by the eighteenth aspect or the possible implementations of the eighteenth aspect, refer to the descriptions of the technical effects of the sixth aspect or the possible implementations of the sixth aspect.

According to a nineteenth aspect, a thirteenth type of communications apparatus is provided. The communications apparatus may be the first communications apparatus in the foregoing method designs. For example, the communications apparatus is a chip disposed in a terminal device. The communications apparatus includes: a memory, configured to store computer-executable program code; and a processor, where the processor is coupled to the memory. The program code stored in the memory includes instructions. When the processor executes the instructions, the thirteenth type of communications apparatus is enabled to perform the method in any one of the first aspect or the possible implementations of the first aspect.

The thirteenth type of communications apparatus may further include a communications interface. The communications interface may be a transceiver in the terminal device, and is implemented by using, for example, an antenna, a feeder, and a codec in the communications apparatus. Alternatively, if the thirteenth type of communications apparatus is a chip disposed in the terminal device, the communications interface may be an input/output interface of the chip, for example, an input/output pin.

According to a twentieth aspect, a fourteenth type of communications apparatus is provided. The communications apparatus may be the second communications apparatus in the foregoing method designs. For example, the communications apparatus is a chip disposed in a terminal device. The communications apparatus includes: a memory, configured to store computer-executable program code; and a processor, where the processor is coupled to the memory. The program code stored in the memory includes instructions. When the processor executes the instructions, the fourteenth type of communications apparatus is enabled to perform the method according to any one of the second aspect or the possible implementations of the second aspect.

The fourteenth type of communications apparatus may further include a communications interface. The communications interface may be a transceiver in the terminal device, and is implemented by using, for example, an antenna, a feeder, and a codec in the communications apparatus. Alternatively, if the fourteenth type of communications apparatus is a chip disposed in the terminal device, the communications interface may be an input/output interface of the chip, for example, an input/output pin.

According to a twenty-first aspect, a fifteenth type of communications apparatus is provided. The communications apparatus may be the third communications apparatus in the foregoing method designs. For example, the communications apparatus is a chip disposed in an access network device. The communications apparatus includes: a memory, configured to store computer-executable program code; and a processor, where the processor is coupled to the memory. The program code stored in the memory includes instructions. When the processor executes the instructions, the fifteenth type of communications apparatus is enabled to perform the method according to any one of the third aspect or the possible implementations of the third aspect.

The fifteenth type of communications apparatus may further include a communications interface. The communications interface may be a transceiver in the access network device, and is implemented by using, for example, an antenna, a feeder, and a codec in the communications apparatus. Alternatively, if the fifteenth type of communications apparatus is a chip disposed in the access network device, the communications interface may be an input/output interface of the chip, for example, an input/output pin.

According to a twenty-second aspect, a sixteenth of communications apparatus is provided. The communications apparatus may be the fourth communications apparatus in the foregoing method designs. For example, the communications apparatus is a chip disposed in an access network device. The communications apparatus includes: a memory, configured to store computer-executable program code; and a processor, where the processor is coupled to the memory. The program code stored in the memory includes instructions. When the processor executes the instructions, the sixteenth type of communications apparatus is enabled to perform the method according to any one of the fourth aspect or the possible implementations of the fourth aspect.

The sixteenth type of communications apparatus may further include a communications interface. The communications interface may be a transceiver in the access network device, and is implemented by using, for example, an antenna, a feeder, and a codec in the communications apparatus. Alternatively, if the sixteenth type of communications apparatus is a chip disposed in the access network device, the communications interface may be an input/output interface of the chip, for example, an input/output pin.

According to a twenty-third aspect, a seventeenth type of communications apparatus is provided. The communications apparatus may be the fifth communications apparatus in the foregoing method designs. For example, the communications apparatus is a chip disposed in an access network device. The communications apparatus includes: a memory, configured to store computer-executable program code; and a processor, where the processor is coupled to the memory. The program code stored in the memory includes instructions. When the processor executes the instructions, the seventeenth type of communications apparatus is enabled to perform the method according to any one of the fifth aspect or the possible implementations of the fifth aspect.

The seventeenth type of communications apparatus may further include a communications interface. The communications interface may be a transceiver in the access network device, and is implemented by using, for example, an antenna, a feeder, and a codec in the communications apparatus. Alternatively, if the seventeenth type of communications apparatus is a chip disposed in the access network device, the communications interface may be an input/output interface of the chip, for example, an input/output pin.

According to a twenty-fourth aspect, an eighteenth type of communications apparatus is provided. The communications apparatus may be the sixth communications apparatus in the foregoing method designs. For example, the communications apparatus is a chip disposed in a first core network device. The communications apparatus includes: a memory, configured to store computer-executable program code; and a processor, where the processor is coupled to the memory. The program code stored in the memory includes instructions. When the processor executes the instructions, the eighteenth type of communications apparatus is enabled to perform the method according to any one of the sixth aspect or the possible implementations of the sixth aspect.

The eighteenth type of communications apparatus may further include a communications interface. The communications interface may be a transceiver in the first core network device, and is implemented by using, for example, an antenna, a feeder, and a codec in the communications apparatus. Alternatively, if the eighteenth type of communications apparatus is a chip disposed in the first core network device, the communications interface may be an input/output interface of the chip, for example, an input/output pin.

According to a twenty-fifth aspect, a first type of communications system is provided. The communications system may include any one of the first type of communications apparatus according to the seventh aspect, the second type of communications apparatus according to the eighth aspect, the seventh type of communications apparatus according to the thirteenth aspect, the eighth type of communications apparatus according to the fourteenth aspect, the thirteenth type of communications apparatus according to the nineteenth aspect, or the fourteenth type of communications apparatus according to the twentieth aspect, and include any one of the third type of communications apparatus according to the ninth aspect, the fourth type of communications apparatus according to the tenth aspect, the fifth type of communications apparatus according to the eleventh aspect, the ninth type of communications apparatus according to the fifteenth aspect, the tenth type of communications apparatus according to the sixteenth aspect, the eleventh type of communications apparatus according to the seventeenth aspect, the fifteenth type of communications apparatus according to the twenty-first aspect, the sixteenth type of communications apparatus according to the twenty-second aspect, or the seventeenth type of communications apparatus according to the twenty-third aspect.

Optionally, the communications system may further include any one of the sixth type of communications apparatus according to the twelfth aspect, the twelfth type of communications apparatus according to the eighteenth aspect, or the eighteenth type of communications apparatus according to the twenty-fourth aspect.

According to a twenty-sixth aspect, a computer storage medium is provided. The computer-readable storage medium stores instructions. When the instructions are run on a computer, the computer is enabled to perform the method according to any one of the first aspect or the possible designs of the first aspect.

According to a twenty-seventh aspect, a computer storage medium is provided. The computer-readable storage medium stores instructions. When the instructions are run on a computer, the computer is enabled to perform the method according to any one of the second aspect or the possible designs of the second aspect.

According to a twenty-eighth aspect, a computer storage medium is provided. The computer-readable storage medium stores instructions. When the instructions are run on a computer, the computer is enabled to perform the method according to any one of the third aspect or the possible designs of the third aspect.

According to a twenty-ninth aspect, a computer storage medium is provided. The computer-readable storage medium stores instructions. When the instructions are run on a computer, the computer is enabled to perform the method according to any one of the fourth aspect or the possible designs of the fourth aspect.

According to a thirtieth aspect, a computer storage medium is provided. The computer-readable storage medium stores instructions. When the instructions are run on a computer, the computer is enabled to perform the method according to any one of the fifth aspect or the possible designs of the fifth aspect.

According to a thirty-first aspect, a computer storage medium is provided. The computer-readable storage medium stores instructions. When the instructions are run on a computer, the computer is enabled to perform the method according to any one of the sixth aspect or the possible designs of the sixth aspect.

According to a thirty-second aspect, a computer program product including instructions is provided. The computer program product stores the instructions. When the computer program product runs on a computer, the computer is enabled to perform the method according to any one of the first aspect or the possible designs of the first aspect.

According to a thirty-third aspect, a computer program product including instructions is provided. The computer program product stores the instructions. When the computer program product runs on a computer, the computer is enabled to perform the method according to any one of the second aspect or the possible designs of the second aspect.

According to a thirty-fourth aspect, a computer program product including instructions is provided. The computer program product stores the instructions. When the computer program product runs on a computer, the computer is enabled to perform the method according to any one of the third aspect or the possible designs of the third aspect.

According to a thirty-fifth aspect, a computer program product including instructions is provided. The computer program product stores the instructions. When the computer program product runs on a computer, the computer is enabled to perform the method according to any one of the fourth aspect or the possible designs of the fourth aspect.

According to a thirty-sixth aspect, a computer program product including instructions is provided. The computer program product stores the instructions. When the computer program product runs on a computer, the computer is enabled to perform the method according to any one of the fifth aspect or the possible designs of the fifth aspect.

According to a thirty-seventh aspect, a computer program product including instructions is provided. The computer program product stores the instructions. When the computer program product runs on a computer, the computer is enabled to perform the method according to any one of the sixth aspect or the possible designs of the sixth aspect.

After one or more network elements in a 4G network are upgraded, the method provided in the embodiments of this application can be performed to implement collaborative processing on user plane data integrity protection between devices. For example, the method may enable all the devices to activate a user plane data integrity protection function or enable no device to activate a user plane data integrity protection function, so that the devices keep consistent in processing manners, thereby reducing an error probability.

### BRIEF DESCRIPTION OF DRAWINGS

FIG. 1A and FIG. 1B are a flowchart of an attach procedure in a 4G system;
FIG. 2 is a flowchart of an AS SMC procedure in an attach procedure in a 4G system;
FIG. 3 is a flowchart of activating a corresponding integrity protection function and functions such as uplink and downlink encryption and decryption of user plane data in a PDU session establishment process in a 5G system;
FIG. 4 is a schematic diagram of an application scenario according to an embodiment of this application;
FIG. 5 is a flowchart of a first type of communication method according to an embodiment of this application;
FIG. 6A and FIG. 6B are a flowchart of a first example of the first type of communication method according to an embodiment of this application;
FIG. 7 is a flowchart of a second example of the first type of communication method according to an embodiment of this application;
FIG. 8 is a flowchart of a third example of the first type of communication method according to an embodiment of this application;
FIG. 9 is a flowchart of a fourth example of the first type of communication method according to an embodiment of this application;
FIG. 10A and FIG. 10B are a flowchart of a fifth example of the first type of communication method according to an embodiment of this application;
FIG. 11 is a flowchart of a sixth example of the first type of communication method according to an embodiment of this application;
FIG. 12 is a flowchart of a seventh example of the first type of communication method according to an embodiment of this application;
FIG. 13 is a flowchart of a second type of communication method according to an embodiment of this application;
FIG. 14 is a flowchart of a first example of the second type of communication method according to an embodiment of this application;
FIG. 15 is a flowchart of a second example of the second type of communication method according to an embodiment of this application;
FIG. 16 is a flowchart of a third example of the second type of communication method according to an embodiment of this application;
FIG. 17 is a flowchart of a third type of communication method according to an embodiment of this application;
FIG. 18 is a flowchart of a first example of the third type of communication method according to an embodiment of this application;
FIG. 19 is a schematic diagram of a communications apparatus that can implement a function of a terminal device according to an embodiment of this application;
FIG. 20 is a schematic diagram of a communications apparatus that can implement a function of a terminal device according to an embodiment of this application;
FIG. 21 is a schematic diagram of a communications apparatus that can implement a function of an access network device according to an embodiment of this application;
FIG. 22 is a schematic diagram of a communications apparatus that can implement a function of an access network device according to an embodiment of this application;
FIG. 23 is a schematic diagram of a communications apparatus that can implement a function of an access network device according to an embodiment of this application;
FIG. 24 is a schematic diagram of a communications apparatus that can implement a function of a first core network device according to an embodiment of this application; and
FIG. 25A and FIG. 25B are two schematic diagrams of a communications apparatus according to an embodiment of this application.

### DESCRIPTION OF EMBODIMENTS

To make the objectives, technical solutions and advantages of the embodiments of this application clearer, the following further describes the embodiments of this application in detail with reference to the accompanying drawings.

In the following, some terms of the embodiments of this application are described, to help a person skilled in the art have a better understanding.

1. A terminal device includes a device that provides a user with voice and/or data connectivity, for example, may include a handheld device with a wireless connection function, or a processing device connected to a wireless modem. The terminal device may communicate with a core network through a radio access network (radio access network, RAN), and exchange voice and/or data with the RAN. The terminal device may include user equipment (user equipment, UE), a wireless terminal device, a mobile terminal device, a device-to-device communication (device-to-device, D2D) terminal device, a V2X terminal device, a machine-to-machine/machine-type communications (machine-to-machine/machine-type communications, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a portable, pocket-sized, handheld, or computer built-in mobile apparatus, or the like. For example, the terminal device is a device such as a personal communications service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device may be an information sensing device, for example, a barcode, radio frequency identification (radio frequency identification, RFID), a sensor, a global positioning system (global positioning system, GPS), or a laser scanner.

By way of example rather than limitation, in the embodiments of this application, the terminal device may alternatively be a wearable device. The wearable device may also be referred to as a wearable intelligent device, an intelligent wearable device, or the like, and is a generic term for wearable devices that are developed by applying wearable technologies to intelligently design daily wear, such as glasses, gloves, watches, clothes, and shoes. The wearable device is a portable device that is directly worn on a body or integrated into clothes or an accessory of a user. The wearable device not only is a hardware device, but also implements a powerful function through software support, data interaction, and cloud interaction. Generalized wearable intelligent devices include full-featured and large-size devices, such as smart watches or smart glasses, that can implement complete or partial functions without depending on smartphones; and devices, such as various smart bands or smart jewelry for monitoring physical signs, that focus on only one type of application function and need to work with other devices such as smartphones.

However, if the various terminal devices described above are located on a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

(2) A network device includes, for example, an access network (access network, AN) device and a radio access network (radio access network, RAN) device, where the access network device, for example, a base station (for example, an access point), may be a device, in an access network, that communicates with a wireless terminal device over an air interface through one or more cells. The base station may be configured to mutually convert a received over-the-air frame and a received internet protocol (IP) packet, and serve as a router between the terminal device and the other parts of the access network, where the other parts of the access network may include an IP network. The network device may further coordinate attribute management of the air interface. For example, the network device may include an evolved NodeB (NodeB, eNB, or e-NodeB, evolved Node B) in a long term evolution (long term evolution, LTE) system or in long term evolution-advanced (long term evolution-advanced, LTE-A), or may include a next-generation node B (next generation node B, gNB), a next-generation evolved NodeB (next generation evolved nodeB, ng-eNB), or an en-gNB (enhanced next generation node B, gNB), namely, an enhanced next-generation NodeB, in a 5th generation (the 5^{th} generation, 5G) new radio (new radio, NR) system, or may include a centralized unit (centralized unit, CU) and a distributed unit (distributed unit, DU) that are in a cloud access network (cloud radio access network, Cloud RAN) system, or may further include a relay device. This is not limited in this embodiment of this application.

In addition, in the embodiments of this application, the network device may further include a core network device. The core network device includes, for example, a network device that processes and forwards signaling and data of a user. In a 4G system, one type of core network device is, for example, a mobility management entity (mobility management entity, MME). The MME is a key control node of an access network of an LTE system defined in the 3rd generation partnership project (3rd generation partnership project, 3GPP) protocol. The MME is responsible for a positioning and paging process and the like of a terminal device in an idle mode, where relaying is included. Briefly, the MME is a core network device responsible for signaling processing. Alternatively, in a 5G system, the core network device includes, for example, an access management network element, a session management network element, or a user plane gateway. The user plane gateway may be a server that has functions such as mobility management, routing, and forwarding specific to user plane data. The user plane gateway, for example, a serving gateway (serving gateway, SGW), a packet data network gateway (packet data network gateway, PGW), or a user plane function (user plane function, UPF) entity, is generally located on a network side.

(3) The terms "system" and "network" may be used interchangeably in the embodiments of this application. "At least one" refers to one or more, and "a plurality of' refers to two or more. The term "and/or" describes an association relationship for describing associated objects and represents that three relationships may exist. For example, A and/or B may represent the following three cases: Only A exists, both A and B exist, and only B exists, where A and B may be singular or plural. The character "/" generally indicates an "or" relationship between the associated objects. "At least one item (piece) of the following" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, in the embodiments of this application, ordinal numbers such as "first" and "second" are used to distinguish between a plurality of objects, and are not intended to limit an order, a time sequence, a priority, or importance of the plurality of objects. For example, a first priority criterion and a second priority criterion are merely used to distinguish between different criteria, but do not indicate different content, priorities, importance, or the like of the two criteria.

In addition, the terms "include" and "have" in the embodiments, claims, and accompanying drawings of this application are not exclusive. For example, a process, method, system, product, or device including a series of steps or modules is not limited to the listed steps or modules, and may further include a step or module that is not listed.

The foregoing describes some concepts in the embodiments of this application. The following describes technical features in the embodiments of this application.

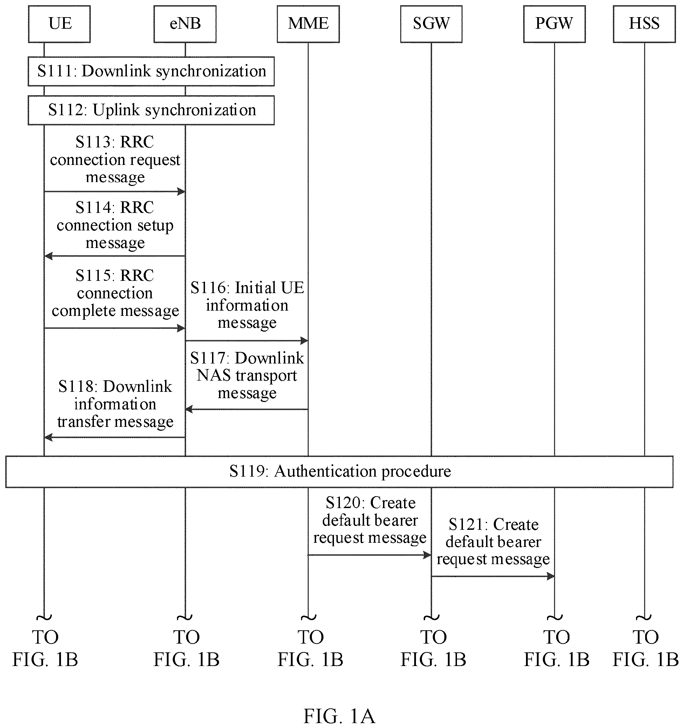

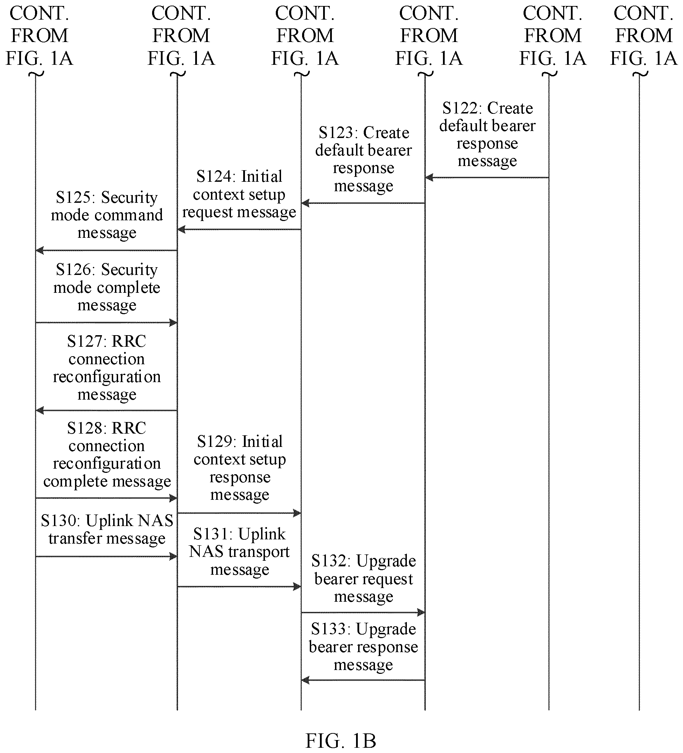

In a 4G LTE system, integrity protection is not performed on user plane data. Currently, in an LTE system, integrity protection is performed only on radio resource control (radio resource control, RRC), and uplink and downlink encryption and decryption are performed on a user plane. These processes are generally completed in an attach (attach) process of a terminal device. Refer to FIG. 1A and FIG. 1B. An attach procedure of a terminal device in a 4G system is described. The following describes each step in FIG. 1A and FIG. 1B. When each step in FIG. 1A and FIG. 1B is described, an example in which the terminal device is UE and the access network device is an eNB is used.

S111: The UE performs downlink synchronization.

For example, the UE may perform cell reselection, and receive a broadcast message from the selected cell, where the broadcast message includes, for example, obtaining a master information block (master information block, MIB) or a system information block (system information block, SIB). In this way, downlink synchronization with the eNB corresponding to the selected cell is completed.

S112: The UE performs uplink synchronization.

For example, the UE may perform uplink synchronization by using a random access procedure.

S113: The UE sends an RRC connection request (RRC connection request) message to the eNB, and the eNB receives the RRC connection request message from the UE.

S114: The eNB sends an RRC connection setup (RRC connection setup) message to the UE, and the UE receives the RRC connection setup message from the eNB.

In S113 and S114, the UE sets up an RRC connection to the eNB. A main purpose of setting up the RRC connection is to resolve a conflict between the UE and another UE caused by contending for a channel. In addition, after S114 is completed, an information bearer signaling resource bearer (signal resource bearer, SRB) 1 is set up between the UE and the eNB, to provide a link bearer for subsequently sending a non-access stratum (non-access stratum, NAS) message by the UE through the eNB. The NAS message is, for example, an attach request (attach request) message.

S115: The UE sends an RRC connection setup complete (RRC connection setup complete) message to the eNB, and the eNB receives the RRC connection setup complete message from the UE.

The RRC connection complete message carries an attach request message. The attach request message is a NAS message and needs to be transparently transmitted to an MME through the eNB.

S116: The eNB sends an initial UE information message (initial UE message) to the MME, and the MME receives the initial UE information message from the eNB.

Because an S 1 link between the eNB and the MME has not been set up yet, the eNB sends the initial UE information message to the MME. The initial UE information message may carry an eNB UE S1 application protocol (application protocol, AP) identity (identity, ID) allocated by the eNB to the S1 link, and the attach request message is attached in the initial UE information message, to be transparently transmitted to a NAS layer of the MME.

S117: The MME sends a downlink NAS transport (downlink NAS transport) message to the eNB, and the eNB receives the downlink NAS transport message from the MME.

The downlink NAS transmission message may carry an identity request (identify request) message, and may further carry an MME UE S1AP ID allocated by the MME to the S1 link.

S118: The eNB sends a downlink information transfer (downlink information transfer) message to the UE, and the UE receives the downlink information transfer message from the eNB.

The downlink information transfer message carries the identify request message, and may further carry the MME UE S1AP ID. That is, the MME transparently transmits the identify request message and the MME UE S1AP ID to the UE by using the NAS message. In this case, the S1 link is set up. The identity request message may be used to trigger an authentication procedure.

The eNB UE S1AP ID and the MME UE S1AP ID may be used as identifiers of the S1 link.

S119: The UE initiates an authentication procedure. For a specific authentication procedure, refer to an authentication procedure in an attach procedure in an existing 4G system.

S120: The MME sends a create default bearer request (create default bearer request) message to an SGW, and the SGW receives the create default bearer request message from the MME

If the authentication is synchronized, the MME notifies the SGW to initiate default bearer setup.

S121: The SGW forwards the create default bearer request message to a PGW, and the PGW receives the create default bearer request message from the SGW.

S122: The PGW sends a create default bearer response (create default bearer response) message to the SGW, and the SGW receives the create default bearer response message from the PGW.

In S 121 and S 122, the SGW initiates a default bearer setup message to the PGW to activate policy control and charging.

S123: The SGW forwards the create default bearer response message to the MME, and the MME receives the create default bearer response message from the SGW.

The create default bearer response message from the SGW may carry an internet protocol (internet protocol, IP) address of the SGW, an identifier of the created default bearer, an ID of a tunnel corresponding to the default bearer, and the like.

S124: The MME sends an initial context setup request (initial context setup request) message to the eNB, and the eNB receives the initial context setup request message from the MME

A NAS protocol data unit (protocol data unit, PDU) carried in the initial context setup request message may indicate whether the MME accepts the attach request message initiated by the UE. If the MME accepts the attach request message, the initial context setup request message may further carry at least one of information such as a total maximum bit (bit) rate of the UE, information about a plurality of bearers to be set up (for example, a quality of service (quality of service, QoS) parameter, an address of a media plane corresponding to an uplink, or a tunnel endpoint ID

(tunnel endpoint ID, TEID)), UE security capability information (for example, integrity check and encryption capabilities supported by the UE) security key (key) value (for example, an integrity key and a ciphering key that may be used by the eNB to derive), a UE radio capability (for example, an access type supported by the UE, where the access type includes, for example, evolved universal terrestrial radio access (evolved universal terrestrial radio access, EUTRA) or a global system for mobile communications/enhanced data rate GSM evolution radio access network (global system for mobile communications enhanced data rate for GSM evolution radio access network, GERAN)). The UE security capability information may be carried in the attach request message and sent to the MME

In addition, if the initial context setup request message does not carry the UE radio capability information, the eNB may initiate an RRC UE capability obtaining (UE capability enquiry) procedure to the UE, to obtain the UE radio capability information. In addition, after obtaining the UE radio capability information, the eNB may also choose to send the UE radio capability information to the MME

S125: The eNB sends a security mode command (security mode command, SMC) message to the UE, and the UE receives the security mode command message from the eNB.

S126: The UE sends a security mode complete (security mode complete) message to the eNB, and the eNB receives the security mode complete message from the UE.

For example, the eNB may perform an AND operation on a security capability parameter of the UE and capabilities supported by the eNB. For example, the eNB may obtain an intersection between the capabilities supported by the eNB and security capabilities of the UE, select capabilities with higher priorities from capabilities in the intersection, and perform, with the UE, access stratum (access stratum, AS) security activation on the capabilities with the higher priorities by using the security mode command message. In this way, RRC integrity protection and encryption and decryption are enabled.

It can be learned that, in the LTE system, user plane data integrity protection is not supported, and only the RRC integrity protection is supported.

S127: The eNB sends an RRC connection reconfiguration (RRC connection reconfiguration) message to the UE, and the UE receives the RRC connection reconfiguration message from the eNB.

For example, the eNB may include the response message, namely, the attach response message, of the MME for the attach request message, in a NAS PDU of the RRC connection reconfiguration message, to notify to set up the default bearer to the UE. The RRC connection reconfiguration message may allocate, to the UE, at least one of a logical channel of the default bearer, a logical channel group, QoS of a radio link, configuration parameters of a radio link control (radio link control, RLC) protocol and a packet data convergence protocol (packet data convergence protocol, PDCP) that correspond to each bearer, an evolved packet system (evolved packet system, EPS) bearer identifier (for example, an S1 interface link identifier), or a resource block (resource block, RB) identifier (for example, an LTE-Uu interface link identifier).

S128: The UE sends an RRC connection reconfiguration complete (RRC connection reconfiguration complete) message to the eNB, and the eNB receives the RRC connection reconfiguration complete message from the UE.

The UE may reply, to the eNB, with the RRC connection reconfiguration complete message.

S129: The eNB sends an initial context setup response (initial context setup response) message to the MME, and the MME receives the initial context setup response message from the eNB.

The initial context setup response message may carry a media plane address of the eNB, a tunnel TEID allocated to a downlink, and the like. In this case, a one-to-one correspondence between air interface links and EPS links is established.

S130: The UE sends an uplink information transfer (uplink information transfer) message to the eNB, and the eNB receives the uplink information transfer message from the UE.

The uplink information transfer message may carry an attach complete (attach complete) message, so that the eNB transparently transmits the attach complete message to the MME

S131: The eNB sends an uplink NAS transport (uplink NAS transport) message to the MME, and the MME receives the uplink NAS transport message from the eNB.

The uplink NAS transport message may carry the attach complete message. In this case, the attach procedure of the UE is complete.

S132: The MME sends an upgrade bearer request (update bearer request) message to the SGW, and the SGW receives the upgrade bearer request message from the MME

For example, the MME may send, to the SGW by using the bearer upgrade request message, a media plane address and a tunnel TEID that correspond to the downlink.

S133: The SGW sends an upgrade bearer response (update bearer response) message to the MME, and the MME receives the upgrade bearer response message from the SGW.

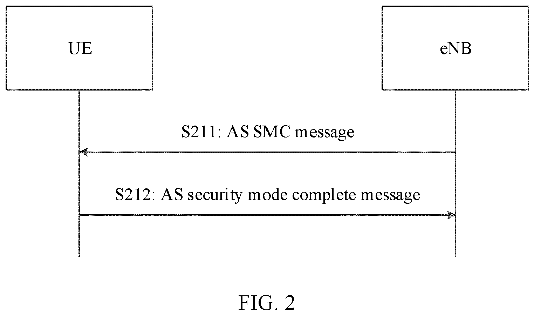

Step S125 and step S126 in the attach procedure shown in FIG. 1A and FIG. 1B may be considered as an SMC procedure, and are related to implementation of the RRC integrity protection. Therefore, the SMC procedure is further described in detail with reference to FIG. 2. In a process of describing FIG. 2, an example in which a terminal device is UE and an access network device is an eNB continues to be used.

S211: The eNB sends an AS SMC message to the UE, and the UE receives the AS SMC message from the eNB.

The AS SMC message herein may be equivalent to the security mode command message in S115 in the procedure shown in FIG. 1A and FIG. 1B.

The AS SMC message may carry a selected RRC algorithm and a media access control for integrity (media access control for integrity, MAC-I) parameter. The AS SMC message may be used to perform RRC integrity protection by using the RRC algorithm carried in the AS SMC message and an RRC integrity key indicated by a current Kasme.

After the AS SMC message is sent, RRC integrity protection and downlink encryption of user plane data that are on an eNB side are activated.

S212: The UE sends an AS security mode complete message to the eNB, and the eNB receives the AS security mode complete message from the UE.

The AS security mode complete message herein may be equivalent to the security mode complete message in S116 in the procedure shown in FIG. 1A and FIG. 1B.

After receiving the AS SMC message and successfully verifying RRC integrity of the AS SMC message, the UE sends the AS security mode complete message to the eNB. The AS security mode complete message may carry a MAC-I parameter. After the AS security mode complete message is sent, the UE activates the RRC integrity protection and uplink encryption of the user plane data.

After receiving the AS security mode complete message, the eNB starts the RRC integrity protection and uplink decryption of the user plane data.

The procedures shown in FIG. 1A and FIG. 1B and FIG. 2 describe how to activate an RRC integrity protection function in the 4G system. In the 4G system, user plane data integrity protection is not performed. However, in a 5G system, it is discussed that user plane data integrity protection may be performed. In the 5G system, activation of a user plane data integrity protection function is not completed in a registration (registration) procedure (where the registration procedure in the 5G system is similar to the attach procedure in the 4G system). Instead, the integrity protection function is completed in a PDU session establishment process. Currently, in the 5G system, activation of an RRC integrity protection function and activation of uplink and downlink encryption and decryption of the user plane data are still implemented by using the AS SMC procedure in the registration procedure.

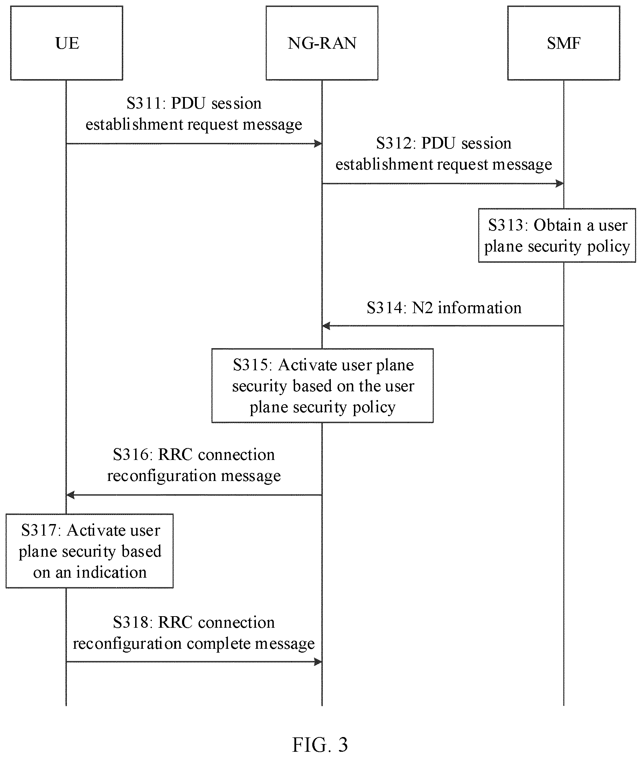

FIG. 3 describes how to activate a corresponding integrity protection function and functions such as uplink and downlink encryption and decryption of user plane data in a PDU session establishment process in a 5G system. In a process of describing FIG. 3, an example in which a terminal device is UE and an access network device is a next generation (next generation, NG)-radio access network (radio access network, RAN) is used.

S311: The UE sends a PDU session establishment request (PDU session establishment) message to the NG-RAN, and the NG-RAN receives the PDU session establishment request from the UE.

A session management function (session management function, SMF) network element sends a PDU session establishment request message, and the SMF network element receives the PDU session establishment request from the UE.

The UE may transparently transmit the PDU session establishment request message to the SMF through the NG-RAN.

The PDU session establishment request message may include information such as a PDU session ID (PDU session ID), a data network name (data network name, DNN), and network slice selection assistance information (network slice selection assistance information, NSSAI).

S312: The NG-RAN forwards the PDU session establishment request to an access and mobility management function (access and mobility management function, AMF) network element, and after receiving the PDU session establishment request, the AMF network element forwards the PDU session establishment request to the SMF.

In FIG. 3, the AMF network element is not drawn. Therefore, for S312, only a connection line between the NG-RAN network element and the SMF network element is drawn.

S313: The SMF obtains a user plane security policy (UP security policy or user plane security enforcement information).

For example, the SMF may obtain the user plane security policy from a unified data management (unified data management, UDM) network element, or may obtain the user plane security policy from a local configuration of the SMF.

The user plane security policy may include two types of information: (1) User plane data encryption protection needs to be activated (required), tends to be activated (preferred), or does not need to be activated (not needed). (2) User plane data integrity protection is "required", "preferred", or "not needed". "Preferred" may be translated into "tend to", or may be translated into "preferential", "recommended", or "suggested", and there is no limitation on a translation manner.

S314: The SMF network element sends N2 information (message) to the NG-RAN through the AMF, and the NG-RAN receives the N2 information from the SMF network element through the AMF

The N2 information may carry the user plane security policy obtained by the SMF in S33.

S315: The NG-RAN activates user plane security based on the user plane security policy.

For example, for the user plane security policy received by the NG-RAN, if the user plane data encryption protection is "required" and the user plane data integrity protection is "required", the NG-RAN may enable the user plane data encryption protection and the user plane data integrity protection, and generate a user plane data encryption key and a user plane data integrity protection key, or if the user plane data encryption protection is "preferred", the NG-RAN optionally enables the user plane data encryption protection and the user plane data integrity protection, or if the user plane data encryption protection is "not needed", the NG-RAN does not need to enable the user plane data encryption protection and the user plane data integrity protection.

S316: The NG-RAN sends an RRC connection reconfiguration message to the UE, and the UE receives the RRC connection reconfiguration message from the NG-RAN.

The RRC connection reconfiguration message may carry a user plane data encryption protection indication or a user plane data integrity protection activation indication.

S317: The UE activates user plane security based on an indication.

The indication herein is the user plane data encryption protection indication or the user plane data integrity protection activation indication carried in the RRC connection reconfiguration message in S316.

S318: The UE sends an RRC connection reconfiguration complete message to the NG-RAN, and the NG-RAN receives the RRC connection reconfiguration complete message from the UE.

If the UE determines that integrity protection for a data resource bearer (data resource bearer, DRB) of the PDU session is to be activated, the UE may activate uplink integrity protection and downlink integrity protection verification. If the UE does not have a key used for integrity protection, the UE needs to generate a key used for user plane data integrity protection. Similarly, if the UE determines that encryption protection is to be activated, the UE needs to activate an uplink user plane data encryption function and a downlink user plane data decryption function. If the UE does not have a key used for encryption and decryption, the UE needs to generate a key used for encryption and decryption. If an integrity check for the RRC connection reconfiguration message succeeds, the UE sends the RRC connection reconfiguration complete message to the NG-RAN.

It can be learned that in the 5G system, activation of an integrity protection function and activation of functions such as uplink and downlink encryption and decryption of user plane data are completed in a PDU session establishment process. Therefore, in the 5G system, it may be considered that the integrity protection function and the functions such as uplink and downlink encryption and decryption of user plane data are activated for the PDU session.

According to the description above, in the 4G system, first, user plane data integrity protection is not supported. Second, activation of functions such as RRC integrity protection and uplink and downlink encryption and decryption of user plane data is performed in the attach procedure. However, in the 5G system, first, user plane data integrity protection is supported. Second, activation of the functions of user plane data integrity protection and uplink and downlink encryption and decryption of user plane data is performed in the PDU session establishment process. Therefore, an implementation in the 4G system is greatly different from that in the 5G system. However, in an initial stage of deployment of the 5G system, a device in the 4G system, for example, a terminal device, an access network device, or a core network device, is continuously upgraded to finally meet a requirement of the 5G system. In a device upgrade process, a 4G network function and an upgraded network function may coexist for a period of time. For example, if the access network device is upgraded, but neither the terminal device nor the core network device is upgraded, the terminal device and the core network device that have a 4G network function coexist with the upgraded access network device. In such a coexistence scenario, how to implement collaborative processing on user plane data integrity protection between a plurality of devices or how to activate or deactivate user plane data integrity protection between different devices is a problem that needs to be resolved.

In view of this, the technical solutions in the embodiments of this application are provided. In the embodiments of this application, the access network device may determine whether to activate the user plane data integrity protection function, or determine whether the access network device supports the user plane data integrity protection function, and the access network device may notify the terminal device of a determining result. In this case, the terminal device may determine, based on the first information sent by the access network device, whether the terminal device needs to activate the user plane data integrity protection function. For example, the terminal device is a device that is upgraded, and the terminal device that is upgraded can support the user plane data integrity protection function. In this case, the terminal device may activate the user plane data integrity protection function. Alternatively, the terminal device is a device that is not upgraded, and the terminal device that is not upgraded cannot support the user plane data integrity protection function. In this case, the terminal device may not activate the user plane data integrity protection function. It can be learned that after one or more network elements in a 4G network are upgraded, the method provided in the embodiments of this application can be performed to implement collaborative processing on user plane data integrity protection between devices. For example, the method may enable all the devices to activate a user plane data integrity protection function or enable no device to activate a user plane data integrity protection function, so that the devices keep consistent in processing manners, thereby reducing an error probability.

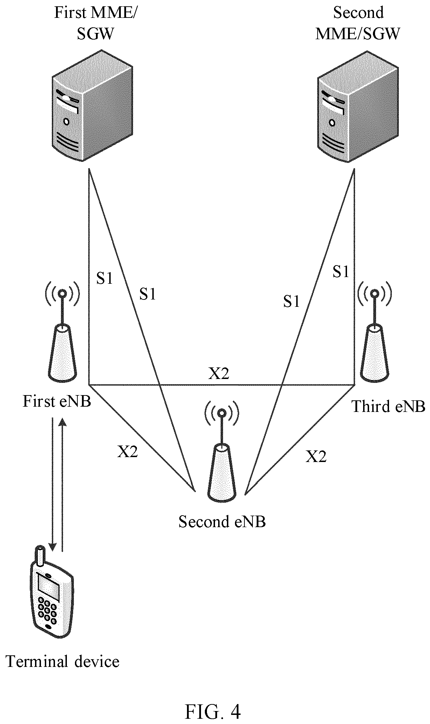

The technical features of the embodiments of this application are described above. FIG. 4 is a schematic diagram of an application scenario according to an embodiment of this application.

FIG. 4 includes two core network devices, which are separately a core network device 1 and a core network device 2. The two core network devices are, for example, an MME or an SGW, or may be another core network device, for example, an SMF. In FIG. 2, an MME/SGW is used as an example. Specifically, in FIG. 4, a first MME/SGW represents the core network device 1, and a second MME/SGW represents the core network device 2. Three access network devices are further included, namely, an access network device 1, an access network device 2, and an access network device 3. For example, the three access network devices are all eNBs. Specifically, in FIG. 4, a first eNB is the access network device 1, a second eNB is the access network device 2, and a third eNB is the access network device 3. In addition, a terminal device is further included. A mobile phone is used as an example. The terminal device accesses the access network device 1.

The devices shown in FIG. 4 may be configured to implement the technical solutions provided in the embodiments of this application. In addition, the core network device 1 in FIG. 4 may be a core network device that has not been upgraded, and the core network device that has not been upgraded may be represented as a legacy (legacy) core network device, or the core network device 1 may be a core network device that has been upgraded, and the core network device that has been upgraded may be represented as an upgraded (upgraded) core network device. Similarly, the core network device 2 may be a legacy core network device, or may be an upgraded core network device. The access network device 1 in FIG. 4 may be a legacy access network device, or may be an upgraded access network device. The access network device 2 may be a legacy access network device, or may be an upgraded access network device. The access network device 3 may be a legacy access network device, or may be an upgraded access network device. An upgraded access network device may be an NG-RAN, or may be another access network device. The terminal device in FIG. 4 may be a legacy terminal device, or may be an upgraded terminal device.

Certainly, a quantity of devices in FIG. 4 is merely an example, and is not limited during specific implementation. A location relationship between devices in FIG. 4 does not represent a location relationship between devices in an actual network deployment.

The technical solutions provided in the embodiments of this application may be applied to a transition system between the 4G system and the 5G system, or may be applied to the 5G system, or may be applied to a next-generation mobile communications system, or may be applied to a transition system between the 5G system and the next-generation mobile communications system, or may be applied to another similar communications system. The network device may be some devices described above, for example, an ng-enb (or written as an NG-eNB), an en-gnb, or the like.

With reference to the accompanying drawings, the following describes the technical solutions provided in the embodiments of this application.

In the embodiments of this application, identifiers that may be involved include but are not limited to at least one of the following:

### 1. Terminal identifier.

The terminal identifier may include at least one of an international mobile subscriber identity (international mobile subscriber identification number, IMSI), a permanent equipment identity (permanent equipment identifier, PEI), a subscription permanent identifier (subscriber permanent identifier, SUPI), a subscription concealed identifier (subscriber concealed identifier, SUCI), a temporary mobile subscriber identity (temporary mobile subscriber identity, TMSI), an IP multimedia public identity (IP multimedia public identity, IMPU), a media access control (media access control, MAC) address, an IP address, a cell phone number, or a globally unique temporary UE identity (globally unique temporary UE identity, GUTI). For example, the terminal identifier includes only an IMSI, includes only a PEI and a SUPI, includes only a PEI, a TMSI, and an IMPU, or includes an IMSI, a PEI, a SUPI, a SUCI, a TMSI, an IMPU, a MAC address, an IP address, a mobile phone number, a GUTI, and the like, and this is not limited herein. In subsequent embodiments, a UEID is used to represent the terminal identifier.

The PEI is a fixed identifier of the terminal device. The IMSI is a unique permanent identifier of a user in an LTE system. The SUPI is a permanent identifier of a user in the 5G system. The SUCI is a user identifier obtained after the SUPI is encrypted.

### 2. Network identifier.

The network identifier may include at least one of network ID identifiers such as an operator ID (for example, a public land mobile network (public land mobile network, PLMN) ID), an access network ID (access network ID), a serving network ID (serving network ID), a local area network ID, a slice ID, NSSAI, a cell ID, a CU ID of a gNB, and a DU ID of the gNB.

### 3. Service-related identifier.

The service-related identifier may include at least one of an EPS bearer (bearer) ID (where in a 4G LTE system, the EPS bearer ID may be referred to as an EPS bearer identity), a QoS ID, a flow (flow) ID, a radio bearer ID (radio bearer identity), or an evolved UMTS terrestrial radio access network (evolved UMTS terrestrial radio access network, E-UTRAN) radio access bearer (E-UTRAN radio access bearer, E-RAB) ID. The E-RAB ID is used between an S1 interface and an X2 interface. Generally, a value of the E-RAB ID is the same as that of the EPS bearer ID.

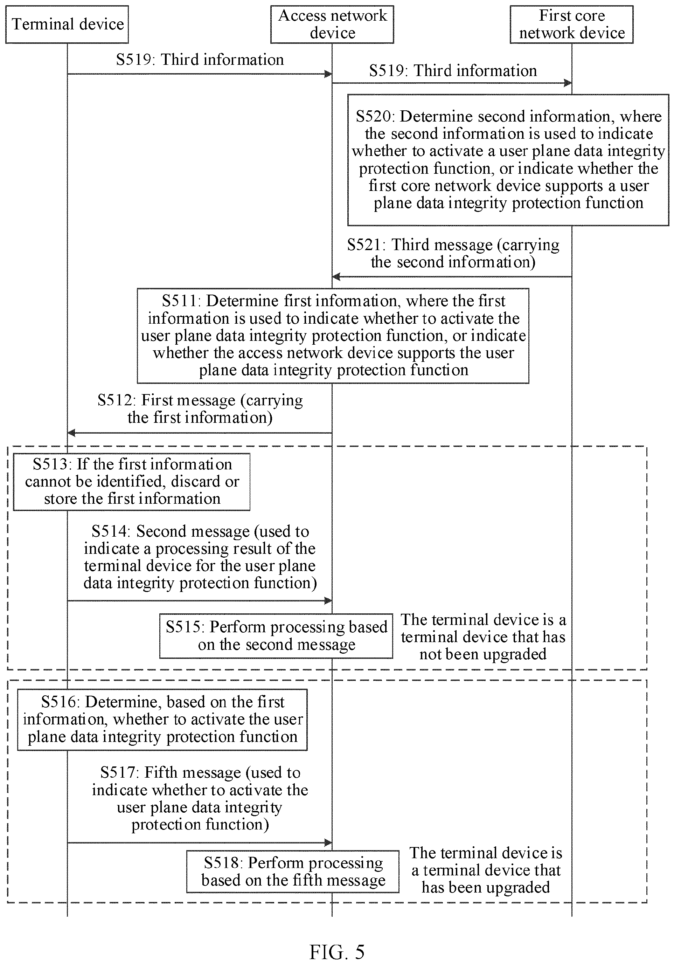

An embodiment of this application provides a first type of communication method. FIG. 5 is a flowchart of the method. In the following description process, an example in which the method is used in the network architecture shown in FIG. 4 is used. Therefore, an access network device described below is, for example, the access network device 1 in the network architecture shown in FIG. 4, a first core network device described below is, for example, the core network device 1 in the network architecture shown in FIG. 4, and a terminal device described below may be the terminal device in the network architecture shown in FIG. 4. In addition, in the method shown in FIG. 5, the access network device is an upgraded access network device.

S511: The access network device determines first information, where the first information is used to indicate whether to activate a user plane data integrity protection function, or is used to indicate whether the access network device supports a user plane data integrity protection function.

The first information may have different implementations.

In the first implementation of the first information, the first information may be directly used to indicate whether to activate the user plane data integrity protection function, or is used to indicate whether the access network device supports the user plane data integrity protection function. In this case, it may also be considered that the first information is specifically indication information, for example, referred to as first indication information, or referred to as an integrity protection indication (integrity protection indication). A specific name is not limited.

For example, the first information may include two types of different values. For example, the first information includes one bit. In this case, the two types of values included in the first information are " 1" and "0". If a value of the bit is "1", it may indicate that the first information indicates "activated (activated)", "required", "true (true)", or the like, and it also indicates that the first information indicates to activate the user plane data integrity protection function. However, if a value of the bit is "0", it may indicate that the first information indicates "deactivated (deactivated)", "not needed", or "false (false)", and it also indicates that the first information indicates not to activate the user plane data integrity protection function. If the first information indicates whether to activate the user plane data integrity protection function, and if the first information indicates to activate the user plane data integrity protection function, the access network device may further activate the user plane data integrity protection function on the access network device side in addition to sending the first information.

Alternatively, that the first information may be one bit is still used as an example. If a value of the bit is "1", it indicates that the first information indicates that the access network device supports (support) activating the user plane data integrity protection function. However, if a value of the bit is "0", it indicates that the first information indicates that the access network device does not support activating the user plane data integrity protection function. If the first information indicates whether the access network device supports activating the user plane data integrity protection function, and if the first information indicates that the access network device supports activating the user plane data integrity protection function, in addition to sending the first information, the access network device may activate the user plane data integrity protection function on the access network device side or may not activate the user plane data integrity protection function on the access network device side.

In this implementation of the first information, indicated content is relatively clear, and a device (for example, the terminal device) receiving the first information can determine, based on the first information, how to perform processing.

In the second implementation of the first information, the first information may include first integrity protection policy information, and the first integrity protection policy information may be used to indicate whether to activate the user plane data integrity protection function. The first integrity protection policy information may also be referred to as a first user plane security policy (user plane security policy) or the like, and a name is not limited.

For example, the first integrity protection policy information may include three types of values, and the three types of values respectively correspond to "required", "preferred", and "not needed". If a value of the first integrity protection policy information is used to indicate "required", it specifically indicates that the user plane data integrity protection function needs to be activated. Alternatively, if a value of the first integrity protection policy information is used to indicate "preferred", it specifically indicates that the user plane data integrity protection function tends to be activated. Alternatively, if a value of the first integrity protection policy information is used to indicate "not needed", it specifically indicates that the user plane data integrity protection function does not need to be activated. It can be learned that, if the first information includes the first integrity protection policy information, indicated content is relatively loose. For example, in addition to indicating that the user plane data integrity protection function needs to be activated, the first information may further indicate that the user plane data integrity protection function tends to be activated. For a device (for example, the terminal device) receiving the first information, there may be specific freedom during implementation. This can better reflect value of "negotiation" between devices.

For example, the first integrity protection policy information may include two bits, three values of the two bits are used to respectively indicate "required", "preferred", and "not needed", and a remaining value of the two bits may be temporarily set to default (default). Alternatively, the first integrity protection policy information may include three bits, and the three bits respectively correspond to "required", "preferred", and "not needed". For example, if a value of a bit corresponding to "required" is "1", it indicates that the first integrity protection policy information indicates "required". However, if a value of the bit corresponding to "required" is "0", it indicates that the first integrity protection policy information does not indicate "required". This is the same for bits indicating "preferred" and "not needed". Usually, a value of one of the three bits is "1", and values of the other two bits are "0". Certainly, only two possible implementations of the first integrity protection policy information are provided herein, and how to implement the first integrity protection policy information is not limited in this embodiment of this application.

When the first information includes the first integrity protection policy information, in an optional manner, the first information may further include first encryption and decryption policy information, and the first encryption and decryption policy information may be used to indicate whether to activate user plane data encryption and decryption functions. The first encryption and decryption policy information is included, so that content included in the first information can be more complete.

For example, the first encryption and decryption policy information may include three types of values, and the three types of values respectively correspond to "required", "preferred", and "not needed". If a value of the first encryption and decryption policy information is used to indicate the "required", it specifically indicates that the user plane data encryption and decryption functions need to be activated. Alternatively, if a value of the first encryption and decryption policy information is used to indicate "preferred", it specifically indicates that the user plane data encryption and decryption functions tend to be activated. Alternatively, if a value of the first encryption and decryption policy information is used to indicate "not needed", it specifically indicates that the user plane data encryption and decryption functions do not need to be activated. It can be learned that, content indicated by the first encryption and decryption policy information is relatively loose. For example, in addition to indicating that the user plane data encryption and decryption functions need to be activated, the first encryption and decryption policy information may further indicate that the user plane data encryption and decryption functions tend to be activated. For a device (for example, the terminal device) receiving the first information, there may be specific freedom during implementation. This can better reflect value of "negotiation" between devices.

For a possible implementation of the first encryption and decryption policy information, refer to the foregoing descriptions of the implementation of the first integrity protection policy information. Details are not described again.

S512: The access network device sends a first message to the terminal device, and the terminal device receives the first message from the access network device, where the first message carries the first information.

After determining the first information, the access network device may send the first information to the terminal device by using the first message. An implementation of the first message is described below by using an example. Therefore, details are not described herein.

If the terminal device is a legacy terminal device, the terminal device does not support the user plane data integrity protection, and S513 to S515 are performed. Alternatively, if the terminal device is an upgraded terminal device, the terminal device may support the user plane data integrity protection, and S516 to S518 are performed.

S513: If the terminal device cannot identify the first message, the terminal device discards or stores the first information.

S513 is a case in which the terminal device is not upgraded. After receiving the first message, the terminal device may have the following possible processing manners.

In a processing manner 1, if the terminal device cannot identify the first information, the terminal device may discard the first information or skip the first information. In this case, the terminal device does not process the first information. In this case, a processing result of the terminal device for user plane data integrity protection may be considered as that the terminal device has not activated the user plane data integrity protection function.

In the processing manner 1, the terminal device may discard or skip only the first information. However, if the first message further includes other information, and if the terminal device can identify the other information included in the first message, the terminal device may continue to perform processing such as parsing, to ensure that another procedure is normally performed.

In a processing manner 2, if the terminal device cannot identify the first information, the terminal device may discard the entire first message or skip the entire first message. In this case, the terminal device does not process the first message. In this case, a processing result of the terminal device for user plane data integrity protection may be considered as that the terminal device has not activated the user plane data integrity protection function.

In the processing manner 2, the terminal device discards the entire first message. In other words, if the first message further includes other information, the terminal device does not perform processing, such as parsing, on the other information included in the first message.

In a processing manner 3, the terminal device cannot identify the first information, but the terminal device may store the first information. For example, the terminal device may store the first information in a reserved location, and the terminal device does not perform processing, such as parsing, on the first information. In this case, a processing result of the terminal device for user plane data integrity protection may be considered as that the terminal device has not activated the user plane data integrity protection function.

In the processing manner 3, the terminal device may store only the first information. However, if the first message further includes other information, and if the terminal device can identify the other information included in the first message, the terminal device may continue to perform processing such as parsing, to ensure that another procedure is normally performed. Alternatively, in the processing manner 3, the terminal device may store the entire first message. In this case, even if the first message further includes other information, the terminal device does not perform processing, such as parsing, on the other information included in the first message.

In a processing method 4, the terminal device can identify the first information. However, the terminal device is a legacy terminal device and cannot support user plane data integrity protection. Therefore, the terminal device may discard the first information, or store the first information, and the terminal device does not perform processing, such as parsing, on the first information. In this case, a processing result of the terminal device for user plane data integrity protection may be considered as that the terminal device has not activated the user plane data integrity protection function.

In the processing manner 4, the terminal device may store only the first information. However, if the first message further includes other information, and if the terminal device can identify the other information included in the first message, the terminal device may continue to perform processing such as parsing, to ensure that another procedure is normally performed. Alternatively, in the processing manner 4, the terminal device may store the entire first message. In this case, even if the first message further includes other information, the terminal device does not perform processing, such as parsing, on the other information included in the first message.

The foregoing several processing manners are merely some examples. How to process the first information when the terminal device is a legacy terminal device is not limited in this embodiment of this application. How the legacy terminal device processes the first information may be specified in a protocol, or may be configured by the access network device, or may be determined by the terminal device.

In addition, regardless of which processing manner is used by the terminal device to process the first information, because the terminal device does not perform processing, such as parsing, on the first information, in an optional manner, the terminal device may further send an exception report to the access network device. If the terminal device uses the foregoing processing manner 1, processing manner 2, or processing method 3, the exception report may be used to indicate that the terminal device cannot identify the first information. Alternatively, if the terminal device uses the foregoing processing manner 4, the exception report may be used to indicate that the terminal device cannot activate the user plane data integrity protection function. Alternatively, the terminal device may not need to send a separate exception report, but may embody, in a second message (that is, a message with which the terminal device replies to the access network device in S514) to be described below, that the first information cannot be identified or the user plane data integrity protection function is not activated.

Certainly, that the terminal device sends an exception report is only an optional implementation. In another optional implementation, when determining that the terminal device cannot identify the first information or does not support activating the user plane data integrity protection function, the terminal device may not send an exception report to the access network device, but perform processing later for this. For example, if the terminal device has activated the user plane data integrity protection function, the terminal device may send an activation indication to the access network device. If the access network device does not receive the activation indication from the terminal device within a period of time, the access network device may determine that an exception occurs, and may perform exception processing. For example, if the access network device has activated the user plane data integrity protection function on the access network device side, the access network device may deactivate the user plane data integrity protection function on the access network device side. Alternatively, if the access network device has not activated the user plane data integrity protection function on the access network device side, the access network device determines not to activate the user plane data integrity protection function on the access network device side. Alternatively, in another manner, the terminal device subsequently sends uplink data to the access network device, and the access network device has activated the user plane data integrity protection function, and has also indicated, by using the first information, the terminal device to activate the user plane data integrity protection function. Therefore, the access network device verifies the uplink data based on an algorithm of the user plane data integrity protection function. However, because the terminal device does not perform integrity protection on the uplink data, an error occurs in the verification of the access network device. In this case, the access network device may also perform exception processing. For example, if the access network device has activated the user plane data integrity protection function on the access network device side, the access network device may deactivate the user plane data integrity protection function on the access network device side.

S514: The terminal device sends the second message to the access network device, and the access network device receives the second message from the terminal device, where the second message is used to indicate a processing result of the terminal device for the user plane data integrity protection function.

In the first implementation of the processing result, the processing result may be used to indicate whether the terminal device has activated the user plane data integrity protection function.

For example, the processing result may carry a result about whether the user plane data integrity protection function is activated by the terminal device. If the user plane data integrity protection function is activated, the result about whether the user plane data integrity protection function is activated by the terminal device is "activated". If the user plane data integrity protection function is not activated, the result about whether the user plane data integrity protection function is activated by the terminal device is "not activated". The processing result of the terminal device is directly notified to the access network device, and a manner is relatively simple and direct.

Optionally, in addition to the result about whether the user plane data integrity protection function is activated by the terminal device, the processing result may further carry a capability of the terminal device for the user plane data integrity protection function. For example, if the terminal device supports the user plane data integrity protection function, the capability of the terminal device for the user plane data integrity protection function is "supported". If the terminal device does not support the user plane data integrity protection function, the capability of the terminal device for the user plane data integrity protection function is "not supported". In addition, capability information of the terminal device is further notified to the access network device, so that the access network device can obtain more abundant information.

In the second implementation of the processing result, the processing result may include a failure indication, where a cause value of the failure indication is used to indicate whether the terminal device has activated the user plane data integrity protection function, or a cause value of the failure indication is used to indicate that the terminal device cannot identify the first information.

For example, the processing result may include a failure indication (failure indication). The failure indication may carry a failure cause value (failure cause). The failure cause value may indicate that the terminal device has activated the user plane data integrity protection function or the terminal device has not activated the user plane data integrity protection function. Alternatively, if the terminal device cannot identify the first information, the failure cause value may further include the first information. In this case, it may be considered that the failure cause value is used to indicate that the terminal device cannot identify the first information. After receiving the failure indication, the access network device may determine whether the terminal device has activated the user plane data integrity protection function. The failure cause value is carried, so that the access network device can more clearly know why the terminal device has activated or has not activated the user plane data integrity protection function.

S515: The access network device performs processing based on the second message.

For example, if the processing result is used to indicate that the terminal device cannot activate the user plane data integrity protection function, and if the access network device has not activated the user plane data integrity protection function, the access network device may not activate the user plane data integrity protection function, or if the access network device has activated the user plane data integrity protection function, the access network device may deactivate the user plane data integrity protection function, to keep consistent with the terminal device. However, before the access network device deactivates the user plane data integrity protection function, if data has been transmitted on a user plane, the access network device may ignore an error that occurs when the data is processed. In addition, the access network device may further activate a user plane data uplink decryption function.

Alternatively, if the processing result is used to indicate that the terminal device cannot activate the user plane data integrity protection function, and if the access network device has activated the user plane data integrity protection function, the access network device may report an error, and the procedure is terminated.

Alternatively, if the processing result is used to indicate that the terminal device has activated the user plane data integrity protection function, and if the access network device has not activated the user plane data integrity protection function, the access network device may consider activating the user plane data integrity protection function. Certainly, in this case, the access network device may alternatively determine whether to activate the user plane data integrity protection function by comprehensively considering other factors. For example, the access network device may alternatively consider whether the access network device can meet a requirement on a maximum data transmission rate that can be allowed or accepted after the user plane data integrity protection function is activated, or may consider factors such as load of the access network device. This is not specifically limited.

Alternatively, if the processing result is used to indicate that the terminal device has activated the user plane data integrity protection function, and if the access network device has activated the user plane data integrity protection function, the access network device may keep the user plane data integrity protection function in an active state, to keep consistent with that of the terminal device.

S516: The terminal device determines, based on the first information, whether the terminal device is to activate the user plane data integrity protection function.

S517: The terminal device sends a fifth message to the access network device, and the access network device receives the fifth message from the terminal device, where the fifth message is used to indicate whether to activate the user plane data integrity protection function.

S518: The access network device performs processing based on the fifth message.

S516 to S518 are a case in which the terminal device is an upgraded terminal device. After the terminal device receives the first information, the terminal device and the access network device may perform the following processing.

In a case 1, the first information is used to indicate that the access network device supports the user plane data integrity protection function.

In this case, if the terminal device determines that the terminal device also supports the user plane data integrity protection function, the terminal device may determine, based on requirements such as a transmission rate required after the user plane data integrity protection function is activated and a maximum data rate supported by the terminal, whether the terminal device can activate the user plane data integrity protection function. In addition, the terminal device may send the fifth message to the access network device, where the fifth message may be used to indicate whether to activate the user plane data integrity protection function. For example, the fifth message may include fourth information, and the fourth information may be used to indicate whether to activate the user plane data integrity protection function. Certainly, the terminal device usually cannot indicate the access network device. Therefore, that the fifth message indicates whether to activate the user plane data integrity protection function, described herein, means only to notify a tendency of the terminal device to the access network device. A specific decision further needs to be made by the access network device.

For example, the fourth information may include three types of values, and the three types of values respectively correspond to "required", "preferred", and "not needed". If a value of the fourth information is used to indicate "required", it specifically indicates that the user plane data integrity protection function needs to be activated. Alternatively, if a value of the fourth information is used to indicate "preferred", it specifically indicates that the user plane data integrity protection function tends to be activated. Alternatively, if a value of the fourth information is used to indicate "not needed", it specifically indicates that the user plane data integrity protection function does not need to be activated. For an implementation of the fourth information, refer to the foregoing descriptions of the implementation of the first integrity protection policy information.

In this case, if the terminal device determines, based on the requirements such as the transmission rate required after the user plane data integrity protection function is activated or the maximum data rate supported by the terminal device, that the terminal device can activate the user plane data integrity protection function, the fourth information sent by the terminal device may indicate "required" or "preferred". In addition, the terminal device may further activate the user plane data integrity protection function. Alternatively, if the terminal device does not support the user plane data integrity protection function, or the terminal device determines, based on the requirements such as the transmission rate required after the user plane data integrity protection function is activated, that the terminal device cannot activate the user plane data integrity protection function, or preferably not to activate the user plane data integrity protection function (for example, activation may have relatively great impact on a transmission rate of the terminal device), the fourth information sent by the terminal device may indicate "not needed". In this case, the terminal device does not activate the user plane data integrity protection function either.

In addition, the terminal device may further send capability information (for example, a capability about whether the terminal device supports activating the user plane data integrity protection function) of the terminal device to the access network device, or may send a result about whether the terminal device is to activate the user plane data integrity protection function to the access network device. For example, the terminal device may include the capability information of the terminal device and the result about whether the terminal device is to activate the user plane data integrity protection function in the fifth message, and send the fifth message to the access network device.

If the access network device determines that the fourth information indicates "required" or "preferred", the access network device may determine, with reference to related information of the access network device, whether the access network device is to activate the user plane data integrity protection function. In the embodiments of this application, the related information of the access network device includes, for example, whether the access network device can meet a requirement on a maximum data transmission rate that can be allowed or accepted after the user plane data integrity protection function is activated, and/or load of the access network device.

Alternatively, if the access network device determines that the fourth information indicates "not needed", the access network device may decide not to activate the user plane data integrity protection function. In this case, if the access network device forcibly activates the user plane data integrity protection function, an error may be reported.

In addition, a type indicated by the first information sent by the access network device and a type indicated by the fourth information sent by the terminal device may be the same. For example, if the first information received by the terminal device indicates a simple "supported" or "activated" case, correspondingly, the fourth information with which the terminal device replies may be "activated", "deactivated", or the like, and there is no need to reply with "required", "preferred", "not needed", or the like described above. In this way, information types are unified, and a device does not need to parse excessive types of information, thereby simplifying an operation process of the device.

In a case 2, the first information is used to indicate that the access network device does not support the user plane data integrity protection function.

If the access network device does not support the user plane data integrity protection function, and the upgraded terminal device supports the user plane data integrity protection function, to keep consistent with the access network device, the terminal device may not activate the user plane data integrity protection function. In this case, the fourth information is used to indicate that the terminal device has not activated the user plane data integrity protection function.

In this case, because the access network device has not activated the user plane data integrity protection function, if the access network device determines that the fourth information indicates "not needed", the access network device may keep the user plane data integrity protection function in an inactive state.

In a case 3, the first information is used to indicate whether to activate the user plane data integrity protection function, and the first information is used to indicate to activate the user plane data integrity protection function, indicate that the user plane data integrity protection function needs to be activated, or indicate that the user plane data integrity protection function tends to be activated.

In this case, if the terminal device determines that the terminal device also supports the user plane data integrity protection function, the terminal device may determine, based on related information of the terminal device, whether the terminal device can activate the user plane data integrity protection function. In the embodiments of this application, the related information of the terminal device includes, for example, a transmission rate required after the user plane data integrity protection function is activated, and/or a maximum data rate supported by the terminal device. In addition, the terminal device may send the fifth message to the access network device, where the fifth message may be used to indicate whether to activate the user plane data integrity protection function. For example, the fifth message may include fourth information, and the fourth information may be used to indicate whether to activate the user plane data integrity protection function.

Similarly, for example, the fourth information may include three types of values, and the three types of values respectively correspond to "required", "preferred", and "not needed". If a value of the fourth information is used to indicate "required", it specifically indicates that the user plane data integrity protection function needs to be activated. Alternatively, if a value of the fourth information is used to indicate "preferred", it specifically indicates that the user plane data integrity protection function tends to be activated. Alternatively, if a value of the fourth information is used to indicate "not needed", it specifically indicates that the user plane data integrity protection function does not need to be activated. For an implementation of the fourth information, refer to the foregoing descriptions of the implementation of the first integrity protection policy information.

In this case, if the terminal device determines, based on requirements such as a transmission rate required after the user plane data integrity protection function is activated and/or a maximum data rate supported by the terminal device, that the terminal device can activate the user plane data integrity protection function, the fourth information sent by the terminal device may indicate " required" or "preferred". In addition, the terminal device may further activate the user plane data integrity protection function. Alternatively, if the terminal device does not support the user plane data integrity protection function, or the terminal device determines, based on requirements such as a transmission rate required after the user plane data integrity protection function is activated and/or a maximum data rate supported by the terminal device, that the terminal device cannot activate the user plane data integrity protection function, or preferably not to activate the user plane data integrity protection function (for example, activation may have relatively great impact on a transmission rate of the terminal device), the fourth information sent by the terminal device may indicate "not needed". In this case, the terminal device does not activate the user plane data integrity protection function either.

In addition, the terminal device may further send capability information (for example, a capability about whether the terminal device supports activating the user plane data integrity protection function) of the terminal device to the access network device, or may send a result about whether the terminal device is to activate the user plane data integrity protection function to the access network device. For example, the terminal device may include the capability information of the terminal device and the result about whether the terminal device is to activate the user plane data integrity protection function in the fifth message, and send the fifth message to the access network device.

If the first information is used to indicate whether to activate the user plane data integrity protection function, in the case 3, the access network device may have activated the user plane data integrity protection function. If the access network device determines that the fourth information indicates "required" or "preferred", the access network device may continue to perform integrity protection on user plane data.

Alternatively, if the access network device determines that the fourth information indicates "not needed", because the access network device may have activated the user plane data integrity protection function, and before this, there may be data being transmitted on a user plane, an error may occur in the data. In this case, the access network device and/or the terminal device may resend the data, to reduce an error rate.

In a case 4, the first information is used to indicate whether to activate the user plane data integrity protection function, and the first information is used to indicate not to activate the user plane data integrity protection function, or indicate that the user plane data integrity protection function does not need to be activated.

In this case, the terminal device may discard the first information, or store the first information. The fourth information sent by the terminal device may indicate not to activate the user plane data integrity protection function. Naturally, the terminal device does not activate the user plane data integrity protection function either.

In addition, the terminal device may further send capability information (for example, a capability about whether the terminal device supports activating the user plane data integrity protection function) of the terminal device to the access network device. For example, the terminal device may include the capability information of the terminal device in the fifth message and send the fifth message to the access network device.

Herein, it may also be understood as that the terminal device determines not to activate the user plane data integrity protection function, instead of reporting an error. An error reporting case is that the terminal device does not identify the first information, but the terminal device can identify the first information herein. Therefore, the terminal device still has a determining capability. The first information indicates only a tendency of the access network device or indicates that the access network device has activated the user plane data integrity protection function. However, the upgraded terminal device still has a determining capability, and should not perform same processing as the legacy terminal device. The terminal device herein may also need to activate the user plane data integrity protection function and has activated the user plane data integrity protection function or tends to activate the user plane data integrity protection function, and may send a processing result of the terminal device for the user plane data integrity protection function to the access network device (for example, notify the access network device that the terminal device needs to activate the user plane data integrity protection function and has activated the user plane data integrity protection function, or the terminal device tends to activate the user plane data integrity protection function). The access network device may terminate the procedure and return an error to the terminal device after detecting a problem.

In this case, the access network device may have not activated the user plane data integrity protection function. In this case, if the access network device determines that the fourth information indicates "not needed", the access network device may keep the user plane data integrity protection function in an inactive state.

The foregoing several processing manners are merely examples. For the upgraded terminal device, how to perform processing after receiving the first information is not specifically limited.

In addition, for both the legacy terminal device and the upgraded terminal device, before receiving the first message from the access network device, the terminal device may send third information to the access network device, where the third information may be used to indicate whether to activate the user plane data integrity protection function, or is used to indicate whether the terminal device supports the user plane data integrity protection function. For example, after the terminal device is upgraded or rolled back, the terminal device may send the third information, to notify a network side of a new capability of the terminal device. The third information may be directly sent to the access network device, or the third information may be NAS information, for example, an initial NAS message, namely, an attach message, that is transparently transmitted to the first core network device through the access network device. This is not specifically limited. In FIG. 5, an example in which the third information is transparently transmitted to the first core network device through the access network device is used.

S519: The terminal device sends the third information to the access network device, the access network device receives the third information from the terminal device, and the access network device forwards the third information to the first core network device.

As mentioned above, the terminal device may transparently transmit the third information to the core network device through the access network device. This is also used as an example in FIG. 5. For example, the terminal device sends the third information to the access network device, the access network device sends a fourth message to the first core network device, and the first core network device receives the fourth message from the access network device, where the fourth message includes the third information.

Alternatively, the terminal device may send the third information only to the access network device, that is, does not transparently transmit the third information to the first core network device through the access network device.

For example, S519 may be performed before S511, or may be performed on another occasion between S511 and S518, or may be performed after S518. In FIG. 5, an example in which S519 is performed before S511 is used.

In the first implementation of the third information, the third information may be used to indicate whether to activate the user plane data integrity protection function, or is used to indicate whether the terminal device supports the user plane data integrity protection function.

In the second implementation of the third information, the third information may include third integrity protection policy information, and the third integrity protection policy information may be used to indicate whether to activate the user plane data integrity protection function.

For the two implementations of the third information, refer to the foregoing descriptions of the two implementations of the first information. Details are not described again.

When the third information includes the third integrity protection policy information, in an optional manner, the third information may further include third encryption and decryption policy information, and the third encryption and decryption policy information may be used to indicate whether to activate user plane data encryption and decryption functions. The third encryption and decryption policy information is included, so that content included in the third information can be more complete.

For a possible implementation of the third encryption and decryption policy information, refer to the foregoing descriptions of the implementation of the first encryption and decryption policy information. Details are not described again.

If the access network device does not receive the third information from the terminal device (where this may include two cases: In one case, the terminal device directly sends the third information to the access network device. In this case, the terminal device may not send the third information. In this case, the access network device does not receive the third information. Alternatively, the terminal device may send the third information, but the access network device does not receive the third information, that is, the third information is lost. In the other case, the terminal device transparently transmits the third information to the first core network device through the access network device. In this case, if the first core network device further forwards the third information to the access network device, the access network device may receive the third information. However, if the first core network device does not forward the third information to the access network device, the access network device does not receive the third information), in S511, the access network device may determine the first information based on a status of the access network device. For example, the access network device may determine the first information based on factors such as a transmission rate required after the access network device activates the user plane data integrity protection function and/or load of the access network device.

Alternatively, the access network device may further query the core network device to determine the first information. For example, if the access network device does not receive the third information, the access network device may send a query request message to a second core network device, where the query request message may be used to query whether the second core network device supports activating the user plane data integrity protection function. The core network device may store subscription data related to the terminal device, or the core network device may obtain subscription data related to the terminal device from a home subscriber server (home subscriber server, HSS). In this case, the second core network device may view whether the second core network device has been configured with information used to indicate whether the user plane data integrity protection function is supported, or has been configured with information used to indicate whether to activate the user plane data integrity protection function. Alternatively, the second core network device may obtain, from a subscription database, for example, an HSS, information that is associated with the subscription data of the terminal device and that is used to indicate whether the user plane data integrity protection function is supported, or obtain information that is used to indicate whether to activate the user plane data integrity protection function. The second core network device may send a query response message to the access network device, where the query response message may be used to indicate whether the user plane data integrity protection function is supported, or indicate whether to activate the user plane data integrity protection function. In this case, the access network device may determine, based on the query response message, whether to activate the user plane data integrity protection function, or determine the first information. For example, the access network device may determine, with reference to the query response message and with reference to factors such as load of the access network device and/or a maximum transmission rate required after the user plane data integrity protection function is activated, whether to activate the user plane data integrity protection function, or determine the first information.

Alternatively, if the access network device receives the third information from the terminal device (where this may include two cases. In one case, the terminal device directly sends the third information to the access network device. In this case, the access network device may receive the third information. In the other case, the terminal device transparently transmits the third information to the first core network device through the access network device. In this case, if the first core network device further forwards the third information to the access network device, the access network device may receive the third information), in S511, the access network device may determine, based on the third information, whether to activate the user plane data integrity protection function, or the access network device may determine the first information based on the third information. For example, when determining the first information, the access network device may determine the first information based on the third information and a status of the access network device. For example, the access network device may determine the first information based on the third information and factors such as a transmission rate required after the user plane data integrity protection function is activated and/or load of the access network device.

The terminal device transparently transmits the third information to the first core network device through the access network device. For example, the terminal device may place the third information in a NAS container (container). For example, if the terminal device sends the third information through an RRC message, the terminal device may place the third information in a NAS container in the RRC message. After receiving the RRC message, the access network device does not parse content in the NAS container, but directly forwards the content in the NAS container to the first core network device. In this case, the access network device cannot obtain the content in the NAS container.

Alternatively, even if the access network device receives the third information, the access network device may still query or still need to query the core network device, to determine the first information. This is also because according to the descriptions in the previous paragraph, if the third information is transparently transmitted, the access network device does not obtain the third information. For example, after receiving the third information, the access network device may send a query request message to a second core network device, where the query request message may be used to query whether the second core network device supports activating the user plane data integrity protection function. The second core network device may view whether the second core network device has been configured with information used to indicate whether the user plane data integrity protection function is supported, or has been configured with information used to indicate whether to activate the user plane data integrity protection function. Alternatively, the second core network device may obtain, from a subscription database, for example, an HSS, information that is associated with subscription data of the terminal device and that is used to indicate whether the user plane data integrity protection function is supported, or obtain information that is used to indicate whether to activate the user plane data integrity protection function. The second core network device may send a query response message to the access network device, where the query response message may be used to indicate whether the user plane data integrity protection function is supported, or indicate whether to activate the user plane data integrity protection function. In this case, the access network device may determine, based on the third information and the query response message, whether to activate the user plane data integrity protection function, or determine the first information. For example, the access network device may determine, with reference to the third information and the query response message and with reference to factors such as load of the access network device and/or a maximum transmission rate required after the user plane data integrity protection function is activated, whether to activate the user plane data integrity protection function, or determine the first information.

The second core network device and the first core network device may be a same core network device. Alternatively, the second core network device and the first core network device are core network devices of a same type, but are not a same core network device. For example, both the first core network device and the second core network device are MMEs, but are not a same MME. Alternatively, the second core network device and the first core network device are core network devices of different types. For example, the first core network device is an MME, and the second core network device is an SMF or the like.

The following describes, based on how the access network device determines, based on the third information, whether to activate the user plane data integrity protection function, in S511, how the access network device determines whether to activate the user plane data integrity protection function or describes, by using an example about how the access network device determines the first information based on the third information, how the access network device determines the first information.

In a case 1, the third information indicates whether to activate the user plane data integrity protection function, and specifically indicates to activate the user plane data integrity protection function, or specifically indicates that the user plane data integrity protection function needs to be activated, or specifically indicates that the user plane data integrity protection function tends to be activated.

In this case, if the access network device can support the user plane data integrity protection function, the access network device may consider some related information of the access network device to determine whether the access network device can activate the user plane data integrity protection function. The related information includes, for example, whether the access network device can meet a requirement on a maximum data transmission rate that can be allowed or accepted after the user plane data integrity protection function is activated, and/or load of the access network device.

In this case, if the access network device determines, based on the related information of the access network device, that the access network device can activate the user plane data integrity protection function, the first information sent by the access network device may indicate "required" or "preferred", or indicate to activate the user plane data integrity protection function, and the access network device may further activate the user plane data integrity protection function. In addition, the access network device may further select, based on an integrity protection algorithm sent by the terminal device and a user plane data integrity protection algorithm of the access network device, an algorithm finally applicable to user plane data integrity protection, and send information about the algorithm applicable to the user plane data integrity protection function to the terminal device. For example, the information may be carried in the first message and the first message is sent to the terminal device.

Alternatively, if the access network device does not support the user plane data integrity protection function, or the access network device determines, based on the related information of the access network device, that the access network device cannot activate the user plane data integrity protection function, or preferably not to activate the user plane data integrity protection function (for example, the activation may have relatively great impact on a transmission rate of the access network device), the access network device may send a sixth message to the terminal device, where the sixth message is used to indicate that the access network device does not support the user plane data integrity protection function, or indicate not to activate the user plane data integrity protection function, or indicate "not needed". In this case, the access network device may not activate the user plane data integrity protection function either.

In a case 2, the third information indicates whether to activate the user plane data integrity protection function, and specifically indicates not to activate the user plane data integrity protection function, or specifically indicates that the user plane data integrity protection function does not need to be activated.

In this case, if the access network device can support the user plane data integrity protection function, the access network device may determine not to activate the user plane data integrity protection function. In addition, the access network device may further send a sixth message to the terminal device, where the sixth message may indicate not to activate the user plane data integrity protection function.

Alternatively, in this case, if the access network device can support the user plane data integrity protection function, even if the terminal device indicates, by using the third information, not to activate the user plane data integrity protection function, or specifically indicates that the user plane data integrity protection function does not need to be activated, the access network device may still perform further determining. For example, the access network device may determine, based on related information of the access network device, whether the user plane data integrity protection function can be activated. The related information includes, for example, whether the access network device can meet a requirement on a maximum data transmission rate that can be allowed or accepted after the user plane data integrity protection function is activated, and/or load of the access network device. If the access network device determines that the user plane data integrity protection function can be activated, the access network device may further send information to the terminal device, for example, send sixth information, where the sixth information indicates, for example, whether to activate the user plane data integrity protection function, and specifically indicates to activate the user plane data integrity protection function, or specifically indicates that the user plane data integrity protection function needs to be activated, or specifically indicates that the user plane data integrity protection function tends to be activated. After the terminal device receives the sixth information, because the terminal device determines not to activate the user plane data integrity protection function, the terminal device may report an error, for example, may send an exception report to the access network device. Alternatively, after receiving the sixth information, the terminal device may not immediately report an error. For example, the terminal device does not send an exception report, but enables the access network device to learn, in a subsequent procedure, that an exception occurs. For example, after receiving the sixth information, the terminal device does not report an error. Subsequently, the terminal device sends uplink data to the access network device, but the terminal device does not perform integrity protection on the uplink data. However, after receiving the uplink data, the access network device performs integrity protection verification on the received uplink data. In this case, an error occurs in the verification, and the access network device may determine that there is an exception.

A type indicated by the third information sent by the terminal device and a type indicated by the fourth information sent by the access network device may be the same. For example, if the third information sent by the terminal device indicates a simple "supported" or "activated" case, correspondingly, the first information with which the access network device replies may be "activated", "deactivated", or the like, and there is no need to reply with "required", "preferred", "not needed", or the like described above. In this way, information types are unified, and a device does not need to parse excessive types of information, thereby simplifying an operation process of the device.

Alternatively, regardless of the case 1 or the case 2, even if the access network device receives the third information, the access network device may still query the core network device to determine whether to activate the user plane data integrity protection function, so that a determining result of the access network device better meets a requirement of each device. For example, after receiving the third information, the access network device may send a query request message to a second core network device, where the query request message may be used to query whether the second core network device supports activating the user plane data integrity protection function. The second core network device may view whether the second core network device has been configured with information used to indicate whether the user plane data integrity protection function is supported, or has been configured with information used to indicate whether to activate the user plane data integrity protection function. Alternatively, the second core network device may obtain, from a subscription database, for example, an HSS, information that is associated with subscription data of the terminal device and that is used to indicate whether the user plane data integrity protection function is supported, or obtain information that is used to indicate whether to activate the user plane data integrity protection function. The second core network device may send a query response message to the access network device, where the query response message may be used to indicate whether the user plane data integrity protection function is supported, or indicate whether to activate the user plane data integrity protection function. In this case, the access network device may determine, based on the third information and the query response message, whether to activate the user plane data integrity protection function. For example, the access network device may determine, with reference to the third information and the query response message and with reference to factors such as load of the access network device and/or a maximum transmission rate required after the user plane data integrity protection function is activated, whether to activate the user plane data integrity protection function. Certainly, in the case 2, if the third information specifically indicates not to activate the user plane data integrity protection function, or specifically indicates that the user plane data integrity protection function does not need to be activated, the access network device possibly cannot activate the user plane data integrity protection function; otherwise, the access network device is inconsistent with the terminal device. Therefore, the access network device may query or not query the second core network device.

In the foregoing process of discussing the embodiment shown in FIG. 5, the first core network device is not involved. However, in the embodiment shown in FIG. 5, two cases are supported for the first core network device. In one case, the first core network device is a legacy core network device, that is, the first core network device does not support the user plane data integrity protection function. In this case, the first core network device may not participate in the procedure described in the embodiment shown in FIG. 5. In the other case, the first core network device is an upgraded core network device, that is, the first core network device may support the user plane data integrity protection function. When the first core network device can support the user plane data integrity protection function, participation of the first core network device further needs to be considered in the embodiment shown in FIG. 5. The following provides descriptions.

S520: The first core network device determines second information, where the second information is used to indicate whether to activate the user plane data integrity protection function, or is used to indicate whether the first core network device supports the user plane data integrity protection function.

For example, the first core network device may view whether the first core network device has been configured with information used to indicate whether the user plane data integrity protection function is supported, or has been configured with information used to indicate whether to activate the user plane data integrity protection function. If the first core network device has been configured with the information, the first core network device may directly determine the second information. Alternatively, if the first core network device has not been configured with the information used to indicate whether the user plane data integrity protection function is supported, and has not been configured with the information used to indicate whether to activate the user plane data integrity protection function, the first core network device may obtain, from a subscription database, for example, an HSS, information that is associated with subscription data of the terminal device and that is used to indicate whether the user plane data integrity protection function is supported, or obtain information used to indicate whether to activate the user plane data integrity protection function, and determine the second information based on the obtained information. Alternatively, even if the first core network device has been configured with the information used to indicate whether the user plane data integrity protection function is supported, and/or has been configured with the information used to indicate whether to activate the user plane data integrity protection function, the first core network device may obtain, from a subscription database, for example, an HSS, information that is associated with subscription data of the terminal device and that is used to indicate whether the user plane data integrity protection function is supported, or obtain information used to indicate whether to activate the user plane data integrity protection function, and determine the second information based on the information configured on the first core network device side and the obtained information.

Certainly, if the terminal device transparently transmits the third information to the first core network device through the access network device in S519, the first core network device may further consider the third information when determining the second information. For example, the first core network device may determine the second information based on the third information, the first core network device may determine the second information based on configured information and the third information, or the first core network device may determine the second information based on configured information, information obtained from a server, for example, an HSS, and the third information.

In the first implementation of the second information, the second information may be used to indicate whether to activate the user plane data integrity protection function, or is used to indicate whether the terminal device supports the user plane data integrity protection function.

In the second implementation of the second information, the second information may include second integrity protection policy information, and the second integrity protection policy information is used to indicate whether to activate the user plane data integrity protection function.

For the two implementations of the second information, refer to the foregoing descriptions of the two implementations of the first information. Details are not described again.

When the second information includes the second integrity protection policy information, in an optional manner, the second information may further include second encryption and decryption policy information, and the second encryption and decryption policy information may be used to indicate whether to activate user plane data encryption and decryption functions. The second encryption and decryption policy information is included, so that content included in the second information can be more complete.

For a possible implementation of the second encryption and decryption policy information, refer to the foregoing descriptions of the implementation of the first encryption and decryption policy information. Details are not described again.

S521: The first core network device sends a third message to the access network device, and the access network device receives the third message from the first core network device, where the third message carries the second information.

For example, S520 and S521 may be performed before S511. In addition, S520 and S521 may be performed before S519, or may be performed after S519. In FIG. 5, an example in which S520 and S521 are performed after S519 is used.

In this case, in S511, the access network device may determine the first information based on the second information. For example, the access network device may determine the first information based on the second information and factors such as a transmission rate required after the user plane data integrity protection function is activated and/or load of the access network device. Alternatively, if the access network device receives the third information in S519 in addition to receiving the third message, the access network device may alternatively determine the first information based on the second information and the third information in S511. For example, the access network device may determine the first information based on the second information, the third information, and factors such as a transmission rate required after the user plane data integrity protection function is activated and/or load of the access network device. For a manner of determining the first information by the access network device, refer to the foregoing descriptions.

It can be learned that in this embodiment of this application, negotiation between the devices is performed, so that operations of whether to activate the user plane data integrity protection function can be kept consistent between the devices, thereby reducing a possibility of an error caused by device inconsistency. In addition, according to the method provided in this embodiment of this application, even for an evolved system from a 4G system to a 5G system, user plane data integrity protection can be implemented, to improve data transmission reliability.

According to the method provided in the embodiment shown in FIG. 5, whether to activate the user plane data integrity protection may be determined by using a terminal device as a granularity. In other words, the user plane data integrity protection function may be activated or not for a terminal device. In this case, for all bearers, sessions, or the like of the terminal device, the user plane data integrity protection function is activated or the user plane data integrity protection function is not activated, and a control manner is simple. Alternatively, whether to activate the user plane data integrity protection may be determined by using a bearer or a session as a granularity. For a terminal device, if there are a plurality of bearers, the user plane data integrity protection function may be activated for some bearers, but the user plane data integrity protection function may not be activated for some other bearers, or if a terminal device establishes a plurality of sessions, the user plane data integrity protection function may be activated for some sessions, but the user plane data integrity protection function may not be activated for some other sessions. In this manner, a control granularity is finer. In addition, the embodiment shown in FIG. 5 provides: When the access network device is an upgraded access network device, how to perform processing when the terminal device is a legacy terminal device, how to perform processing when the terminal device is an upgrade terminal device, how to perform processing when the core network device is a legacy core network device, and how to perform processing when the core network device is an upgrade core network device. This includes a combination of various possible states of devices.

In addition, the method provided in the embodiment shown in FIG. 5 may be independently implemented as a brand new procedure, or may be implemented based on some existing execution procedures. To better understand how to implement the embodiment shown in FIG. 5, the following uses several embodiments as examples for description. In the following description process, an example in which the embodiment shown in FIG. 5 is implemented based on an existing procedure is mainly used. For independent implementation of the embodiment shown in FIG. 5 as a brand new procedure, directly refer to the embodiment shown in FIG. 5.

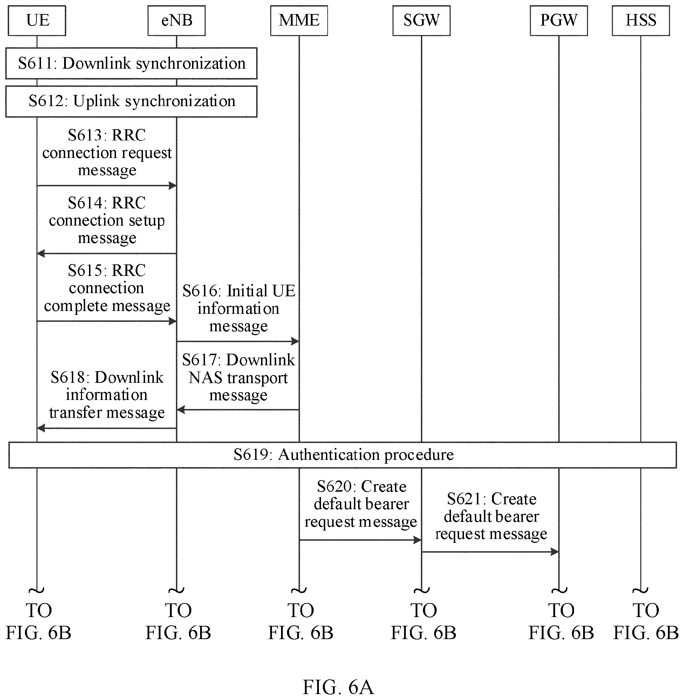

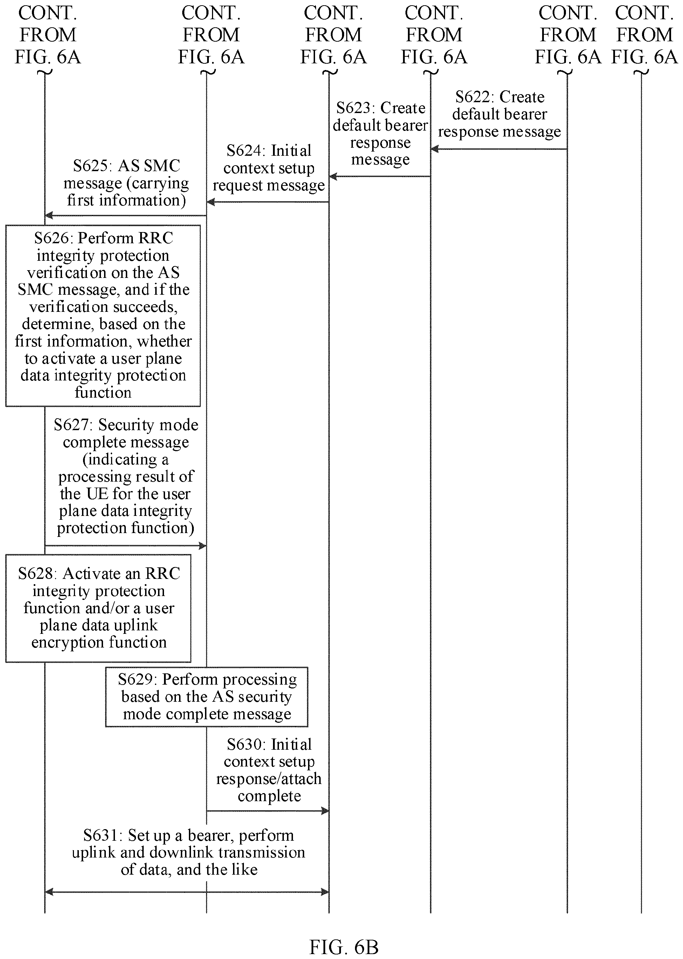

In a first example of the embodiment shown in FIG. 5, the embodiment shown in FIG. 5 may be performed based on an attach procedure. FIG. 6A and FIG. 6B are a flowchart of the example. An eNB in the embodiment shown in FIG. 6A and FIG. 6B may be an example of the access network device in the embodiment shown in FIG. 5. UE in the embodiment shown in FIG. 6A and FIG. 6B may be an example of the terminal device in the embodiment shown in FIG. 5. An MME in the embodiment shown in FIG. 6A and FIG. 6B may be an example of the first core network device in the embodiment shown in FIG. 5. In the embodiment shown in FIG. 6A and FIG. 6B, an example in which the UE is legacy UE, the eNB is an upgraded eNB, and the MME is a legacy MME or an upgraded MME is used.
S611: The UE performs downlink synchronization.
S612: The UE performs uplink synchronization.
S613: The UE sends an RRC connection request message to the eNB, and the eNB receives the RRC connection request message from the UE.
S614: The eNB sends an RRC connection setup message to the UE, and the UE receives the RRC connection setup message from the eNB.
S615: The UE sends an RRC connection setup complete message to the eNB, and the eNB receives the RRC connection setup complete message from the UE.
S616: The eNB sends an initial UE information message to the MME, and the MME receives the initial UE information message from the eNB.
S617: The MME sends a downlink NAS transport message to the eNB, and the eNB receives the downlink NAS transport message from the MME.
S618: The eNB sends a downlink information transfer message to the UE, and the UE receives the downlink information transfer message from the eNB.
S619: The UE initiates an authentication procedure. For a specific authentication procedure, refer to an authentication procedure in an attach procedure in an existing 4G system.
S620: The MME sends a create default bearer request (create default bearer request) message to an SGW, and the SGW receives the create default bearer request message from the MME
S621: The SGW sends the create default bearer request message to a PGW, and the PGW receives the create default bearer request message from the SGW.
S622: The PGW sends a create default bearer response (create default bearer response) message to the SGW, and the SGW receives the create default bearer response message from the PGW.
S623: The SGW sends the create default bearer response message to the MME, and the MME receives the create default bearer response message from the SGW.
S624: The MME sends an initial context setup request (initial context setup request) message to the eNB, and the eNB receives the initial context setup request message from the MME
S611 to S624 are a normal process in which legacy UE initiates an initial attach to the MME and a possible authentication procedure. For a user plane security policy herein, especially, for a user plane data integrity protection policy, participation of the first core network device is not considered temporarily, that is, participation of the MME is not considered. There are two cases in which the MME does not perform participation.
   a. The MME is a legacy MME. The MME is not upgraded, and is not configured with or cannot obtain, from an HSS, a data network (data network, DN), or the like, user plane data integrity protection policy information of subscribed UE, user plane data integrity protection indication information of the UE, or similar information.
   b. The MME is an upgraded MME. The MME is upgraded. In addition, similar to a core network device SMF in a 5G system, the MME may obtain user plane data integrity protection policy information of subscribed UE from an HSS or a DN. Alternatively, the MME may be configured with user plane data integrity protection policy information or user plane data integrity protection indication information of the UE. However, user plane data integrity protection mainly occurs on a Uu interface, that is, between the UE and the eNB. In this case, the upgraded MME may not deliver a policy or suggestion about whether to enable the user plane data integrity protection function on the Uu interface, and the eNB negotiates with the UE.

Therefore, in the embodiment shown in FIG. 6A and FIG. 6B, for S611 to S624, refer to S111 to S124 in the procedure shown in FIG. 1A and FIG. 1B.

In the following, S625 to S631 are an AS SMC procedure. The embodiment shown in FIG. 6A and FIG. 6B is completed based on the AS SMC procedure between the UE and the eNB.

S625: The eNB sends an AS SMC message to the UE, and the UE receives the AS SMC message from the eNB, where the AS SMC message includes first information. In this case, the AS SMC message may be considered as a first message.

For descriptions of the first information, refer to the embodiment shown in FIG. 5.

Integrity protection for the AS SMC message can be performed by using an RRC integrity protection key. That is, the eNB enables RRC integrity protection.

S626: The UE performs RRC integrity protection verification on the AS SMC message, and if the verification succeeds, the UE determines, based on the first information, whether to activate a user plane data integrity protection function.

In the embodiment shown in FIG. 6A and FIG. 6B, the UE is the legacy UE. Therefore, for a specific determining manner of determining, by the UE, based on the first information, whether to activate the user plane data integrity protection function, refer to the descriptions of S513 in the embodiment shown in FIG. 5.

S627: The UE sends an AS security mode complete message to the eNB, and the eNB receives the AS security mode complete message from the UE.

For example, the AS security mode complete message may be an example of the second message described in the embodiment shown in FIG. 5. In this case, the AS security mode complete message may indicate a processing result of the terminal device for the user plane data integrity protection function. For specific content of the processing result, refer to the related descriptions in the embodiment shown in FIG. 5.

In addition, the AS security mode complete message may further carry a MAC-I.

S628: After sending the AS security mode complete message, the UE may activate an RRC integrity protection function and/or a user plane data uplink encryption function.

S629: The eNB performs processing based on the AS security mode complete message.

For S629, refer to the descriptions of S515 in the embodiment shown in FIG. 5.

S630: The eNB and the MME continue to perform a procedure such as an initial UE context setup response/attach complete procedure with each other.

S631: The UE and the MME continue to set up a bearer, perform uplink and downlink transmission of user data, and the like with each other. In this case, integrity protection is not performed on user plane data.

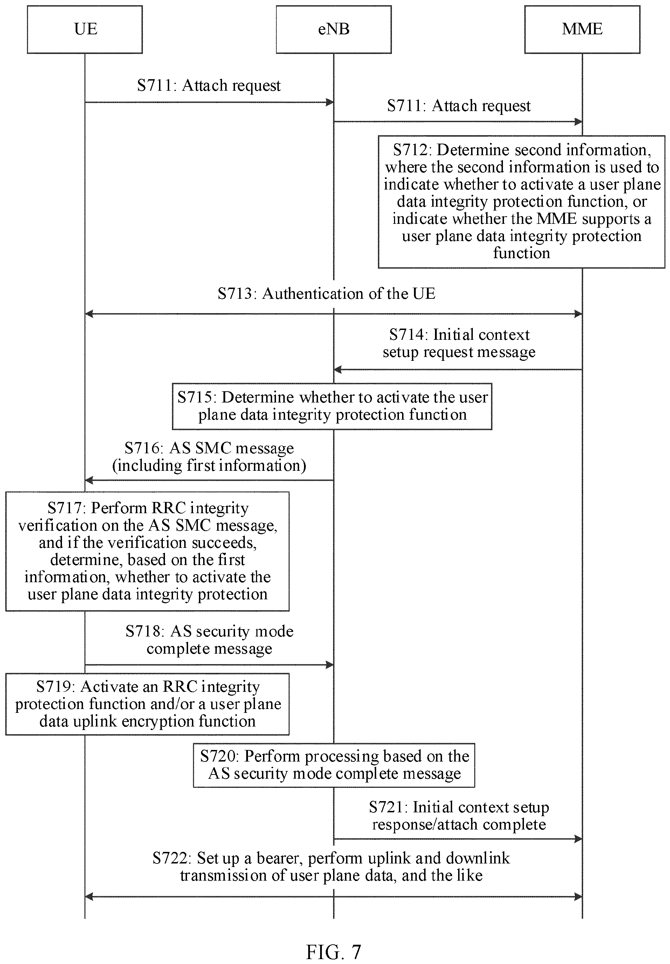

In a second example of the embodiment shown in FIG. 5, the embodiment shown in FIG. 5 may be performed based on an attach procedure. FIG. 7 is a flowchart of the example. A main difference between the embodiment shown in FIG. 7 and the embodiment shown in FIG. 6A and FIG. 6B lies in that, in the embodiment shown in FIG. 7, the first core network device also participates in determining whether to activate the user plane data integrity protection function. An eNB in the embodiment shown in FIG. 7 may be an example of the access network device in the embodiment shown in FIG. 5. UE in the embodiment shown in FIG. 7 may be an example of the terminal device in the embodiment shown in FIG. 5. An MME in the embodiment shown in FIG. 7 may be an example of the first core network device in the embodiment shown in FIG. 5. In the embodiment shown in FIG. 7, an example in which the UE is legacy UE, the eNB is an upgraded eNB, and the MME is an upgraded MME is used.

S711: The UE sends an attach request to the MME through the eNB, and the MME receives the attach request from the UE through the eNB.

For example, the attach request may include the third information in the embodiment shown in FIG. 5. In this case, it may also be considered that a message that carries the attach request and that is forwarded by the eNB to the MME is the fourth message in the embodiment shown in FIG. 5. The third information may be used to indicate whether to activate a user plane data integrity protection function, or is used to indicate whether the terminal device supports a user plane data integrity protection function. For the third information, refer to related descriptions in the embodiment shown in FIG. 5.

S712: The MME determines second information, where the second information is used to indicate whether to activate the user plane data integrity protection function, or is used to indicate whether the MME supports the user plane data integrity protection function.

The MME may determine the second information based on the third information, or the MME may determine the second information based on the second information and other information. For example, the MME may view whether the MME has been configured with information used to indicate whether the user plane data integrity protection function is supported, or has been configured with information used to indicate whether to activate the user plane data integrity protection function. If the MME has been configured with the information, the MME may determine the second information based on the configured information and the third information. Alternatively, if the MME has not been configured with the information used to indicate whether the user plane data integrity protection function is supported, and has not been configured with the information used to indicate whether to activate the user plane data integrity protection function, the MME may obtain, from a subscription database, for example, an HSS, information that is associated with subscription data of the UE and that is used to indicate whether the user plane data integrity protection function is supported, or obtain information used to indicate whether to activate the user plane data integrity protection function, and determine the second information based on the obtained information and the third information. Alternatively, even if the MME has been configured with the information used to indicate whether the user plane data integrity protection function is supported, and/or has been configured with the information used to indicate whether to activate the user plane data integrity protection function, the MME may obtain, from a subscription database, for example, an HSS, information that is associated with subscription data of the UE and that is used to indicate whether the user plane data integrity protection function is supported, or obtain information used to indicate whether to activate the user plane data integrity protection function, and determine the second information based on the information configured on the MME side, the obtained information, and the third information.

S713: The UE and the MME perform mutual authentication.

S714: The MME sends an initial context setup request (initial context setup request) message to the eNB, and the eNB receives the initial context setup request message from the MME

For example, the initial context setup request message may be an example of the third message in the embodiment shown in FIG. 5. The initial context setup request message may carry the third information, to avoid a replay attack. In addition, the initial context setup request message may further carry the second information.

S715: The eNB determines whether to activate the user plane data integrity protection function.

For example, the eNB may determine, based on information carried in the initial context setup request message, whether to activate the user plane data integrity protection function, or may determine, based on information carried in the initial context setup request message and related information of the eNB (for example, a transmission rate required after the user plane data integrity protection is activated and/or load of the eNB), whether to activate the user plane data integrity protection function. Correspondingly, the eNB may also determine the first information in the embodiment shown in FIG. 5. In this case, for how the eNB determines whether to activate the user plane data integrity protection function or how to determine the first information, refer to related descriptions in the embodiment shown in FIG. 5.

S716: The eNB sends an AS SMC message to the UE, and the UE receives the AS SMC message from the eNB, where the AS SMC message includes the first information. In this case, the AS SMC message may be considered as a first message.

S717: The UE performs RRC integrity protection verification on the AS SMC message, and if the verification succeeds, the UE determines, based on the first information, whether to activate the user plane data integrity protection function.

S718: The UE sends an AS security mode complete message to the eNB, and the eNB receives the AS security mode complete message from the UE.

S719: After sending the AS security mode complete message, the UE may activate an RRC integrity protection function and/or a user plane data uplink encryption function.

S720: The eNB performs processing based on the AS security mode complete message.

S721: The eNB and the MME continue to perform a procedure such as an initial context setup response/attach complete procedure with each other.

S722: The UE and the MME continue to set up a bearer, perform uplink and downlink transmission of user plane data, and the like with each other. In this case, integrity protection is not performed on the user plane data.

In the embodiment shown in FIG. 7, the UE is the legacy UE. Therefore, for S716 to S722, refer to S625 to S631 in the embodiment shown in FIG. 6A and FIG. 6B.

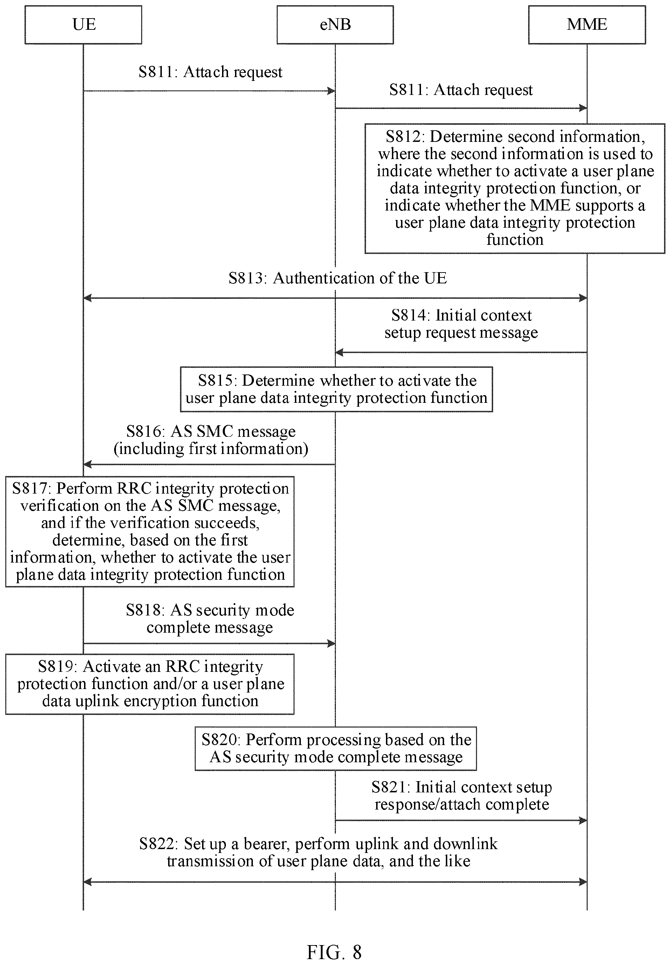

In a third example of the embodiment shown in FIG. 5, the embodiment shown in FIG. 5 may be performed based on an attach procedure. FIG. 8 is a flowchart of the example. A main difference between the embodiment shown in FIG. 8 and the embodiment shown in FIG. 6A and FIG. 6B and between the embodiment shown in FIG. 8 and the embodiment shown in FIG. 7 lies in that in the embodiment shown in FIG. 8, the terminal device is also an upgraded terminal device. An eNB in the embodiment shown in FIG. 8 may be an example of the access network device in the embodiment shown in FIG. 5. UE in the embodiment shown in FIG. 8 may be an example of the terminal device in the embodiment shown in FIG. 5. An MME in the embodiment shown in FIG. 8 may be an example of the first core network device in the embodiment shown in FIG. 5. In the embodiment shown in FIG. 8, an example in which the UE is upgraded UE, the eNB is an upgraded eNB, and the MME is an upgraded MME is used.

S811: The UE sends an attach request to the MME through the eNB, and the MME receives the attach request from the UE through the eNB.

S812: The MME determines second information, where the second information is used to indicate whether to activate a user plane data integrity protection function, or is used to indicate whether the MME supports a user plane data integrity protection function.

S813: The UE and the MME perform mutual authentication.

S814: The MME sends an initial context setup request message to the eNB, and the eNB receives the initial context setup request message from the MME

The initial context setup request message may carry the second information. Therefore, the initial context setup request message may be used as an example of the third message in the embodiment shown in FIG. 5.

S815: The eNB determines whether to activate user plane data integrity protection.

S816: The eNB sends an AS SMC message to the UE, and the UE receives the AS SMC message from the eNB, where the AS SMC message includes the first information in the embodiment shown in FIG. 5. In this case, the AS SMC message may be considered as an example of the first message in the embodiment shown in FIG. 5.

For S811 to S816, refer to S711 to S716 in the embodiment shown in FIG. 7.

S817: The UE performs RRC integrity protection verification on the AS SMC message, and if the verification succeeds, the UE determines, based on the first information, whether to activate the user plane data integrity protection function.

In the embodiment shown in FIG. 8, the UE is the upgraded UE. Therefore, for how the UE determines, based on the first information, whether to activate the user plane data integrity protection function, refer to the descriptions of S516 in the embodiment shown in FIG. 5.

S818: The UE sends an AS security mode complete message to the eNB, and the eNB receives the AS security mode complete message from the UE.

The AS security mode complete message may be considered as an example of the fifth message in the embodiment shown in FIG. 5. In this case, the AS security mode complete message may be used to indicate whether to activate the user plane data integrity protection function. For a specific indication manner, refer to the descriptions of the fifth message in the embodiment shown in FIG. 5. In addition, the AS security mode complete message may further include parameters such as a MAC-I.

S819: After sending the AS security mode complete message, the UE may activate an RRC integrity protection function and/or a user plane data uplink encryption function.

In addition, if the UE determines that the UE supports the user plane data integrity protection function and determines that the user plane data integrity protection function can be activated, after S819, the UE may also activate the user plane data integrity protection function.

S820: The eNB performs processing based on the AS security mode complete message.

For a processing manner of the eNB, refer to the descriptions of S518 in the embodiment shown in FIG. 5.

S821: The eNB and the MME continue to perform a procedure such as an initial context setup response/attach complete procedure with each other.

S822: The UE and the MME continue to set up a bearer, perform uplink and downlink transmission of user data, and the like with each other. In this case, integrity protection may be or may not be performed on user plane data.

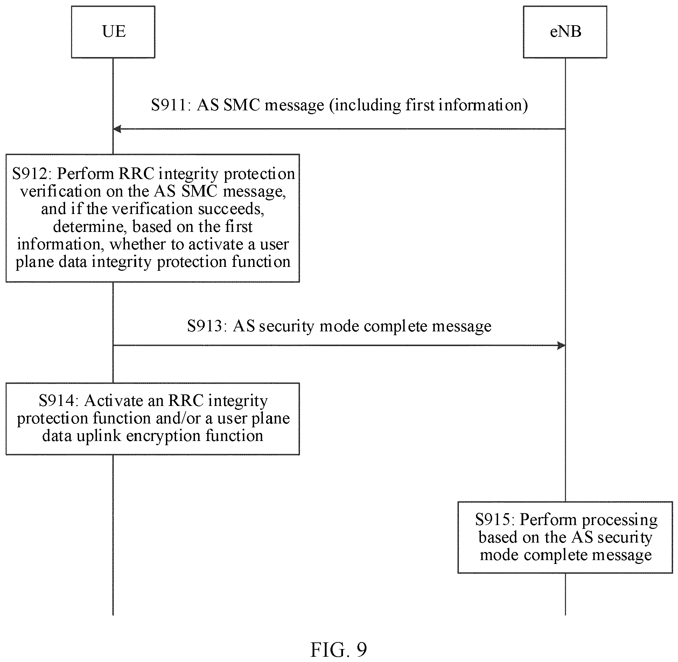

In a fourth example of the embodiment shown in FIG. 5, the embodiment shown in FIG. 5 may be performed based on an attach procedure. FIG. 9 is a flowchart of the example. In the embodiment shown in FIG. 9, a first core network device is not involved, and only interaction between a terminal device and an access network device is involved. An eNB in the embodiment shown in FIG. 9 may be an example of the access network device in the embodiment shown in FIG. 5, and UE in the embodiment shown in FIG. 9 may be an example of the terminal device in the embodiment shown in FIG. 5. In the embodiment shown in FIG. 9, an example in which the UE is upgraded UE and the eNB is an upgraded eNB is used.

Specifically, in the embodiment shown in FIG. 9, an AS SMC procedure in the attach procedure may be used. Therefore, another process in the attach procedure is not described in detail in the embodiment shown in FIG. 9.

S911: The eNB sends an AS SMC message to the UE, and the UE receives the AS SMC message from the eNB, where the AS SMC message includes first information. In this case, the AS SMC message may be considered as a first message.

For descriptions of the first information, refer to the embodiment shown in FIG. 5.

Integrity protection for the AS SMC message can be performed by using an RRC integrity protection key. That is, the eNB enables RRC integrity protection.

In addition, the eNB may activate RRC integrity protection before sending the AS SMC message.

S912: The UE performs RRC integrity protection verification on the AS SMC message, and if the verification succeeds, the UE determines, based on the first information, whether to activate a user plane data integrity protection function.

In the embodiment shown in FIG. 9, the UE is the upgraded UE. Therefore, for how the UE determines, based on the first information, whether to activate the user plane data integrity protection function, refer to the descriptions of S516 in the embodiment shown in FIG. 5.

S913: The UE sends an AS security mode complete message to the eNB, and the eNB receives the AS security mode complete message from the UE.

The AS security mode complete message may be considered as an example of the fifth message in the embodiment shown in FIG. 5. In this case, the AS security mode complete message may be used to indicate whether to activate the user plane data integrity protection function. For a specific indication manner, refer to the descriptions of the fifth message in the embodiment shown in FIG. 5. In addition, the AS security mode complete message may further include parameters such as a MAC-I.

S914: After sending the AS security mode complete message, the UE may activate an RRC integrity protection function and/or a user plane data uplink encryption function.

S915: The eNB performs processing based on the AS security mode complete message.

For a processing manner of the eNB, refer to the descriptions of S518 in the embodiment shown in FIG. 5. In the embodiment shown in FIG. 9, for example, the eNB also supports the user plane data integrity protection function, or the first information sent by the eNB indicates to activate the user plane data integrity protection function, or indicates that the user plane data integrity protection function needs to be activated, or indicates that the eNB tends to activate the user plane data integrity protection function. Therefore, the eNB may activate the user plane data integrity protection function. Specifically, the eNB may activate an uplink integrity protection function and a downlink integrity verification function of user plane data. In addition, the eNB may further activate functions such as RRC integrity protection and user plane data uplink decryption.

For another step, refer to the descriptions of the embodiment shown in FIG. 8 or related descriptions in another embodiment.

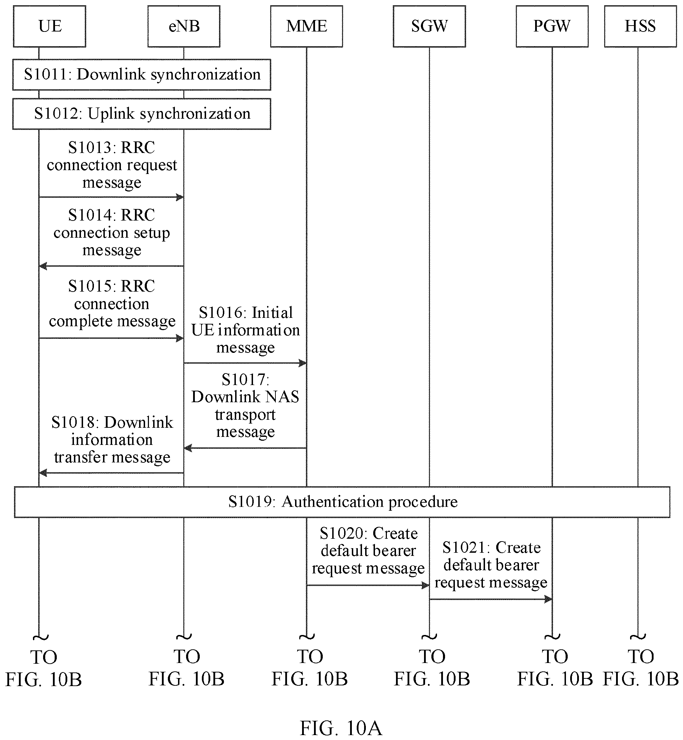

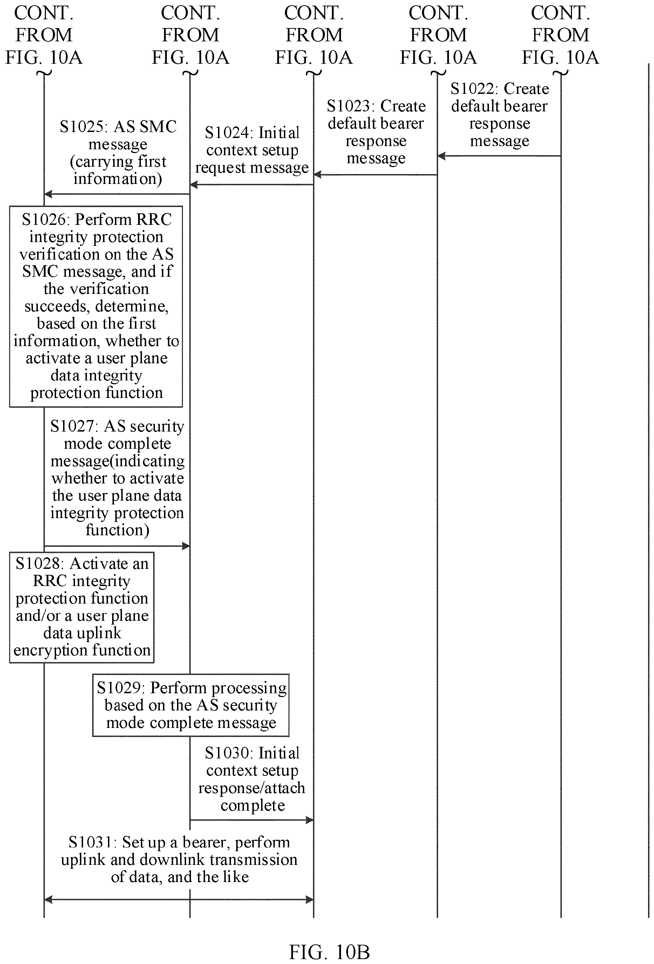

In a fifth example of the embodiment shown in FIG. 5, the embodiment shown in FIG. 5 may be performed based on an attach procedure. FIG. 10A and FIG. 10B are a flowchart of the example. In the embodiment shown in FIG. 10A and FIG. 10B, an MME is a legacy MME. An eNB in the embodiment shown in FIG. 10A and FIG. 10B may be an example of the access network device in the embodiment shown in FIG. 5. UE in the embodiment shown in FIG. 10A and FIG. 10B may be an example of the terminal device in the embodiment shown in FIG. 5. The MME in the embodiment shown in FIG. 10A and FIG. 10B may be an example of the first core network device in the embodiment shown in FIG. 5. In the embodiment shown in FIG. 10A and FIG. 10B, an example in which the UE is upgraded UE, the eNB is an upgraded eNB, and the MME is the legacy MME is used.
S1011: The UE performs downlink synchronization.
S1012: The UE performs uplink synchronization.
S1013: The UE sends an RRC connection request message to the eNB, and the eNB receives the RRC connection request message from the UE.
S1014: The eNB sends an RRC connection setup message to the UE, and the UE receives the RRC connection setup message from the eNB.
S1015: The UE sends an RRC connection setup complete message to the eNB, and the eNB receives the RRC connection setup complete message from the UE.
S1016: The eNB sends an initial UE information message to the MME, and the MME receives the initial UE information message from the eNB.
S1017: The MME sends a downlink NAS transport message to the eNB, and the eNB receives the downlink NAS transport message from the MME.
S1018: The eNB sends a downlink information transfer message to the UE, and the UE receives the downlink information transfer message from the eNB.
S1019: The UE initiates an authentication procedure. For a specific authentication procedure, refer to an authentication procedure in an attach procedure in an existing 4G system.
S1020: The MME sends a create default bearer request message to an SGW, and the SGW receives the create default bearer request message from the MME
S1021: The SGW sends the create default bearer request message to a PGW, and the PGW receives the create default bearer request message from the SGW.
S1022: The PGW sends a create default bearer response message to the SGW, and the SGW receives the create default bearer response message from the PGW.
S1023: The SGW sends the create default bearer response message to the MME, and the MME receives the create default bearer response message from the SGW.
S1024: The MME sends an initial context setup request message to the eNB, and the eNB receives the initial context setup request message from the MME

For S1011 to S1024, refer to S611 to S624 in the embodiment shown in FIG. 6A and FIG. 6B.

S1025: The eNB sends an AS SMC message to the UE, and the UE receives the AS SMC message from the eNB, where the AS SMC message includes first information. In this case, the AS SMC message may be considered as a first message.

For descriptions of the first information, refer to the embodiment shown in FIG. 5.

Integrity protection for the AS SMC message can be performed by using an RRC integrity protection key. That is, the eNB enables RRC integrity protection.

S1026: The UE performs RRC integrity protection verification on the AS SMC message, and if the verification succeeds, the UE determines, based on the first information, whether to activate a user plane data integrity protection function.

In the embodiment shown in FIG. 10A and FIG. 10B, the UE is the upgraded UE. Therefore, for how the UE determines, based on the first information, whether to activate the user plane data integrity protection function, refer to the descriptions of S516 in the embodiment shown in FIG. 5.

S1027: The UE sends an AS security mode complete message to the eNB, and the eNB receives the AS security mode complete message from the UE.

The AS security mode complete message may be considered as an example of the fifth message in the embodiment shown in FIG. 5. In this case, the AS security mode complete message may be used to indicate whether to activate the user plane data integrity protection function. For a specific indication manner, refer to the descriptions of the fifth message in the embodiment shown in FIG. 5. In addition, the AS security mode complete message may further include parameters such as a MAC-I.

S1028: After sending the AS security mode complete message, the UE may activate an RRC integrity protection function and/or a user plane data uplink encryption function.

In addition, if the UE determines that the UE supports the user plane data integrity protection function and determines that the user plane data integrity protection function can be activated, after S1027, the UE may also activate the user plane data integrity protection function.

S1029: The eNB performs processing based on the AS security mode complete message.

For a processing manner of the eNB, refer to the descriptions of S518 in the embodiment shown in FIG. 5.

S1030: The eNB and the MME continue to perform a procedure such as an initial UE context setup response/attach complete procedure with each other.

S1031: The UE and the MME continue to set up a bearer, perform uplink and downlink transmission of user data, and the like with each other. In this case, integrity protection may be or may not be performed on user plane data.

In the foregoing embodiments shown in FIG. 6A and FIG. 6B to FIG. 9, an example in which the method provided in the embodiment shown in FIG. 5 is based on an attach procedure is used. If the method provided in the embodiment shown in FIG. 5 is based on the attach procedure, whether to activate user plane data integrity protection is determined by using a terminal device as a granularity. The following further describes a sixth example of the embodiment shown in FIG. 5. In this example, the method provided in the embodiment shown in FIG. 5 is based on a bearer setup procedure. If the method provided in the embodiment shown in FIG. 5 is based on the bearer setup procedure, whether to activate user plane data integrity protection is determined by using a bearer as a granularity.

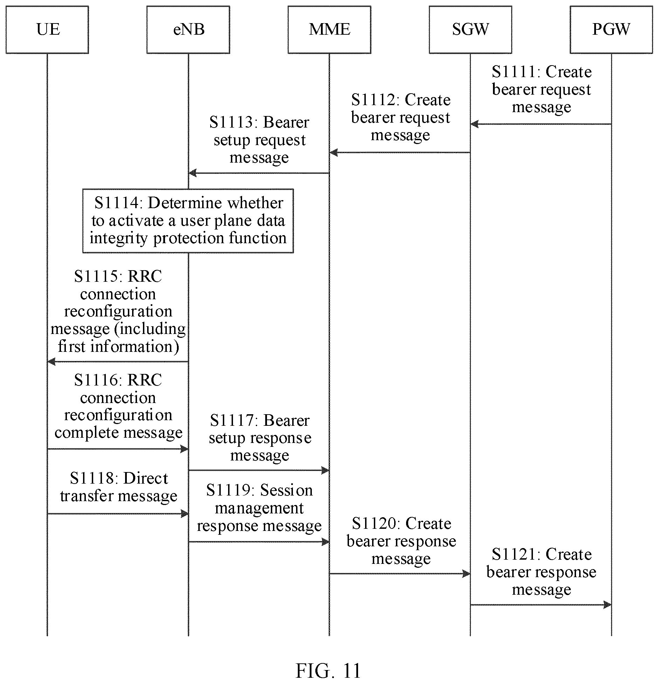

FIG. 11 is a flowchart of the example. An eNB in the embodiment shown in FIG. 11 may be an example of the access network device in the embodiment shown in FIG. 5, and UE in the embodiment shown in FIG. 11 may be an example of the terminal device in the embodiment shown in FIG. 5. In the embodiment shown in FIG. 11, an example in which the UE is upgraded UE, the eNB is an upgraded eNB, and the MME is an upgraded MME is used.

S1111: A PGW sends a create bearer request (create bearer request) message to an SGW, and the SGW receives the create bearer request message from the PGW.

S1112: The SGW forwards the create bearer request message to the MME, and the MME receives the create bearer request message from the SGW.

S1113: The MME sends a bearer setup request (bearer setup request) message to the eNB, and the eNB receives the bearer setup request message from the MME

The bearer setup request may carry the second information in the embodiment shown in FIG. 5. In this case, the bearer setup request may be used as an example of the third message in the embodiment shown in FIG. 5. Certainly, in the embodiment shown in FIG. 11, the second information is used to indicate whether to activate a user plane data integrity protection function for a currently set up bearer, or is used to indicate whether the MME supports a user plane data integrity protection function.

For content such as how the MME determines the second information and an indication manner of the second information, refer to related descriptions in the embodiment shown in FIG. 5.

Alternatively, in S1113, the MME may send a session management request (session management request) to the eNB.

S1114: The eNB determines whether to activate the user plane data integrity protection function.

For S1114, refer to the descriptions of S715 in the embodiment shown in FIG. 7. Certainly, in S1114, the eNB determines whether to activate user plane data integrity protection for the currently set up bearer.

S1115: The eNB sends an RRC connection reconfiguration message to the UE, and the UE receives the RRC connection reconfiguration message from the eNB. The RRC connection reconfiguration message may include the first information in the embodiment shown in FIG. 5. Therefore, the RRC connection reconfiguration message may be considered as an example of the first message in the embodiment shown in FIG. 5.

For descriptions of the first information, refer to the embodiment shown in FIG. 5.

S1116: The UE sends an RRC connection reconfiguration complete message to the eNB, and the eNB receives the RRC connection reconfiguration complete message from the UE.

The RRC connection reconfiguration complete message may be considered as an example of the fifth message in the embodiment shown in FIG. 5. In this case, the RRC connection reconfiguration complete message may be used to indicate whether to activate the user plane data integrity protection function. For a specific indication manner, refer to the descriptions of the fifth message in the embodiment shown in FIG. 5. In addition, the RRC connection reconfiguration complete message may further include parameters such as a MAC-I.

S1117: The eNB sends a bearer setup response (bearer setup response) message to the MME, and the MME receives the bearer setup response message from the eNB.

S1118: The UE sends a direct transfer (direct transfer) message to the eNB, and the eNB receives the direct transfer message from the UE.

S1119: The eNB sends a session management response (session management response) message to the MME, and the MME receives the session management response message from the eNB.

S1120: The MME sends a create bearer response (create bearer response) message to the SGW, and the SGW receives the create bearer response message from the MME

S1121: The SGW forwards the create bearer response message to the PGW, and the PGW receives the create bearer response message from the SGW.

In this case, the bearer setup is complete, or the bearer setup fails.

In the embodiment shown in FIG. 11, an example in which the method provided in the embodiment shown in FIG. 5 is based on a bearer setup procedure is used, or the method provided in the embodiment shown in FIG. 5 may be based on a session establishment procedure, for example, may be based on a PDU session establishment procedure in a 5G system. For example, if a RAN needs to send the first information to the UE, the RAN may include the first information in an RRC connection reconfiguration message or an AS SMC message and send the RRC connection reconfiguration message or the AS SMC message to the UE. Alternatively, if the RAN includes the first information in an RRC connection reconfiguration message and sends the RRC connection reconfiguration message to the UE, if the UE needs to send the fifth information to the RAN, the UE may include the fifth information in an RRC connection reconfiguration complete message and send the RRC connection reconfiguration complete message to the RAN. Alternatively, if the RAN includes the first information in an AS SMC and sends the AS SMC to the UE, if the UE needs to send the fifth information to the RAN, the UE may include the fifth information in an AS security mode complete message and send the AS security mode complete message to the RAN, or the like. The PDU session establishment procedure in the 5G system is a known procedure. Therefore, no more example is provided.

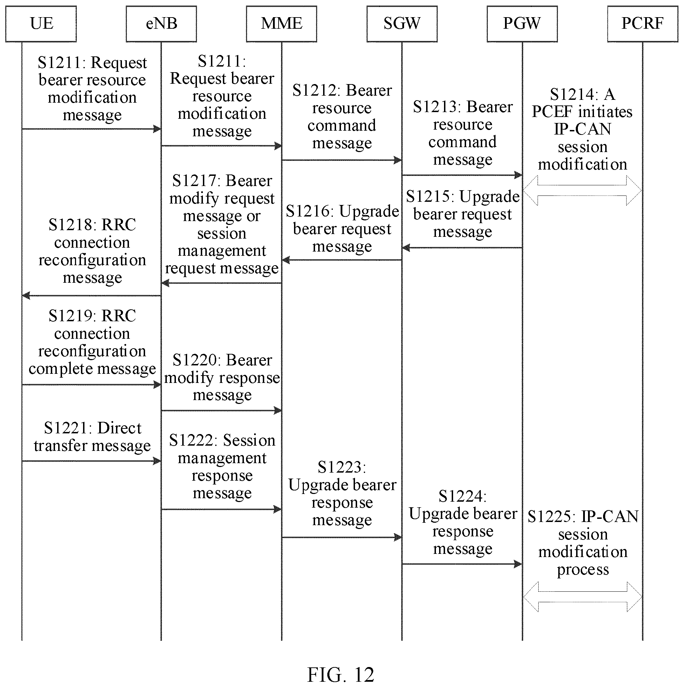

In the seventh example of the embodiment shown in FIG. 5, an example in which the method provided in the embodiment shown in FIG. 5 is based on a bearer modify procedure is used. If the method provided in the embodiment shown in FIG. 5 is based on the bearer modify procedure, whether to activate user plane data integrity protection is also determined by using a bearer as a granularity. FIG. 12 is a flowchart of the example. An eNB in the embodiment shown in FIG. 12 may be an example of the access network device in the embodiment shown in FIG. 5, and UE in the embodiment shown in FIG. 12 may be an example of the terminal device in the embodiment shown in FIG. 5. In the embodiment shown in FIG. 12, an example in which the eNB is an upgraded eNB is used.

S1211: UE sends a request bearer resource modification (request bearer resource modification) message to an MME through the eNB, and the MME receives the request bearer resource modification message from the UE through the eNB.

The request bearer resource modification message may carry the third information described in the embodiment shown in FIG. 5. In this case, the request bearer resource modification message may be considered as an example of the fourth message in the embodiment shown in FIG. 5.

For content indicated by the third information, refer to related descriptions in the embodiment shown in FIG. 5.
S1212: The MME sends a bearer resource command (bearer resource command) message to an SGW, and the SGW receives the bearer resource command message from the MME
S1213: The SGW forwards the bearer resource command message to a PGW, and the PGW receives the bearer resource command message from the SGW.
S1214: The PGW performs policy and charging enforcement function (policy and charging enforcement function, PCEF) initiated (initiated) internet protocol connectivity access network (IP-connectivity access network, IP-CAN) session modification (session modification) with a policy and charging rules function (policy and charging rules function, PCRF) network element.
S1215: The PGW sends an upgrade bearer request (update bearer request) message to the SGW, and the SGW receives the upgrade bearer request message from the PGW.
S1216: The SGW forwards the upgrade bearer request message to the MME, and the MME receives the upgrade bearer request message from the SGW.
S1217: The MME sends a bearer modify request (bearer modify request) message or a session management request (session management request) message to the eNB, and the eNB receives the bearer modify request message or the session management request message from the MME.

For example, if the MME is an upgraded MME, and the MME participates in determining whether to activate a user plane data integrity protection function, the bearer modify request or the session management request may carry the second information. In this case, the bearer modify request or the session management request that carries the second information may be considered as an example of the third message in the embodiment shown in FIG. 5.

For specific content of the second information, refer to the embodiment shown in FIG. 5.

S1218: The eNB sends an RRC connection reconfiguration message to the UE.

If the bearer modify request or the session management request sent by the MME does not carry the second information in S1217, the eNB may determine the first information in the embodiment shown in FIG. 5. Alternatively, if the bearer modify request or the session management request sent by the MME carries the second information in S1217, the eNB may determine the first information in the embodiment shown in FIG. 5 with reference to the second information. For a process in which the eNB determines the first information, refer to related descriptions in the embodiment shown in FIG. 5.

The eNB may include the first information in the RRC connection reconfiguration message and send the RRC connection reconfiguration message to the UE. In this case, the RRC connection reconfiguration message may be considered as an example of the first message in the embodiment shown in FIG. 5.

S1219: The UE sends an RRC connection reconfiguration complete message to the eNB, and the eNB receives the RRC connection reconfiguration complete message from the UE.

If the UE is legacy UE, for a processing manner used after the UE receives the RRC connection reconfiguration message, refer to S513 in FIG. 5. In this case, the RRC connection reconfiguration complete message in S1219 may be considered as an example of the second message in the embodiment shown in FIG. 5.

Alternatively, if the UE is upgraded UE, for a processing manner used after the UE receives the RRC connection reconfiguration message, refer to S516 in FIG. 5. In this case, the RRC connection reconfiguration complete message in S1219 may be considered as an example of the fifth message in the embodiment shown in FIG. 5.

The eNB may further determine, based on the RRC connection reconfiguration complete message, whether to activate the user plane data integrity protection function.
S1220: The eNB sends a bearer modify response (bearer modify response) message to the MME, and the MME receives the bearer modify response message from the eNB.
S1221: The UE sends a direct transfer message to the eNB, and the eNB receives the direct transfer message from the UE.
S1222: The eNB sends a session management response message to the MME, and the MME receives the session management response message from the eNB.
S1223: The MME sends an upgrade bearer response (update bearer response) message to the SGW, and the SGW receives the upgrade bearer response message from the MME
S1224: The SGW forwards the upgrade bearer response message to the PGW, and the PGW receives the upgrade bearer response message from the SGW.
S1225: The PGW and the PCRF perform an IP-CAN session modification process with each other.

In each of the embodiments shown in FIG. 5 to FIG. 12, an example in which the access network device is an upgraded access network device is used. In the following, an embodiment of this application provides a second type of communication method. In the communication method, the access network device is a legacy access network device.

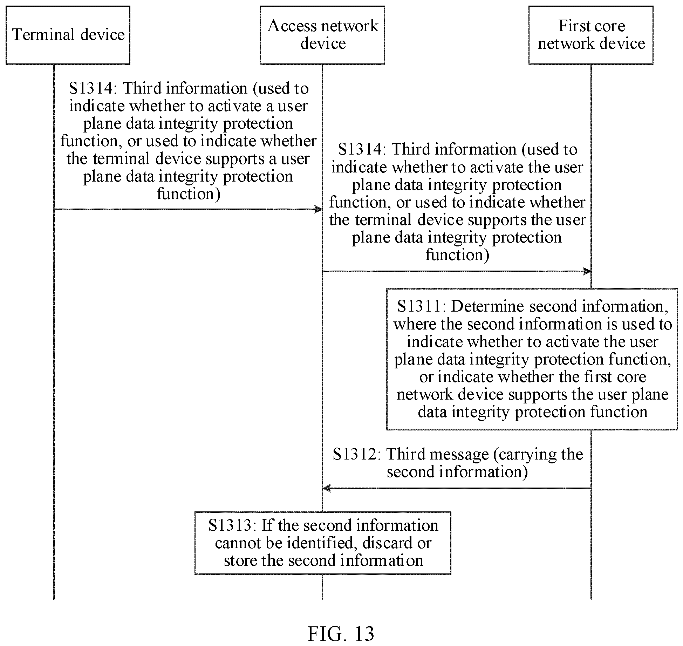

FIG. 13 is a flowchart of the method. In the following description process, an example in which the method is applied to the network architecture shown in FIG. 4 is still used. Therefore, an access network device described below is, for example, the access network device 1 in the network architecture shown in FIG. 4, a first core network device described below is, for example, the core network device 1 in the network architecture shown in FIG. 4, and a terminal device described below may be the terminal device in the network architecture shown in FIG. 4.

S1311: The first core network device determines second information, where the second information is used to indicate whether to activate a user plane data integrity protection function, or is used to indicate whether the first core network device supports a user plane data integrity protection function.

For S1311, refer to S520 in the embodiment shown in FIG. 5.

If the first core network device is an upgraded core network device, S1311 and S1312 are performed. However, if the first core network device is a legacy core network device, S1311 and S1312 may alternatively not be performed.

S1312: The first core network device sends a third message to the access network device, and the access network device receives the third message from the first core network device, where the third message carries the second information.

S1313: If the access network device cannot identify the second information, the access network device discards or stores the second information.

After receiving the second message, the access network device may have the following possible processing manners.

In a processing manner 1, if the access network device cannot identify the second information, the access network device may discard the second information or skip the second information. In this case, the access network device does not process the second information. In this case, a processing result of the access network device for user plane data integrity protection may be considered as that the access network device does not activate the user plane data integrity protection function.

In the processing manner 1, the access network device may discard or skip only the second information. However, if the third message further includes other information, if the access network device can identify the other information included in the third message, the access network device may continue to perform processing such as parsing, to ensure that another procedure is normally performed.

In a processing manner 2, if the access network device cannot identify the second information, the access network device may discard the entire third message or skip the entire third message. In this case, the terminal device does not process the third message. In this case, a processing result of the access network device for user plane data integrity protection may be considered as that the access network device does not activate the user plane data integrity protection function.

In the processing manner 2, the access network device discards the entire third message. In other words, if the third message further includes other information, the access network device does not perform processing such as parsing on the other information included in the third message.

In a processing manner 3, the access network device cannot identify the second information, but the access network device may store the second information, for example, may store the second information in a reserved location, and the access network device does not perform processing, such as parsing, on the second information. In this case, a processing result of the access network device for user plane data integrity protection may be considered as that the access network device does not activate the user plane data integrity protection function.

In the processing manner 3, the access network device may store only the second information. However, if the third message further includes other information, if the access network device can identify the other information included in the third message, the access network device may continue to perform processing such as parsing, to ensure that another procedure is normally performed. Alternatively, in the processing manner 3, the access network device may store the entire third message. In this case, even if the third message further includes other information, the access network device does not perform processing, such as parsing, on the other information included in the third message.

In a processing manner 4, the access network device can identify the second information. However, the access network device is a legacy access network device and cannot support user plane data integrity protection. Therefore, the access network device may discard the second information, or store the second information, and the access network device does not perform processing, such as parsing, on the second information. In this case, a processing result of the access network device for user plane data integrity protection may be considered as that the access network device does not activate the user plane data integrity protection function.

In the processing manner 4, the access network device may store only the second information. However, if the third message further includes other information, if the access network device can identify the other information included in the third message, the access network device may continue to perform processing such as parsing, to ensure that another procedure is normally performed. Alternatively, in the processing manner 4, the access network device may store the entire third message. In this case, even if the third message further includes other information, the access network device does not perform processing, such as parsing, on the other information included in the third message.

The foregoing several processing manners are merely some examples. How to process the second information when the access network device is a legacy access network device is not limited in this embodiment of this application. How the legacy access network device processes the second information may be specified in a protocol, or may be configured by the access network device, or may be determined by the terminal device.

In addition, regardless of which processing manner is used by the access network device to process the second information, because the access network device does not perform processing, such as parsing, on the second information, in an optional manner, the access network device may further send an exception report to the first core network device. If the access network device uses the foregoing processing manner 1, processing manner 2, or processing manner 3, the exception report may be used to indicate that the access network device cannot identify the second information. Alternatively, if the access network device uses the foregoing processing manner 4, the exception report may be used to indicate that the access network device cannot activate the user plane data integrity protection function.

Certainly, that the access network device sends the exception report is only an optional implementation. In another optional implementation, when determining that the access network device cannot identify the second information or does not support activating the user plane data integrity protection function, the access network device may alternatively not send the exception report to the first core network device, but perform processing later for this.

In the embodiment shown in FIG. 13, because the access network device is a legacy access network device, the access network device does not send first information to the terminal device, or first information sent by the access network device indicates not to activate the user plane data integrity protection, indicates that the access network device does not support the user plane data integrity protection, or indicates that the user plane data integrity protection does not need to be activated. For a specific indication manner of the first information, refer to related descriptions in the embodiment shown in FIG. 5. In this case, the terminal device cannot activate the user plane data integrity protection function regardless of whether the terminal device is a legacy terminal device or an upgraded terminal device. If S1311 and S1312 are not performed, in S1313, the access network device may determine that the access network device cannot support the user plane data integrity protection function, or may notify the terminal device after determining that the access network device cannot support the user plane data integrity protection function. In this case, regardless of whether the terminal device is a legacy terminal device or an upgraded terminal device, the terminal device cannot activate the user plane data integrity protection function.

Certainly, in the embodiment shown in FIG. 13, the terminal device may alternatively send third information to the access network device. The third information may be used to indicate whether to activate the user plane data integrity protection function, or may be used to indicate whether the terminal device supports the user plane data integrity protection function. For example, after the terminal device is upgraded or rolled back, the terminal device may send the third information, to notify a network side of a new capability of the terminal device. For example, the terminal device may determine the third information based on related information of the terminal device, and the related information of the terminal device includes, for example, a transmission rate required after the user plane data integrity protection function is activated and/or a maximum data rate supported by the terminal device.

The third information may be directly sent by the terminal device to the access network device, or the third information may be NAS information that is transparently transmitted by the terminal device to the first core network device through the access network device. This is not specifically limited. In FIG. 13, an example in which the third information is transparently transmitted to the first core network device through the access network device is used.

S1314: The terminal device sends the third information to the access network device, the access network device receives the third information from the terminal device, and the access network device forwards the third information to the first core network device.

S1314 may be performed, for example, before S1311, after S1311 and before S1312, or after S1312. In FIG. 13, that S1314 is performed before S1311 is used as an example.

The terminal device may send the third information to only the access network device. In this case, the access network device does not need to forward the third information to the first core network device. Alternatively, the terminal device may transparently transmit the third information to the first core network device through the access network device. In FIG. 13, an example in which the terminal device transparently transmits the third information to the first core network device through the access network device is used.

For descriptions of S1314, refer to S519 in the embodiment shown in FIG. 5.

According to the method provided in the embodiment shown in FIG. 13, whether to activate the user plane data integrity protection may be determined by using a terminal device as a granularity. In other words, the user plane data integrity protection function may be activated or not for a terminal device. In this case, for all bearers, sessions, or the like of the terminal device, the user plane data integrity protection function is activated or the user plane data integrity protection function is not activated, and a control manner is simple. Alternatively, whether to activate the user plane data integrity protection may be determined by using a bearer or a session as a granularity. For a terminal device, if there are a plurality of bearers, the user plane data integrity protection function may be activated for some bearers, but the user plane data integrity protection function may not be activated for some other bearers, or if a terminal device establishes a plurality of sessions, the user plane data integrity protection function may be activated for some sessions, but the user plane data integrity protection function may not be activated for some other sessions. In this manner, a control granularity is finer. In addition, the embodiment shown in FIG. 13 provides: When the access network device is a legacy access network device, how to perform processing when the terminal device is a legacy terminal device, how to perform processing when the terminal device is an upgrade terminal device, how to perform processing when the core network device is a legacy core network device, and how to perform processing when the core network device is an upgrade core network device. This includes a combination of various possible states of devices.

The method provided in the embodiment shown in FIG. 13 may be independently implemented as a brand new procedure, or may be implemented based on some existing execution procedures. To better understand how to implement the embodiment shown in FIG. 13, the following uses several embodiments as examples for description. In the following description process, an example in which the embodiment shown in FIG. 13 is implemented based on an existing procedure is mainly used. For independent implementation of the embodiment shown in FIG. 13 as a brand new procedure, directly refer to the embodiment shown in FIG. 13.

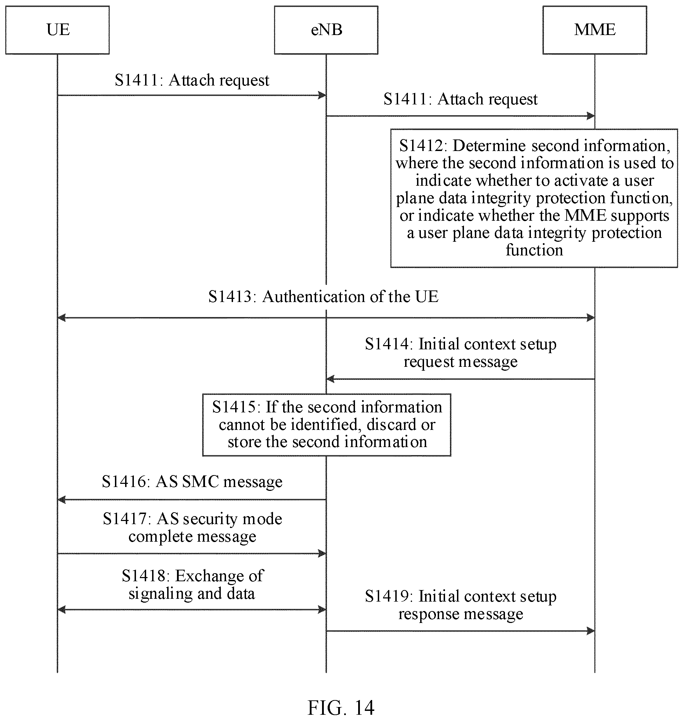

In a first example of the embodiment in FIG. 13, the embodiment shown in FIG. 13 may be performed based on an attach procedure. FIG. 14 is a flowchart of the example. An eNB in the embodiment shown in FIG. 14 may be an example of the access network device in the embodiment shown in FIG. 13. UE in the embodiment shown in FIG. 14 may be an example of the terminal device in the embodiment shown in FIG. 13. An MME in the embodiment shown in FIG. 14 may be an example of the first core network device in the embodiment shown in FIG. 13. In the embodiment shown in FIG. 14, an example in which the UE is legacy UE or upgraded UE, the eNB is a legacy eNB, and the MME is an upgraded MME is used.

S1411: The UE sends an attach request to the MME through the eNB, and the MME receives the attach request from the UE through the eNB.

For example, the attach request may include the third information in the embodiment shown in FIG. 13. In this case, it may also be considered that a message that carries the attach request and that is forwarded by the eNB to the MME is the fourth message in the embodiment shown in FIG. 13. The third information may be used to indicate whether to activate a user plane data integrity protection function, or is used to indicate whether the terminal device supports a user plane data integrity protection function. For the third information, refer to related descriptions in the embodiment shown in FIG. 13.

Regardless of whether the UE is legacy UE or upgraded UE, the UE may send the third information to the MME, but content indicated by the third information may be different. Alternatively, the third information is sent to the MME only when the UE is upgraded UE. If the UE is legacy UE, the third information is not sent to the MME

S1412: The MME determines second information, where the second information is used to indicate whether to activate the user plane data integrity protection function, or is used to indicate whether the MME supports the user plane data integrity protection function.

If the MME receives the third information, the MME may determine the second information in the embodiment shown in FIG. 13 based on the third information, or the MME may determine the second information based on the third information and other information. For example, the MME may view whether the MME has been configured with information used to indicate whether the user plane data integrity protection function is supported, or has been configured with information used to indicate whether to activate the user plane data integrity protection function. If the MME has been configured with the information, the MME may determine the second information based on the configured information and the third information. Alternatively, if the MME has not been configured with the information used to indicate whether the user plane data integrity protection function is supported, and has not been configured with the information used to indicate whether to activate the user plane data integrity protection function, the MME may obtain, from a subscription database, for example, an HSS, information that is associated with subscription data of the UE and that is used to indicate whether the user plane data integrity protection function is supported, or obtain information used to indicate whether to activate the user plane data integrity protection function, and determine the second information based on the obtained information and the third information. Alternatively, even if the MME has been configured with the information used to indicate whether the user plane data integrity protection function is supported, and/or has been configured with the information used to indicate whether to activate the user plane data integrity protection function, the MME may obtain, from a subscription database, for example, an HSS, information that is associated with subscription data of the UE and that is used to indicate whether the user plane data integrity protection function is supported, or obtain information used to indicate whether to activate the user plane data integrity protection function, and determine the second information based on the information configured on a side of the MME, the obtained information, and the third information.

S1413: The UE and the MME perform mutual authentication.

S1414: The MME sends an initial context setup request message to the eNB, and the eNB receives the initial context setup request message from the MME.

For example, the initial context setup request message may be an example of the third message in the embodiment shown in FIG. 13. The initial context setup request message may carry the third information, to avoid a replay attack. In addition, the initial context setup request message may further carry the second information.

S1415: If the eNB cannot identify the second information, the eNB discards or stores the second information.

For a processing manner used after the eNB receives the initial context setup request message, refer to S1313 in FIG. 13.

S1416: The eNB sends an AS SMC message to the UE, and the UE receives the AS SMC message from the eNB.

Content included in the AS SMC message may be the same as content in the conventional technology. Alternatively, the AS SMC message may include the first information in the embodiment shown in FIG. 13, and the first information indicates not to activate user plane data integrity protection, or indicates that the eNB does not support user plane data integrity protection, or indicates that user plane data integrity protection does not need to be activated. If the AS SMC message includes the first information, the AS SMC message may be considered as a first message.

S1417: The UE sends an AS security mode complete message to the eNB, and the eNB receives the AS security mode complete message from the UE.

S1418: The UE and the eNB exchange signaling and data with each other, where integrity protection is not performed on the data.

S1419: The eNB sends an initial context setup response message to the MME.

Because the eNB is a legacy eNB, the eNB does not send the first information to the UE, or the first information sent by the eNB indicates not to activate the user plane data integrity protection, indicates that the eNB does not support the user plane data integrity protection, or indicates that the user plane data integrity protection does not need to be activated. Therefore, regardless of whether the UE is legacy UE or upgraded UE, the UE cannot activate the user plane data integrity protection function. In this case, for implementation of S1416 to S1419, refer to the conventional technology.

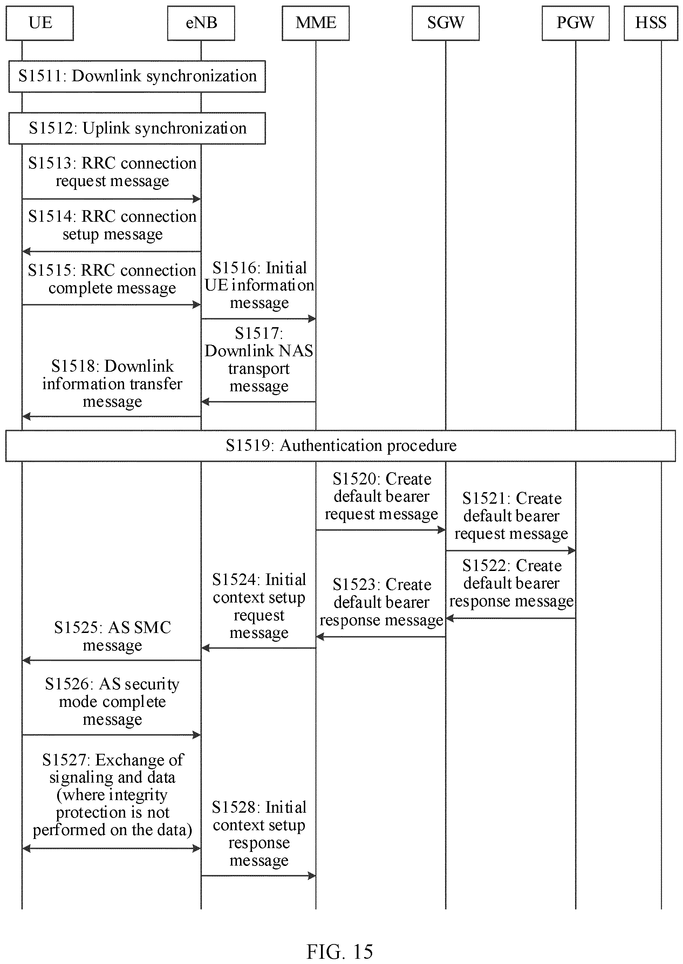

In a second example of the embodiment in FIG. 13, the embodiment shown in FIG. 13 may be performed based on an attach procedure. FIG. 15 is a flowchart of the example. An eNB in the embodiment shown in FIG. 15 may be an example of the access network device in the embodiment shown in FIG. 13. UE in the embodiment shown in FIG. 15 may be an example of the terminal device in the embodiment shown in FIG. 13. An MME in the embodiment shown in FIG. 15 may be an example of the first core network device in the embodiment shown in FIG. 13. In the embodiment shown in FIG. 15, an example in which the UE is legacy UE, the eNB is a legacy eNB, and the MME is an upgraded MME is used.
S1511: The UE performs downlink synchronization.
S1512: The UE performs uplink synchronization.
S1513: The UE sends an RRC connection request message to the eNB, and the eNB receives the RRC connection request message from the UE.
S1514: The eNB sends an RRC connection setup message to the UE, and the UE receives the RRC connection setup message from the eNB.
S1515: The UE sends an RRC connection setup complete message to the eNB, and the eNB receives the RRC connection setup complete message from the UE.
S1516: The eNB sends an initial UE information message to the MME, and the MME receives the initial UE information message from the eNB.
S1517: The MME sends a downlink NAS transport message to the eNB, and the eNB receives the downlink NAS transport message from the MME
S1518: The eNB sends a downlink information transfer message to the UE, and the UE receives the downlink information transfer message from the eNB.
S1519: The UE initiates an authentication procedure. For a specific authentication procedure, refer to an authentication procedure in an attach procedure in an existing 4G system.
S1520: The MME sends a create default bearer request (create default bearer request) message to an SGW, and the SGW receives the create default bearer request message from the MME.
S1521: The SGW sends the create default bearer request message to a PGW, and the PGW receives the create default bearer request message from the SGW.
S1522: The PGW sends a create default bearer response (create default bearer response) message to the SGW, and the SGW receives the create default bearer response message from the PGW.
S1523: The SGW sends the create default bearer response message to the MME, and the MME receives the create default bearer response message from the SGW.
S1524: The MME sends an initial context setup request (initial context setup request) message to the eNB, and the eNB receives the initial context setup request message from the MME
S1511 to S1524 are a normal process in which legacy UE initiates an initial attach to the MME and a possible authentication procedure. For a user plane security policy herein, especially, for a user plane data integrity protection policy, because the MME is a legacy MME, the MME does not perform participation.

Therefore, in the embodiment shown in FIG. 15, for S1511 to S1524, refer to S611 to S624 in the procedure shown in FIG. 6A and FIG. 6B.

S1525: The eNB sends an AS SMC message to the UE, and the UE receives the AS SMC message from the eNB.

Because the eNB is a legacy eNB, content included in the AS SMC message may be the same as content in the conventional technology. Alternatively, the AS SMC message may include the first information in the embodiment shown in FIG. 13, and the first information indicates not to activate user plane data integrity protection, or indicates that the eNB does not support user plane data integrity protection, or indicates that user plane data integrity protection does not need to be activated. If the AS SMC message includes the first information, the AS SMC message may be considered as a first message.

S1526: The UE sends an AS security mode complete message to the eNB, and the eNB receives the AS security mode complete message from the UE.

S1527: The UE and the eNB exchange signaling and data with each other, where integrity protection is not performed on the data.

S1528: The eNB sends an initial context setup response message to the MME.

Because the eNB is a legacy eNB, the eNB does not send the first information to the UE, or the first information sent by the eNB indicates not to activate the user plane data integrity protection, indicates that the eNB does not support the user plane data integrity protection, or indicates that the user plane data integrity protection does not need to be activated. Therefore, regardless of whether the UE is legacy UE or upgraded UE, the UE cannot activate the user plane data integrity protection function. In this case, for implementation of 1525 to S1528, refer to the conventional technology.

In the foregoing embodiments shown in FIG. 14 and FIG. 15, an example in which the method provided in the embodiment shown in FIG. 13 is based on an attach procedure is used. If the method provided in the embodiment shown in FIG. 13 is based on the attach procedure, whether to activate user plane data integrity protection is determined by using a terminal device as a granularity. The following further describes a third example of the embodiment shown in FIG. 13. In this example, the method provided in the embodiment shown in FIG. 13 is based on a bearer modify procedure. If the method provided in the embodiment shown in FIG. 13 is based on the bearer modify procedure, whether to activate user plane data integrity protection is determined by using a bearer as a granularity.

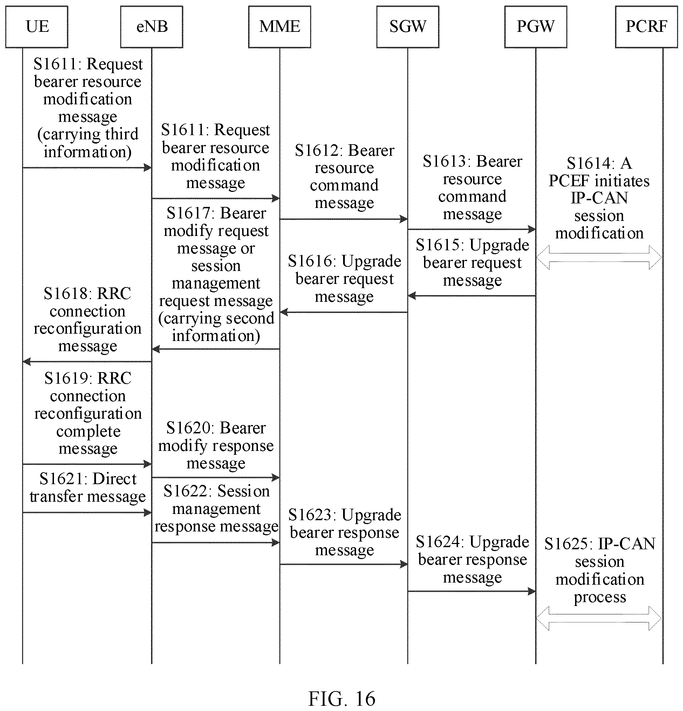

FIG. 16 is a flowchart of the example. An eNB in the embodiment shown in FIG. 16 may be an example of the access network device in the embodiment shown in FIG. 13, and UE in the embodiment shown in FIG. 16 may be an example of the terminal device in the embodiment shown in FIG. 13. In the embodiment shown in FIG. 16, an example in which the eNB is a legacy eNB is used.

S1611: UE sends a request bearer resource modification message to an MME through the eNB, and the MME receives the request bearer resource modification message from the UE through the eNB.

The request bearer resource modification message may carry the third information described in the embodiment shown in FIG. 13. In this case, the request bearer resource modification message may be considered as an example of the fourth message in the embodiment shown in FIG. 13.

For content indicated by the third information, refer to related descriptions in the embodiment shown in FIG. 5.
S1612: The MME sends a bearer resource command message to an SGW, and the SGW receives the bearer resource command message from the MME
S1613: The SGW forwards the bearer resource command message to a PGW, and the PGW receives the bearer resource command message from the SGW.
S1614: The PGW and a PCRF network element perform PCEF initiated IP-CAN session modification with each other.
S1615: The PGW sends an upgrade bearer request message to the SGW, and the SGW receives the upgrade bearer request message from the PGW.
S1616: The SGW forwards the upgrade bearer request message to the MME, and the MME receives the upgrade bearer request message from the SGW.
S1617: The MME sends a bearer modify request message or a session management request message to the eNB, and the eNB receives the bearer modify request message or the session management request message from the MME.

For example, if the MME is an upgraded MME, and the MME participates in determining whether to activate a user plane data integrity protection function, the bearer modify request or the session management request may carry the second information (where an example in which the second information is carried is used in FIG. 16). In this case, the bearer modify request or the session management request that carries the second information may be considered as an example of the third message in the embodiment shown in FIG. 13.

For specific content of the second information, refer to the embodiment shown in FIG. 13.

S1618: The eNB sends an RRC connection reconfiguration message to the UE.

Because the eNB is a legacy eNB, if the bearer modify request or the session management request carries the second information, the eNB may discard or store the second information.

Because the eNB is a legacy eNB, the eNB does not send first information to the UE, or first information sent by the eNB indicates not to activate user plane data integrity protection, indicates that the eNB does not support user plane data integrity protection, or indicates that user plane data integrity protection does not need to be activated. If the eNB sends first information to the UE, the eNB may include the first information in an RRC connection reconfiguration message and send the RRC connection reconfiguration message to the UE. In this case, the RRC connection reconfiguration message may be used as an example of the first message in the embodiment shown in FIG. 13.
S1619: The UE sends an RRC connection reconfiguration complete message to the eNB, and the eNB receives the RRC connection reconfiguration complete message from the UE.
S1620: The eNB sends a bearer modify response to the MME, and the MME receives the bearer modify response from the eNB.
S1621: The UE sends a direct transfer message to the eNB, and the eNB receives the direct transfer message from the UE.
S1622: The eNB sends a session management response message to the MME, and the MME receives the session management response message from the eNB.
S1623: The MME sends an upgrade bearer response message to the SGW, and the SGW receives the upgrade bearer response message from the MME
S1624: The SGW forwards the upgrade bearer response message to the PGW, and the PGW receives the upgrade bearer response message from the SGW.
S1625: The PGW and the PCRF perform an IP-CAN session modification process with each other.

Regardless of whether the UE is legacy UE or upgraded UE, the UE cannot activate the user plane data integrity protection function. In this case, for implementation of 1619 to S1625, refer to the conventional technology.

In some embodiments of the embodiments shown in FIG. 5 to FIG. 16, the terminal device does not proactively send capability information of the terminal device to a network side device, for example, capability information of the terminal device for the user plane data integrity protection. However, in some other embodiments of the embodiments shown in FIG. 5 to FIG. 16, the terminal device may proactively send capability information of the terminal device to a network side device, for example, capability information of the terminal device for the user plane data integrity protection. To describe an action of the terminal device more clearly, the following provides a third type of communication method according to an embodiment of this application. In this communication method, the terminal device may proactively send capability information of the terminal device to a network side device.

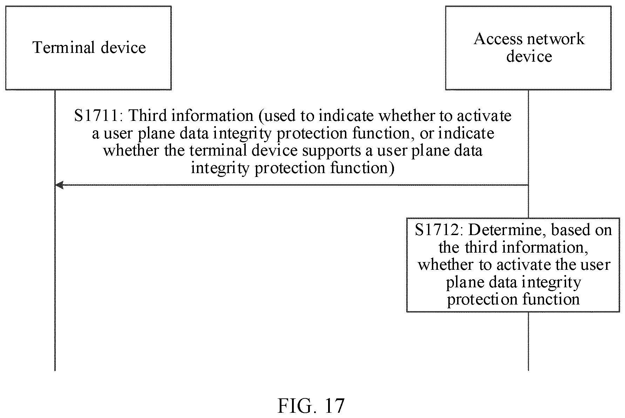

FIG. 17 is a flowchart of the method. In the following description process, an example in which the method is applied to the network architecture shown in FIG. 4 is still used. Therefore, an access network device described below is, for example, the access network device 1 in the network architecture shown in FIG. 4, a first core network device described below is, for example, the core network device 1 in the network architecture shown in FIG. 4, and a terminal device described below may be the terminal device in the network architecture shown in FIG. 4.

S1711: The terminal device sends third information to the access network device, and the access network device receives third information from the terminal device, where the third information is used to indicate whether to activate a user plane data integrity protection function, or is used to indicate whether the terminal device supports a user plane data integrity protection function.

For the third information, refer to related descriptions in the embodiment shown in FIG. 5.

In this embodiment of this application, the terminal device may send the third information to only the access network device, or may transparently transmit the third information to the first core network device through the access network device. If the terminal device sends the third information to only the access network device, the access network device may directly receive the third information from the terminal device. Alternatively, if the terminal device transparently transmits the third information to the first core network device through the access network device, the access network device cannot obtain the third information. However, after receiving the third information, if the first core network device sends the third information to the access network device, the access network device may receive the third information from the first core network device. In FIG. 17, an example in which the terminal device directly sends the third information to the access network device is used.

For example, the terminal device may determine the third information based on related information of the terminal device, and the related information of the terminal device includes, for example, a transmission rate required after the user plane data integrity protection function is activated and/or a maximum data rate supported by the terminal device.

S1712: The access network device determines, based on the third information, whether to activate the user plane data integrity protection function.

In FIG. 17, the example in which the terminal device sends the third information to the access network device is used. Alternatively, if the terminal device transparently transmits the third information to the first core network device through the access network device, after receiving the third information from the terminal device through the access network device, the first core network device may further send the third information to the access network device. In this case, after receiving the third information, the access network device may further continue to perform S1712.

If the access network device is a legacy access network device, for a manner of processing the third information by the access network device, refer to a manner of processing the second information by the access network device in the embodiment shown in FIG. 13. Naturally, the access network device determines not to activate the user plane data integrity protection function.

Alternatively, if the access network device is an upgraded access network device, the access network device may determine, based on the third information, whether to activate the user plane data integrity protection function, or the access network device may determine, based on the third information and a status of the access network device, whether to activate the user plane data integrity protection function. For example, the access network device may determine, based on the third information and factors such as a transmission rate required after the user plane data integrity protection function is activated and/or load of the access network device, whether to activate the user plane data integrity protection function.

For example, if the access network device determines that the third information indicates to activate the user plane data integrity protection function, or indicates that the terminal device supports the user plane data integrity protection function, and the access network device supports activating the user plane data integrity protection function, the access network device may activate the user plane data integrity protection function, and may send information about an algorithm applicable to the user plane integrity protection function to the terminal device.

Alternatively, if the access network device determines that the user plane data integrity protection function is not supported, determines that the third information indicates that the user plane data integrity protection function does not need to be activated, or determines that the third information indicates not to activate the user plane data integrity protection function, the access network device may send a sixth message to the terminal device, where the sixth message is used to indicate that the access network device does not support the user plane data integrity protection function, or indicates not to activate the user plane data integrity protection function.

Alternatively, even if the access network device receives the third information, the access network device may still query the core network device to determine whether to activate the user plane data integrity protection function. For example, after receiving the third information, the access network device may send a query request message to a second core network device, where the query request message may be used to query whether the second core network device supports activating the user plane data integrity protection function. The second core network device may view whether the second core network device has been configured with information used to indicate whether the user plane data integrity protection function is supported, or has been configured with information used to indicate whether to activate the user plane data integrity protection function. Alternatively, the second core network device may obtain, from a subscription database, for example, an HSS, information that is associated with subscription data of the terminal device and that is used to indicate whether the user plane data integrity protection function is supported, or obtain information that is used to indicate whether to activate the user plane data integrity protection function. The second core network device may send a query response message to the access network device, where the query response message may be used to indicate whether the user plane data integrity protection function is supported, or indicate whether to activate the user plane data integrity protection function. In this case, the access network device may determine, based on the third information and the query response message, whether to activate the user plane data integrity protection function. For example, the access network device may determine, with reference to the third information and the query response message and with reference to factors such as load of the access network device and/or a maximum transmission rate required after the user plane data integrity protection function is activated, whether to activate the user plane data integrity protection function.

Specifically, for how the access network device determines, based on the third information, whether to activate the user plane data integrity protection function, refer to related descriptions in the embodiment shown in FIG. 5.

According to the method provided in the embodiment shown in FIG. 17, whether to activate the user plane data integrity protection may be determined by using a terminal device as a granularity. In other words, the user plane data integrity protection function may be activated or not for a terminal device. In this case, for all bearers, sessions, or the like of the terminal device, the user plane data integrity protection function is activated or the user plane data integrity protection function is not activated, and a control manner is simple. Alternatively, whether to activate the user plane data integrity protection may be determined by using a bearer or a session as a granularity. For a terminal device, if there are a plurality of bearers, the user plane data integrity protection function may be activated for some bearers, but the user plane data integrity protection function may not be activated for some other bearers, or if a terminal device establishes a plurality of sessions, the user plane data integrity protection function may be activated for some sessions, but the user plane data integrity protection function may not be activated for some other sessions. In this manner, a control granularity is finer. In addition, in the embodiment shown in FIG. 17, the terminal device may proactively send capability information (that is, the third information) of the terminal device to a network side device, so that the network side device can make a corresponding decision in time based on the capability information of the terminal device without proactively requesting the terminal device.

The method provided in the embodiment shown in FIG. 17 may be independently implemented as a brand new procedure, or may be implemented based on some existing execution procedures. To better understand how to implement the embodiment shown in FIG. 17, the following uses one embodiment as an example for description. In the following description process, an example in which the embodiment shown in FIG. 17 is implemented based on an existing procedure is mainly used. For independent implementation of the embodiment shown in FIG. 17 as a brand new procedure, directly refer to the embodiment shown in FIG. 17. In addition, in the embodiments described above, some embodiments also include a step in which the terminal device may proactively send the third information to the access network device or the first core network device. In this case, in addition to the following embodiment to be described, the foregoing embodiments including the step of sending the third information by the terminal device may also be used as an example of the embodiment shown in FIG. 17.

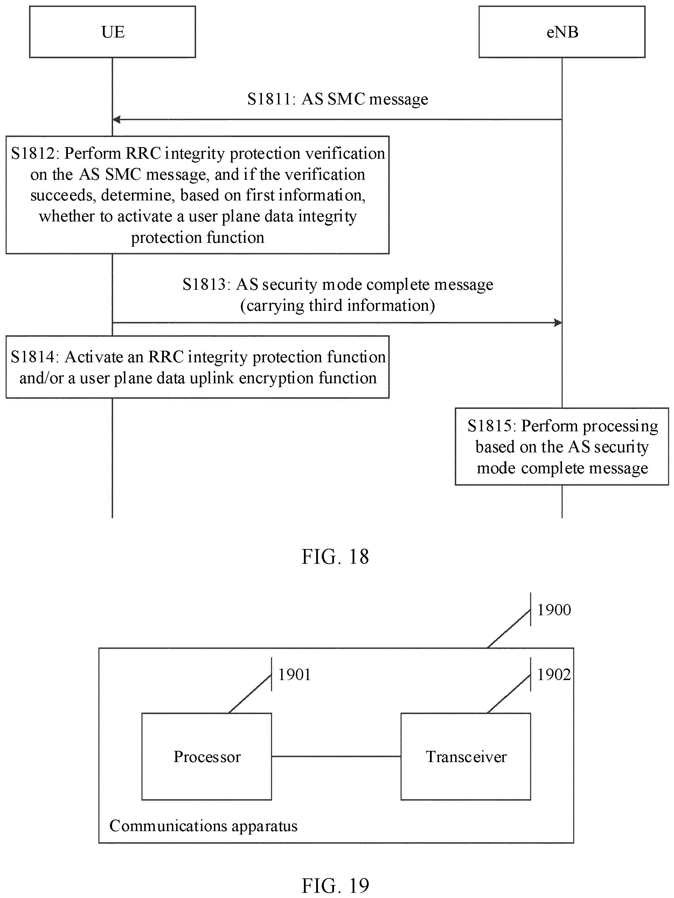

In an example of the embodiment in FIG. 17, the embodiment shown in FIG. 17 may be performed based on an attach procedure. FIG. 18 is a flowchart of the example. An eNB in the embodiment shown in FIG. 18 may be an example of the access network device in the embodiment shown in FIG. 17. UE in the embodiment shown in FIG. 18 may be an example of the terminal device in the embodiment shown in FIG. 17. An MME in the embodiment shown in FIG. 18 may be an example of the first core network device in the embodiment shown in FIG. 17. In the embodiment shown in FIG. 18, an example in which the UE is legacy UE, the eNB is an upgraded eNB, and the MME is a legacy MME or an upgraded MME is used.

Specifically, in the embodiment shown in FIG. 18, an AS SMC procedure in the attach procedure may be used. Therefore, another process in the attach procedure is not described in detail in the embodiment shown in FIG. 18.

S1811: The eNB sends an AS SMC message to the UE, and the UE receives the AS SMC message from the eNB.

For example, content included in the AS SMC message is the same as that in the conventional technology. In other words, the AS SMC message does not include first information provided in this embodiment of this application.

Integrity protection for the AS SMC message can be performed by using an RRC integrity protection key. That is, the eNB enables RRC integrity protection.

In addition, the eNB may activate RRC integrity protection before sending the AS SMC message.

S1812: The UE performs RRC integrity protection verification on the AS SMC message, and if the verification succeeds, the UE determines whether to activate a user plane data integrity protection function. That the UE determines whether to activate a user plane data integrity protection function may be specifically: The UE determines third information.

In the embodiment shown in FIG. 18, if the UE is an upgraded UE, the UE may determine the third information based on related information of the UE, where the related information of the UE includes, for example, a transmission rate required after the integrity protection function is activated.

Alternatively, if the UE is legacy UE, the UE may still determine the third information. The third information may indicate that the UE does not support user plane data integrity protection, is used to indicate not to activate user plane data integrity protection, or is used to indicate that user plane data integrity protection does not need to be activated.

Alternatively, if the UE is legacy UE, the UE may not need to determine the first information.

S1813: The UE sends an AS security mode complete message to the eNB, and the eNB receives the AS security mode complete message from the UE.

The AS security mode complete message may carry the third information in the embodiment shown in FIG. 17. In this case, the third information in the AS security mode complete message may be used to indicate whether to activate the user plane data integrity protection function, or may be used to indicate whether the terminal device supports the user plane data integrity protection function. For a specific indication manner, refer to the descriptions of the third information in the embodiment shown in FIG. 17.

Certainly, if the UE is legacy UE, and the UE does not need to determine the third information, content included in the AS security mode complete message may be the same as that in the conventional technology. In FIG. 18, an example in which the AS security mode complete message carries the third information is used.

In addition, the AS security mode complete message may further include parameters such as a MAC-I.

S1814: After sending the AS security mode complete message, the UE may activate an RRC integrity protection function and/or a user plane data uplink encryption function.

S1815: The eNB performs processing based on the AS security mode complete message.

For a processing manner of the eNB, refer to the descriptions of S1712 in the embodiment shown in FIG. 17.

For another step, refer to the attach procedure or related descriptions in another embodiment of this application. For example, the eNB sends an RRC connection reconfiguration message to the UE, and then the UE sends an RRC connection reconfiguration complete message to the eNB, and the like.

After one or more network elements in a 4G network are upgraded, the method provided in the embodiments of this application can be performed to implement collaborative processing on user plane data integrity protection between devices. For example, the method may enable all the devices to activate a user plane data integrity protection function or enable no device to activate a user plane data integrity protection function, so that the devices keep consistent in processing manners, thereby reducing an error probability.

The following describes, with reference to the accompanying drawings, apparatuses configured to implement the foregoing methods in the embodiments of this application. Therefore, all the foregoing content may be used in the following embodiments, and repeated content is not described again.

An embodiment of this application provides the first type of communications apparatus. The communications apparatus is, for example, a first communications apparatus. Refer to FIG. 19. The communications apparatus is, for example, a communications apparatus 1900. The communications apparatus 1900 may implement functions of the terminal device described above. The communications apparatus 1900 may be the terminal device described above, or may be a chip disposed in the terminal device described above. The communications apparatus 1900 may include a processor 1901 and a transceiver 1902. The processor 1901 may be configured to perform some steps or all steps, other than the receiving and sending operations, performed by the terminal device when the terminal device is a legacy terminal device, in any embodiment of the embodiment shown in FIG. 5 to the embodiment shown in FIG. 18, and/or may be configured to support another process of the technology described in this specification. The transceiver 1902 may be configured to perform some receiving and sending operations or all receiving and sending operations performed by the terminal device when the terminal device is a legacy terminal device, in any embodiment of the embodiment shown in FIG. 5 to the embodiment shown in FIG. 18, and/or may be configured to support another process of the technology described in this specification.

For example, the transceiver 1902 is configured to receive a first message from an access network device, where the first message includes first information, and the first information is used to indicate whether to activate a user plane data integrity protection function, or is used to indicate whether the access network device supports a user plane data integrity protection function.

The processor 1901 is configured to: if the first information cannot be identified, discard or store the first information.

In a possible implementation, the transceiver 1902 is further configured to send an exception report to the access network device, where the exception report is used to indicate that the communications apparatus 1900 cannot identify the first information.

In a possible implementation, the transceiver 1902 is further configured to send a second message to the access network device, where the second message is used to indicate a processing result of the communications apparatus 1900 for the user plane data integrity protection function.

In a possible implementation,
the processing result is used to indicate whether the communications apparatus 1900 has activated the user plane data integrity protection function; or
the processing result includes a failure indication, where a cause value of the failure indication is used to indicate whether the communications apparatus 1900 has activated the user plane data integrity protection function, or a cause value of the failure indication is used to indicate that the communications apparatus 1900 cannot identify the first information.

In a possible implementation, the transceiver 1902 is further configured to send third information to the access network device, to send the third information to a first core network device through the access network device, where the third information is used to indicate whether to activate the user plane data integrity protection function, or is used to indicate whether the terminal device supports the user plane data integrity protection function.

In a possible implementation,
the third information is used to indicate whether to activate the user plane data integrity protection function, or is used to indicate whether the communications apparatus 1900 supports the user plane data integrity protection function; or
the third information includes third integrity protection policy information, and the third integrity protection policy information is used to indicate whether to activate the user plane data integrity protection function.

In a possible implementation,
the third integrity protection policy information is used to indicate that the user plane data integrity protection function needs to be activated;
the third integrity protection policy information is used to indicate that the user plane data integrity protection function tends to be activated; or
the third integrity protection policy information is used to indicate that the user plane data integrity protection function does not need to be activated.

In a possible implementation, the third information further includes third encryption and decryption policy information, and the third encryption and decryption policy information is used to indicate whether to activate user plane data encryption and decryption functions.

All related content of steps in the foregoing method embodiments may be cited in function descriptions of corresponding functional modules, and details are not described again herein.

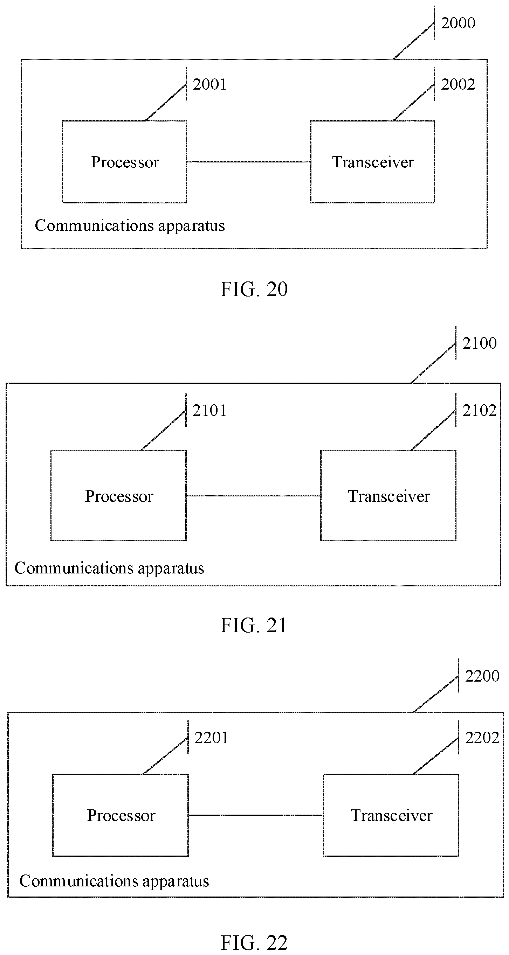

An embodiment of this application provides a second type of communications apparatus. The communications apparatus is, for example, a second communications apparatus. Refer to FIG. 20. The communications apparatus is, for example, a communications apparatus 2000. The communications apparatus 2000 may implement functions of the terminal device described above. The communications apparatus 2000 may be the terminal device described above, or may be a chip disposed in the terminal device described above. The communications apparatus 2000 may include a processor 2001 and a transceiver 2002. The processor 2001 may be configured to perform some steps or all steps, other than the receiving and sending operations, performed by the terminal device when the terminal device is an upgraded terminal device, in any embodiment of the embodiment shown in FIG. 5 to the embodiment shown in FIG. 18, and/or may be configured to support another process of the technology described in this specification. The transceiver 2002 may be configured to perform some receiving and sending operations or all receiving and sending operations performed by the terminal device when the terminal device is an upgraded terminal device, in any embodiment of the embodiment shown in FIG. 5 to the embodiment shown in FIG. 18, and/or may be configured to support another process of the technology described in this specification.

For example, the transceiver 2002 is configured to receive a first message from an access network device, where the first message includes first information, and the first information is used to indicate whether to activate a user plane data integrity protection function, or is used to indicate whether the access network device supports a user plane data integrity protection function.

The processor 2001 is configured to determine, based on the first information, whether the communications apparatus 2000 is to activate the user plane data integrity protection function.

In a possible implementation, the transceiver 2002 is further configured to: after the processor 2001 determines, based on the first information, whether the communications apparatus 2000 is to activate the user plane data integrity protection function, send a fifth message to the access network device, where the fifth message includes fourth information, and the fourth information is used to indicate whether to activate the user plane data integrity protection function.

In a possible implementation, the first information is used to indicate to activate the user plane data integrity protection function, or is used to indicate that the access network device supports the user plane data integrity protection function.

The fourth information is used to indicate that the user plane data integrity protection function needs to be activated.

Alternatively, the fourth information is used to indicate that the user plane data integrity protection function tends to be activated.

Alternatively, the fourth information is used to indicate that the user plane data integrity protection function does not need to be activated.

In a possible implementation, the first information is used to indicate not to activate the user plane data integrity protection function, or is used to indicate that the access network device does not support the user plane data integrity protection function; and the processor 2001 is further configured to discard or store the first information.

In a possible implementation, the transceiver 2002 is further configured to: before receiving the first message from the access network device, send third information to the access network device, where the third information is used to indicate whether to activate the user plane data integrity protection function, or is used to indicate whether the communications apparatus 2000 supports the user plane data integrity protection function.

In a possible implementation,
the third information is used to indicate whether to activate the user plane data integrity protection function, or is used to indicate whether the communications apparatus 2000 supports the user plane data integrity protection function; or
the third information includes third integrity protection policy information, and the third integrity protection policy information is used to indicate whether the first core network device is to activate the user plane data integrity protection function.

In a possible implementation,
the third integrity protection policy information is used to indicate that the user plane data integrity protection function needs to be activated;
the third integrity protection policy information is used to indicate that the user plane data integrity protection function tends to be activated; or
the third integrity protection policy information is used to indicate that the user plane data integrity protection function does not need to be activated.

In a possible implementation, the third information further includes third encryption and decryption policy information, and the third encryption and decryption policy information is used to indicate whether to activate user plane data encryption and decryption functions.

All related content of steps in the foregoing method embodiments may be cited in function descriptions of corresponding functional modules, and details are not described again herein.

An embodiment of this application provides a third type of communications apparatus. The communications apparatus is, for example, a third communications apparatus. Refer to FIG. 21. The communications apparatus is, for example, a communications apparatus 2100. The communications apparatus 2100 may implement functions of the access network device described above. The communications apparatus 2100 may be the access network device described above, or may be a chip disposed in the access network device described above. Optionally, it is assumed that an access network includes a CU (Centralized Unit, centralized unit), a DU (Distribute Unit, distributed unit), and an AAU (Active Antenna Unit, active antenna unit). In this case, the communications apparatus 2100 may be correspondingly a CU unit. The CU is responsible for processing a non-real-time protocol and service. The AAU is responsible for some physical layer processing functions and includes a passive antenna. The DU is responsible for processing a physical layer protocol and a real-time service. In short, the CU and the DU are distinguished based on real-time processing of content.

The communications apparatus 2100 may include a processor 2101 and a transceiver 2102. The processor 2101 may be configured to perform some steps or all steps, other than the receiving and sending operations, performed by the access network device when the access network device is an upgraded access network device, in any embodiment of the embodiment shown in FIG. 5 to the embodiment shown in FIG. 12, and/or may be configured to support another process of the technology described in this specification. The transceiver 2102 may be configured to perform some receiving and sending operations or all receiving and sending operations performed by the access network device when the access network device is an upgraded terminal device, in any embodiment of the embodiment shown in FIG. 5 to the embodiment shown in FIG. 12, and/or may be configured to support another process of the technology described in this specification.

For example, the processor 2101 is configured to determine first information, where the first information is used to indicate whether to activate a user plane data integrity protection function, or is used to indicate whether the communications apparatus 2100 supports a user plane data integrity protection function.

The transceiver 2102 is configured to send a first message to a terminal device, where the first message carries the first information.

In a possible implementation,
the first information is used to indicate whether to activate the user plane data integrity protection function, or is used to indicate whether the communications apparatus 2100 supports the user plane data integrity protection function; or
the first information includes first integrity protection policy information, and the first integrity protection policy information is used to indicate whether to activate the user plane data integrity protection function.

In a possible implementation,
the first integrity protection policy information is used to indicate that the user plane data integrity protection function needs to be activated;
the first integrity protection policy information is used to indicate that the user plane data integrity protection function tends to be activated; or
the first integrity protection policy information is used to indicate that the user plane data integrity protection function does not need to be activated.

In a possible implementation, the first information further includes first encryption and decryption policy information, and the first encryption and decryption policy information is used to indicate whether to activate user plane data encryption and decryption functions.

In a possible implementation, the transceiver 2102 is further configured to receive a second message from the terminal device, where the second message is used to indicate a processing result of the terminal device for the user plane data integrity protection function.

In a possible implementation, the processor 2101 is further configured to: if the processing result is used to indicate that the terminal device cannot activate the user plane data integrity protection function, deactivate the user plane data integrity protection function.

In a possible implementation, the processor 2101 is further configured to: if the processing result is used to indicate that the terminal device has activated the user plane data integrity protection function, activate the user plane data integrity protection function.

In a possible implementation, the transceiver 2102 is further configured to receive a third message from a first core network device, where the third message is used to indicate whether to activate the user plane data integrity protection function, is used to indicate whether the first core network device supports the user plane data integrity protection function, or is used to indicate whether subscription data has been configured to support the user plane data integrity protection function.

All related content of steps in the foregoing method embodiments may be cited in function descriptions of corresponding functional modules, and details are not described again herein.

An embodiment of this application provides a fourth type of communications apparatus. The communications apparatus is, for example, a fourth communications apparatus. Refer to FIG. 22. The communications apparatus is, for example, a communications apparatus 2200. The communications apparatus 2200 may implement functions of the access network device described above. The communications apparatus 2200 may be the access network device described above, or may be a chip disposed in the access network device described above. The communications apparatus 2200 may include a processor 2201 and a transceiver 2202. The processor 2201 may be configured to perform some steps or all steps, other than the receiving and sending operations, performed by the access network device when the access network device is a legacy network device, in any embodiment of the embodiment shown in FIG. 13 to the embodiment shown in FIG. 16, and/or may be configured to support another process of the technology described in this specification. The transceiver 2202 may be configured to perform some receiving and sending operations or all receiving and sending operations performed by the access network device when the access network device is a legacy terminal device, in any embodiment of the embodiment shown in FIG. 13 to the embodiment shown in FIG. 16, and/or may be configured to support another process of the technology described in this specification.

For example, the transceiver 2202 is configured to receive a third message from a first core network device, where the third message includes second information, and the second information is used to indicate whether to activate a user plane data integrity protection function, or is used to indicate whether the first core network device supports a user plane data integrity protection function.

The processor 2201 is configured to: if the second information cannot be identified, discard or store the second information.

In a possible implementation, the transceiver 2202 is further configured to send an exception report to the first core network device, where the exception report is used to indicate that the communications apparatus 2200 cannot identify the second information.

All related content of steps in the foregoing method embodiments may be cited in function descriptions of corresponding functional modules, and details are not described again herein.

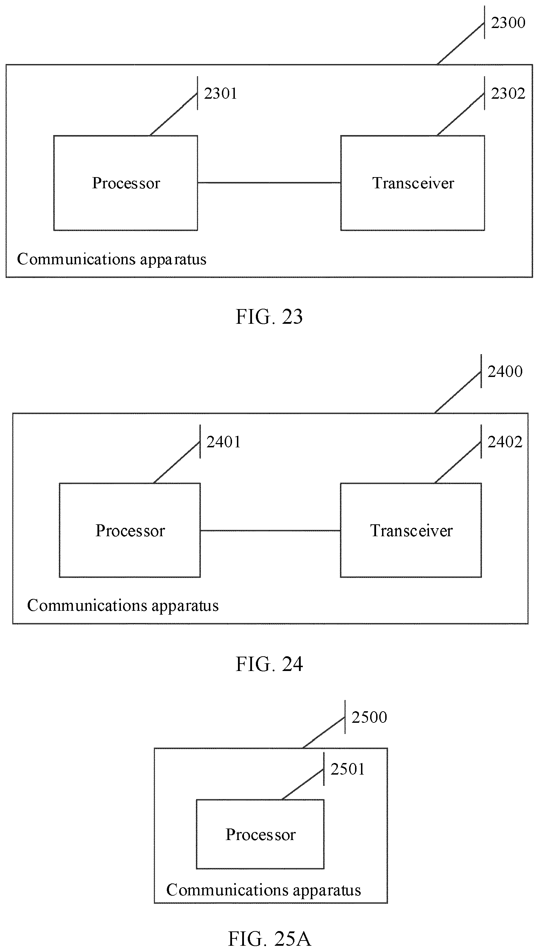

An embodiment of this application provides a fifth type of communications apparatus. The communications apparatus is, for example, a fifth communications apparatus. Refer to FIG. 23. The communications apparatus is, for example, a communications apparatus 2300. The communications apparatus 2300 may implement functions of the access network device described above. The communications apparatus 2300 may be the access network device described above, or may be a chip disposed in the access network device described above. The communications apparatus 2300 may include a processor 2301 and a transceiver 2302. The processor 2301 may be configured to perform some steps or all steps, other than the receiving and sending operations, performed by the access network device, in any embodiment of the embodiment shown in FIG. 17 and the embodiment shown in FIG. 18, and/or may be configured to support another process of the technology described in this specification. The transceiver 2302 may be configured to perform some receiving and sending operations or all receiving and sending operations performed by the access network device, in any embodiment of the embodiment shown in FIG. 17 and the embodiment shown in FIG. 18, and/or may be configured to support another process of the technology described in this specification.

For example, the transceiver 2302 is configured to receive third information, where the third information is used to indicate whether to activate a user plane data integrity protection function, or is used to indicate whether a terminal device supports a user plane data integrity protection function.

The processor 2301 is configured to determine, based on the third information, whether to activate the user plane data integrity protection function.

In a possible implementation,
the processor 2301 is further configured to determine that the third information indicates to activate the user plane data integrity protection function, or indicates that the terminal device supports the user plane data integrity protection function, and that the communications apparatus 2300 supports activating the user plane data integrity protection function;
the processor 2301 is further configured to activate the user plane data integrity protection function; and
the transceiver 2302 is further configured to send, to the terminal device, information about an algorithm applicable to the user plane integrity protection function.

In a possible implementation,
the processor 2301 is further configured to determine that the user plane data integrity protection function is not supported, or determine that activating the user plane data integrity protection function is not suggested; and
the transceiver 2302 is further configured to send a sixth message to the terminal device, where the sixth message is used to indicate that the communications apparatus 2300 does not support the user plane data integrity protection function, or indicate not to activate the user plane data integrity protection function.

In a possible implementation, the processor 2301 determines, based on the third information and in the following manner, whether to activate the user plane data integrity protection function:
after receiving the third information through the transceiver 2302, sending a query request message to a second core network device through the transceiver 2302, where the query request message is used to query whether the second core network device supports activating the user plane data integrity protection function;
receiving a query response message from the second core network device through the transceiver 2302, where the query response message is used to indicate whether the user plane data integrity protection function is supported, or indicate whether to activate the user plane data integrity protection function; and
determining, based on the query response message, whether to activate the user plane data integrity protection function.

All related content of steps in the foregoing method embodiments may be cited in function descriptions of corresponding functional modules, and details are not described again herein.

An embodiment of this application provides a sixth type of communications apparatus. The communications apparatus is, for example, a sixth communications apparatus. Refer to FIG. 24. The communications apparatus is, for example, a communications apparatus 2400. The communications apparatus 2400 may implement functions of the first core network device described above. The communications apparatus 2400 may be the first core network device described above, or may be a chip disposed in the first core network device described above. The communications apparatus 2400 may include a processor 2401 and a transceiver 2402. The processor 2401 may be configured to perform some steps or all steps, other than the receiving and sending operations, performed by the first core network device, in any embodiment of the embodiment shown in FIG. 5 to the embodiment shown in FIG. 18, and/or may be configured to support another process of the technology described in this specification. The transceiver 2402 may be configured to perform some receiving and sending operations or all receiving and sending operations performed by the first core network device, in any embodiment of the embodiment shown in FIG. 5 to the embodiment shown in FIG. 18, and/or may be configured to support another process of the technology described in this specification.

For example, the processor 2401 is configured to determine second information, where the second information is used to indicate whether to activate a user plane data integrity protection function, or is used to indicate whether the communications apparatus 2400 supports a user plane data integrity protection function.

The transceiver 2402 is configured to send a third message to an access network device, where the third message carries the second information.

In a possible implementation,
the second information is used to indicate whether to activate the user plane data integrity protection function, or is used to indicate whether the communications apparatus 2400 supports the user plane data integrity protection function; or
the second information includes second integrity protection policy information, and the second integrity protection policy information is used to indicate whether to activate the user plane data integrity protection function.

In a possible implementation,
the second integrity protection policy information is used to indicate that the user plane data integrity protection function should be activated;
the second integrity protection policy information is used to indicate that the user plane data integrity protection function is suggested to be activated; or
the second integrity protection policy information is used to indicate not to activate the user plane data integrity protection function.

In a possible implementation, the second information further includes second encryption and decryption policy information, and the second encryption and decryption policy information is used to indicate whether to activate user plane data encryption and decryption functions.

In a possible implementation, the transceiver 2402 is further configured to receive a fourth message from the access network device, where the fourth message includes third information, and the third information is used to indicate whether to activate the user plane data integrity protection function, or is used to indicate whether a terminal device supports the user plane data integrity protection function.

In a possible implementation,
the third information is used to indicate whether to activate the user plane data integrity protection function, or is used to indicate whether the terminal device supports the user plane data integrity protection function; or
the third information includes third integrity protection policy information, and the third integrity protection policy information is used to indicate whether to activate the user plane data integrity protection function.

In a possible implementation,
the third integrity protection policy information is used to indicate that the user plane data integrity protection function needs to be activated;
the third integrity protection policy information is used to indicate that the user plane data integrity protection function tends to be activated; or
the third integrity protection policy information is used to indicate that the user plane data integrity protection function does not need to be activated.

In a possible implementation, the third information further includes third encryption and decryption policy information, and the third encryption and decryption policy information is used to indicate whether to activate user plane data encryption and decryption functions.

All related content of steps in the foregoing method embodiments may be cited in function descriptions of corresponding functional modules, and details are not described again herein.

In a simple embodiment, a person skilled in the art may figure out that the communications apparatus 1900, the communications apparatus 2000, the communications apparatus 2100, the communications apparatus 2200, the communications apparatus 2300, or the communications apparatus 2400 may be further implemented by using a structure of a communications apparatus 2500 shown in FIG. 25A. The communications apparatus 2500 may implement functions of the terminal device or network device described above. The communications apparatus 2500 may include a processor 2501.

When the communications apparatus 2500 is configured to implement the functions of the terminal device described above, the processor 1901 may be configured to perform some steps or all steps, other than the receiving and sending operations, performed by the terminal device when the terminal device is a legacy terminal device, in any embodiment of the embodiment shown in FIG. 5 to the embodiment shown in FIG. 18, and/or may be configured to support another process of the technology described in this specification. Alternatively, when the communications apparatus 2500 is configured to implement the functions of the terminal device described above, the processor 2501 may be configured to perform some steps or all steps, other than the receiving and sending operations, performed by the terminal device when the terminal device is an upgraded terminal device, in any embodiment of the embodiment shown in FIG. 5 to the embodiment shown in FIG. 18, and/or may be configured to support another process of the technology described in this specification. Alternatively, when the communications apparatus 2500 is configured to implement the functions of the access network device described above, the processor 2501 may be configured to perform some steps or all steps, other than the receiving and sending operations, performed by the access network device when the access network device is an upgraded access network device, in any embodiment of the embodiment shown in FIG. 5 to the embodiment shown in FIG. 12, and/or may be configured to support another process of the technology described in this specification. Alternatively, when the communications apparatus 2500 is configured to implement the functions of the access network device described above, the processor 2501 may be configured to perform some steps or all steps, other than the receiving and sending operations, performed by the access network device when the access network device is a legacy access network device, in any embodiment of the embodiment shown in FIG. 13 to the embodiment shown in FIG. 16, and/or may be configured to support another process of the technology described in this specification. Alternatively, when the communications apparatus 2500 is configured to implement the functions of the access network device described above, the processor 2501 may be configured to perform some steps or all steps, other than the receiving and sending operations, performed by the access network device in any embodiment of the embodiment shown in FIG. 17 and the embodiment shown in FIG. 18, and/or may be configured to support another process of the technology described in this specification. Alternatively, when the communications apparatus 2500 is configured to implement the functions of the first core network device described above, the processor 2501 may be configured to perform some steps or all steps, other than the receiving and sending operations, performed by the first core network device in any embodiment of the embodiment shown in FIG. 5 to the embodiment shown in FIG. 18, and/or may be configured to support another process of the technology described in this specification.

The communications apparatus 2500 may be implemented by using a field programmable gate array (field-programmable gate array, FPGA), an application-specific integrated chip (application specific integrated circuit, ASIC), a system on chip (system on chip, SoC), a central processing unit (central processor unit, CPU), a network processor (network processor, NP), a digital signal processor (digital signal processor, DSP), and a micro controller unit (micro controller unit, MCU), or may be implemented by a programmable logic device (programmable logic device, PLD) or another integrated chip. In this case, the communications apparatus 2500 may be disposed in the terminal device, the access network device, or the first core network device in the embodiments of this application, so that the terminal device, the access network device, or the first core network device implements the method provided in the embodiments of this application.

In an optional implementation, the communications apparatus 2500 may include a transceiver component, configured to communicate with another device. When the communications apparatus 2500 is configured to implement the functions of the terminal device described above, the transceiver component may be configured to perform some receiving and sending operations or all receiving and sending operations performed by the terminal device when the terminal device is a legacy terminal device, in any embodiment of the embodiment shown in FIG. 5 to the embodiment shown in FIG. 18, and/or may be configured to support another process of the technology described in this specification. Alternatively, when the communications apparatus 2500 is configured to implement the functions of the terminal device described above, the transceiver component may be configured to perform some receiving and sending operations or all receiving and sending operations performed by the terminal device when the terminal device is an upgraded terminal device, in any embodiment of the embodiment shown in FIG. 5 to the embodiment shown in FIG. 18, and/or may be configured to support another process of the technology described in this specification. Alternatively, when the communications apparatus 2500 is configured to implement the functions of the access network device described above, the transceiver component may be configured to perform some receiving and sending operations or all receiving and sending operations performed by the access network device when the access network device is an upgraded terminal device, in any embodiment of the embodiment shown in FIG. 5 to the embodiment shown in FIG. 12, and/or may be configured to support another process of the technology described in this specification. Alternatively, when the communications apparatus 2500 is configured to implement the functions of the access network device described above, the transceiver component may be configured to perform some receiving and sending operations or all receiving and sending operations performed by the access network device when the access network device is a legacy terminal device, in any embodiment of the embodiment shown in FIG. 13 to the embodiment shown in FIG. 16, and/or may be configured to support another process of the technology described in this specification. Alternatively, when the communications apparatus 2500 is configured to implement the functions of the access network device described above, the transceiver component may be configured to perform some receiving and sending operations or all receiving and sending operations performed by the access network device in any embodiment of the embodiment shown in FIG. 17 and the embodiment shown in FIG. 18, and/or may be configured to support another process of the technology described in this specification. Alternatively, when the communications apparatus 2500 is configured to implement the functions of the first core network device described above, the transceiver component may be configured to perform some receiving and sending operations or all receiving and sending operations performed by the first core network device in any embodiment of the embodiment shown in FIG. 5 to the embodiment shown in FIG. 18, and/or may be configured to support another process of the technology described in this specification.

For example, one type of transceiver component is a communications interface. If the communications apparatus 2500 is the terminal device, the access network device, or the first core network device, the communications interface may be a transceiver in the terminal device, the access network device, or the first core network device, for example, the transceiver 1102 or the transceiver 1202. The transceiver is, for example, a radio frequency transceiver component in the terminal device, the access network device, or the first core network device. Alternatively, if the communications apparatus 2500 is a chip disposed in the terminal device, the access network device, or the first core network device, the communications interface may be an input/output interface, for example, an input/output pin, of the chip.

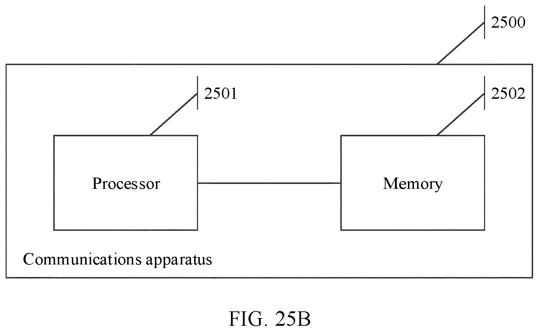

In an optional implementation, the communications apparatus 2500 may further include a memory 2502. Refer to FIG. 25B. The memory 2502 is configured to store computer programs or instructions, and the processor 2501 is configured to decode and execute the computer programs or the instructions. It should be understood that these computer programs or instructions may include a functional program of the terminal device, the access network device, or the first core network device. When the functional program of the terminal device is decoded and executed by the processor 2501, the terminal device may be enabled to implement functions of the terminal device in the method provided in any embodiment of the embodiment shown in FIG. 5 to the embodiment shown in FIG. 18 in the embodiments of this application. When the functional program of the access network device is decoded and executed by the processor 2501, the access network device may be enabled to implement functions of the access network device in the method provided in any embodiment of the embodiment shown in FIG. 5 to the embodiment shown in FIG. 18 in the embodiments of this application. When the functional program of the first core network device is decoded and executed by the processor 2501, the first core network device may be enabled to implement functions of the first core network device in the method provided in any embodiment of the embodiment shown in FIG. 5 to the embodiment shown in FIG. 18 in the embodiments of this application.

In another optional implementation, the functional program of the terminal device, the access network device, or the first core network device is stored in a memory outside the communications apparatus 2500. When the functional program of the terminal device is decoded and executed by the processor 2501, the memory 2502 temporarily stores some or all content of the functional program of the terminal device. When the functional program of the access network device is decoded and executed by the processor 2501, the memory 2502 temporarily stores some or all content of the functional program of the access network device. When the functional program of the first core network device is decoded and executed by the processor 2501, the memory 2502 temporarily stores some or all content of the functional program of the first core network device.

In another optional implementation, the functional program of the terminal device, the access network device, or the first core network device is stored in the memory 2502 disposed inside the communications apparatus 2500. When the functional program of the terminal device is stored in the memory 2502 inside the communications apparatus 2500, the communications apparatus 2500 may be disposed in the terminal device in the embodiments of this application. When the functional program of the access network device is stored in the memory 2502 inside the communications apparatus 2500, the communications apparatus 2500 may be disposed in the access network device in the embodiments of this application. When the functional program of the first core network device is stored in the memory 2502 inside the communications apparatus 2500, the communications apparatus 2500 may be disposed in the first core network device in the embodiments of this application.

In still another optional implementation, some content of the functional program of the terminal device is stored in a memory outside the communications apparatus 2500, and some other content of the functional program of the terminal device is stored in the memory 2502 inside the communications apparatus 2500. Alternatively, some content of the functional program of the access network device is stored in a memory outside the communications apparatus 2500, and some other content of the functional program of the access network device is stored in the memory 2502 inside the communications apparatus 2500. Alternatively, some content of the functional program of the first core network device is stored in a memory outside the communications apparatus 2500, and some other content of the functional program of the first core network device is stored in the memory 2502 inside the communications apparatus 2500.

In the embodiments of this application, the communications apparatus 1900, the communications apparatus 2000, the communications apparatus 2100, the communications apparatus 2200, the communications apparatus 2300, the communications apparatus 2400, and the communications apparatus 2500 may be presented in a form in which each function module is obtained through division based on each corresponding function, or may be presented in a form in which each function module is obtained through division in an integrated manner. The "module" herein may be an ASIC, a processor and a memory that execute one or more software or firmware programs, an integrated logic circuit, and/or another component that can provide the foregoing functions.

In addition, the communications apparatus 1900 provided in the embodiment shown in FIG. 19 may alternatively be implemented in another form. For example, the communications apparatus includes a processing module and a transceiver module. For example, the processing module may be implemented by using the processor 1901, and the transceiver module may be implemented by using the transceiver 1902. The processing module may be configured to perform some steps or all steps, other than the receiving and sending operations, performed by the terminal device when the terminal device is a legacy terminal device, in any embodiment of the embodiment shown in FIG. 5 to the embodiment shown in FIG. 18, and/or may be configured to support another process of the technology described in this specification. The transceiver module may be configured to perform some receiving and sending operations or all receiving and sending operations performed by the terminal device when the terminal device is a legacy terminal device, in any embodiment of the embodiment shown in FIG. 5 to the embodiment shown in FIG. 18, and/or may be configured to support another process of the technology described in this specification.

For example, the transceiver module is configured to receive a first message from an access network device, where the first message includes first information, and the first information is used to indicate whether to activate a user plane data integrity protection function, or is used to indicate whether the access network device supports a user plane data integrity protection function; and
the processing module is configured to: if the first information cannot be identified, discard or store the first information.

In a possible implementation, the transceiver module is further configured to send an exception report to the access network device, where the exception report is used to indicate that the communications apparatus cannot identify the first information.

In a possible implementation, the transceiver module is further configured to send a second message to the access network device, where the second message is used to indicate a processing result of the communications apparatus for the user plane data integrity protection function.

In a possible implementation,
the processing result is used to indicate whether the communications apparatus has activated the user plane data integrity protection function; or
the processing result includes a failure indication, where a cause value of the failure indication is used to indicate whether the communications apparatus has activated the user plane data integrity protection function, or a cause value of the failure indication is used to indicate that the communications apparatus cannot identify the first information.

In a possible implementation, the transceiver module is further configured to send third information to the access network device, to send the third information to a first core network device through the access network device, where the third information is used to indicate whether to activate the user plane data integrity protection function, or is used to indicate whether the terminal device supports the user plane data integrity protection function.

In a possible implementation,
the third information is used to indicate whether to activate the user plane data integrity protection function, or is used to indicate whether the communications apparatus supports the user plane data integrity protection function; or
the third information includes third integrity protection policy information, and the third integrity protection policy information is used to indicate whether to activate the user plane data integrity protection function.

In a possible implementation,
the third integrity protection policy information is used to indicate that the user plane data integrity protection function needs to be activated;
the third integrity protection policy information is used to indicate that the user plane data integrity protection function tends to be activated; or
the third integrity protection policy information is used to indicate that the user plane data integrity protection function does not need to be activated.

In a possible implementation, the third information further includes third encryption and decryption policy information, and the third encryption and decryption policy information is used to indicate whether to activate user plane data encryption and decryption functions.

All related content of steps in the foregoing method embodiments may be cited in function descriptions of corresponding functional modules, and details are not described again herein.

The communications apparatus 2000 provided in the embodiment shown in FIG. 20 may alternatively be implemented in another form. For example, the communications apparatus includes a processing module and a transceiver module. For example, the processing module may be implemented by using the processor 2001, and the transceiver module may be implemented by using the transceiver 2002. The processing module may be configured to perform some steps or all steps, other than the receiving and sending operations, performed by the terminal device when the terminal device is an upgraded terminal device, in any embodiment of the embodiment shown in FIG. 5 to the embodiment shown in FIG. 18, and/or may be configured to support another process of the technology described in this specification. The transceiver module may be configured to perform some receiving and sending operations or all receiving and sending operations performed by the terminal device when the terminal device is an upgraded terminal device, in any embodiment of the embodiment shown in FIG. 5 to the embodiment shown in FIG. 18, and/or may be configured to support another process of the technology described in this specification.

For example, the transceiver module is configured to receive a first message from an access network device, where the first message includes first information, and the first information is used to indicate whether to activate a user plane data integrity protection function, or is used to indicate whether the access network device supports a user plane data integrity protection function; and
the processing module is configured to determine, based on the first information, whether the communications apparatus is to activate the user plane data integrity protection function.

In a possible implementation, the transceiver module is further configured to: after the processing module determines, based on the first information, whether the communications apparatus is to activate the user plane data integrity protection function, send a fifth message to the access network device, where the fifth message includes fourth information, and the fourth information is used to indicate whether to activate the user plane data integrity protection function.

In a possible implementation, the first information is used to indicate to activate the user plane data integrity protection function, or is used to indicate that the access network device supports the user plane data integrity protection function.

The fourth information is used to indicate that the user plane data integrity protection function needs to be activated.

Alternatively, the fourth information is used to indicate that the user plane data integrity protection function tends to be activated.

Alternatively, the fourth information is used to indicate that the user plane data integrity protection function does not need to be activated.

In a possible implementation, the first information is used to indicate not to activate the user plane data integrity protection function, or is used to indicate that the access network device does not support the user plane data integrity protection function; and the processing module is further configured to discard or store the first information.

In a possible implementation, the transceiver module is further configured to: before receiving the first message from the access network device, send third information to the access network device, where the third information is used to indicate whether to activate the user plane data integrity protection function, or is used to indicate whether the communications apparatus supports the user plane data integrity protection function.

In a possible implementation,
the third information is used to indicate whether to activate the user plane data integrity protection function, or is used to indicate whether the communications apparatus supports the user plane data integrity protection function; or
the third information includes third integrity protection policy information, and the third integrity protection policy information is used to indicate whether the first core network device is to activate the user plane data integrity protection function.

In a possible implementation,
the third integrity protection policy information is used to indicate that the user plane data integrity protection function needs to be activated;
the third integrity protection policy information is used to indicate that the user plane data integrity protection function tends to be activated; or
the third integrity protection policy information is used to indicate that the user plane data integrity protection function does not need to be activated.

In a possible implementation, the third information further includes third encryption and decryption policy information, and the third encryption and decryption policy information is used to indicate whether to activate user plane data encryption and decryption functions.

All related content of steps in the foregoing method embodiments may be cited in function descriptions of corresponding functional modules, and details are not described again herein.

The communications apparatus 2100 provided in the embodiment shown in FIG. 21 may alternatively be implemented in another form. For example, the communications apparatus includes a processing module and a transceiver module. For example, the processing module may be implemented by using the processor 2101, and the transceiver module may be implemented by using the transceiver 2102. The processing module may be configured to perform some steps or all steps, other than the receiving and sending operations, performed by the access network device when the access network device is an upgraded access network device, in any embodiment of the embodiment shown in FIG. 5 to the embodiment shown in FIG. 12, and/or may be configured to support another process of the technology described in this specification. The transceiver module may be configured to perform some receiving and sending operations or all receiving and sending operations performed by the access network device when the access network device is an upgraded terminal device, in any embodiment of the embodiment shown in FIG. 5 to the embodiment shown in FIG. 12, and/or may be configured to support another process of the technology described in this specification.

For example, the processing module is configured to determine first information, where the first information is used to indicate whether to activate a user plane data integrity protection function, or is used to indicate whether the communications apparatus supports a user plane data integrity protection function; and
the transceiver module is configured to send a first message to a terminal device, where the first message carries the first information.

In a possible implementation,
the first information is used to indicate whether to activate the user plane data integrity protection function, or is used to indicate whether the communications apparatus supports the user plane data integrity protection function; or
the first information includes first integrity protection policy information, and the first integrity protection policy information is used to indicate whether to activate the user plane data integrity protection function.

In a possible implementation,
the first integrity protection policy information is used to indicate that the user plane data integrity protection function needs to be activated;
the first integrity protection policy information is used to indicate that the user plane data integrity protection function tends to be activated; or
the first integrity protection policy information is used to indicate that the user plane data integrity protection function does not need to be activated.

In a possible implementation, the first information further includes first encryption and decryption policy information, and the first encryption and decryption policy information is used to indicate whether to activate user plane data encryption and decryption functions.

In a possible implementation, the transceiver module is further configured to receive a second message from the terminal device, where the second message is used to indicate a processing result of the terminal device for the user plane data integrity protection function.

In a possible implementation, the processing module is further configured to: if the processing result is used to indicate that the terminal device cannot activate the user plane data integrity protection function, deactivate the user plane data integrity protection function.

In a possible implementation, the processing module is further configured to: if the processing result is used to indicate that the terminal device has activated the user plane data integrity protection function, activate the user plane data integrity protection function.

In a possible implementation, the transceiver module is further configured to receive a third message from a first core network device, where the third message is used to indicate whether to activate the user plane data integrity protection function, is used to indicate whether the first core network device supports the user plane data integrity protection function, or is used to indicate whether subscription data has been configured to support the user plane data integrity protection function.

All related content of steps in the foregoing method embodiments may be cited in function descriptions of corresponding functional modules, and details are not described again herein.

The communications apparatus 2200 provided in the embodiment shown in FIG. 22 may alternatively be implemented in another form. For example, the communications apparatus includes a processing module and a transceiver module. For example, the processing module may be implemented by using the processor 2201, and the transceiver module may be implemented by using the transceiver 2202. The processing module may be configured to perform some steps or all steps, other than the receiving and sending operations, performed by the access network device when the access network device is a legacy network device, in any embodiment of the embodiment shown in FIG. 13 to the embodiment shown in FIG. 16, and/or may be configured to support another process of the technology described in this specification. The transceiver module may be configured to perform some receiving and sending operations or all receiving and sending operations performed by the access network device when the access network device is a legacy terminal device, in any embodiment of the embodiment shown in FIG. 13 to the embodiment shown in FIG. 16, and/or may be configured to support another process of the technology described in this specification.

For example, the transceiver module is configured to receive a third message from a first core network device, where the third message includes second information, and the second information is used to indicate whether to activate a user plane data integrity protection function, or is used to indicate whether the first core network device supports a user plane data integrity protection function; and
the processing module is configured to: if the second information cannot be identified, discard or store the second information.

In a possible implementation, the transceiver module is further configured to send an exception report to the first core network device, where the exception report is used to indicate that the communications apparatus cannot identify the second information.

All related content of steps in the foregoing method embodiments may be cited in function descriptions of corresponding functional modules, and details are not described again herein.

The communications apparatus 2300 provided in the embodiment shown in FIG. 23 may alternatively be implemented in another form. For example, the communications apparatus includes a processing module and a transceiver module. For example, the processing module may be implemented by using the processor 2301, and the transceiver module may be implemented by using the transceiver 2302. The processing module may be configured to perform some steps or all steps, other than the receiving and sending operations, performed by the access network device, in any embodiment of the embodiment shown in FIG. 17 and the embodiment shown in FIG. 18, and/or may be configured to support another process of the technology described in this specification. The transceiver module may be configured to perform some receiving and sending operations or all receiving and sending operations performed by the access network device, in any embodiment of the embodiment shown in FIG. 17 and the embodiment shown in FIG. 18, and/or may be configured to support another process of the technology described in this specification.

For example, the transceiver module is configured to receive third information, where the third information is used to indicate whether to activate a user plane data integrity protection function, or is used to indicate whether a terminal device supports a user plane data integrity protection function; and
the processing module is configured to determine, based on the third information, whether to activate the user plane data integrity protection function.

In a possible implementation,
the processing module is further configured to determine that the third information indicates to activate the user plane data integrity protection function, or indicates that the terminal device supports the user plane data integrity protection function, and that the communications apparatus 2300 supports activating the user plane data integrity protection function;
the processing module is further configured to activate the user plane data integrity protection function; and
the transceiver module is further configured to send, to the terminal device, information about an algorithm applicable to the user plane integrity protection function.

In a possible implementation,
the processing module is further configured to determine that the user plane data integrity protection function is not supported, or determine that activating the user plane data integrity protection function is not suggested; and
the transceiver module is further configured to send a sixth message to the terminal device, where the sixth message is used to indicate that the communications apparatus does not support the user plane data integrity protection function, or indicate not to activate the user plane data integrity protection function.

In a possible implementation, the processing module determines, based on the third information and in the following manner, whether to activate the user plane data integrity protection function:
after receiving the third information through the transceiver module, sending a query request message to a second core network device through the transceiver module, where the query request message is used to query whether the second core network device supports activating the user plane data integrity protection function;
receiving a query response message from the second core network device through the transceiver module, where the query response message is used to indicate whether the user plane data integrity protection function is supported, or indicate whether to activate the user plane data integrity protection function; and
determining, based on the query response message, whether to activate the user plane data integrity protection function.

All related content of steps in the foregoing method embodiments may be cited in function descriptions of corresponding functional modules, and details are not described again herein.

The communications apparatus 2400 provided in the embodiment shown in FIG. 24 may alternatively be implemented in another form. For example, the communications apparatus includes a processing module and a transceiver module. For example, the processing module may be implemented by using the processor 2401, and the transceiver module may be implemented by using the transceiver 2402. The processing module may be configured to perform some steps or all steps, other than the receiving and sending operations, performed by the first core network device, in any embodiment of the embodiment shown in FIG. 5 to the embodiment shown in FIG. 18, and/or may be configured to support another process of the technology described in this specification. The transceiver module may be configured to perform some receiving and sending operations or all receiving and sending operations performed by the first core network device, in any embodiment of the embodiment shown in FIG. 5 to the embodiment shown in FIG. 18, and/or may be configured to support another process of the technology described in this specification.

For example, the processing module is configured to determine second information, where the second information is used to indicate whether to activate a user plane data integrity protection function, or is used to indicate whether the communications apparatus supports a user plane data integrity protection function; and
the transceiver module is configured to send a third message to an access network device, where the third message carries the second information.

In a possible implementation,
the second information is used to indicate whether to activate the user plane data integrity protection function, or is used to indicate whether the communications apparatus supports the user plane data integrity protection function; or
the second information includes second integrity protection policy information, and the second integrity protection policy information is used to indicate whether to activate the user plane data integrity protection function.

In a possible implementation,
the second integrity protection policy information is used to indicate that the user plane data integrity protection function should be activated;
the second integrity protection policy information is used to indicate that the user plane data integrity protection function is suggested to be activated; or
the second integrity protection policy information is used to indicate not to activate the user plane data integrity protection function.

In a possible implementation, the second information further includes second encryption and decryption policy information, and the second encryption and decryption policy information is used to indicate whether to activate user plane data encryption and decryption functions.

In a possible implementation, the transceiver module is further configured to receive a fourth message from the access network device, where the fourth message includes third information, and the third information is used to indicate whether to activate the user plane data integrity protection function, or is used to indicate whether a terminal device supports the user plane data integrity protection function.

In a possible implementation,
the third information is used to indicate whether to activate the user plane data integrity protection function, or is used to indicate whether the terminal device supports the user plane data integrity protection function; or
the third information includes third integrity protection policy information, and the third integrity protection policy information is used to indicate whether to activate the user plane data integrity protection function.

In a possible implementation,
the third integrity protection policy information is used to indicate that the user plane data integrity protection function needs to be activated;
the third integrity protection policy information is used to indicate that the user plane data integrity protection function tends to be activated; or
the third integrity protection policy information is used to indicate that the user plane data integrity protection function does not need to be activated.

In a possible implementation, the third information further includes third encryption and decryption policy information, and the third encryption and decryption policy information is used to indicate whether to activate user plane data encryption and decryption functions.

All related content of steps in the foregoing method embodiments may be cited in function descriptions of corresponding functional modules, and details are not described again herein.

The communications apparatus 1900, the communications apparatus 2000, the communications apparatus 2100, the communications apparatus 2200, the communications apparatus 2300, the communications apparatus 2400, and the communications apparatus 2500 provided in the embodiments of this application may be configured to perform the methods provided in corresponding embodiments of the embodiment shown in FIG. 5 to the embodiment shown in FIG. 18. Therefore, for technical effects that can be achieved by the embodiments, refer to the foregoing method embodiments. Details are not described herein again.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on a computer, all or some of the procedure or functions according to the embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid state disk, SSD)), or the like.

It is clear that a person skilled in the art can make various modifications and variations to the embodiments of this application without departing from the spirit and scope of this application. This application is intended to cover these modifications and variations of the embodiments of this application provided that they fall within the scope of the claims of this application and their equivalent technologies.

## Claims

1. A communication method, comprising:
receiving, by a terminal device, a first message from an access network device, wherein the first message comprises first information, and the first information is used to indicate whether to activate a user plane data integrity protection function, or is used to indicate whether the access network device supports a user plane data integrity protection function; and
if the terminal device cannot identify the first information, discarding or storing the first information.

2. The method according to claim 1, comprising:
sending, by the terminal device, an exception report to the access network device, wherein the exception report is used to indicate that the terminal device cannot identify the first information.

3. A communication method, comprising:
receiving, by a terminal device, a first message from an access network device, wherein the first message comprises first information, and the first information is used to indicate whether to activate a user plane data integrity protection function, or is used to indicate whether the access network device supports a user plane data integrity protection function; and
determining, by the terminal device based on the first information, whether the terminal device is to activate the user plane data integrity protection function.

4. The method according to claim 3, wherein after the determining, by the terminal device based on the first information, whether the terminal device is to activate the user plane data integrity protection function, the method further comprises:
sending, by the terminal device, a fifth message to the access network device, wherein the fifth message comprises fourth information, and the fourth information is used to indicate whether to activate the user plane data integrity protection function.

5. The method according to claim 4, wherein the first information is used to indicate to activate the user plane data integrity protection function, or is used to indicate that the access network device supports the user plane data integrity protection function; and
the fourth information is used to indicate that the user plane data integrity protection function needs to be activated;
the fourth information is used to indicate that the user plane data integrity protection function tends to be activated; or
the fourth information is used to indicate that the user plane data integrity protection function does not need to be activated.

6. The method according to claim 3 or 4, wherein the first information is used to indicate not to activate the user plane data integrity protection function, or is used to indicate that the access network device does not support the user plane data integrity protection function; and the method further comprises:
discarding or storing, by the terminal device, the first information.

7. The method according to any one of claims 3 to 6, wherein before the receiving, by a terminal device, a first message from an access network device, the method further comprises:
sending, by the terminal device, third information to the access network device, wherein the third information is used to indicate whether to activate the user plane data integrity protection function, or is used to indicate whether the terminal device supports the user plane data integrity protection function.

8. The method according to claim 7, wherein
the third information is used to indicate whether to activate the user plane data integrity protection function, or is used to indicate whether the terminal device supports the user plane data integrity protection function; or
the third information comprises third integrity protection policy information, and the third integrity protection policy information is used to indicate whether to activate the user plane data integrity protection function.

9. A communication method, comprising:
determining, by an access network device, first information, wherein the first information is used to indicate whether to activate a user plane data integrity protection function, or is used to indicate whether the access network device supports a user plane data integrity protection function; and
sending, by the access network device, a first message to a terminal device, wherein the first message carries the first information.

10. The method according to claim 9, wherein
the first information is used to indicate whether to activate the user plane data integrity protection function, or is used to indicate whether the access network device supports the user plane data integrity protection function; or
the first information comprises first integrity protection policy information, and the first integrity protection policy information is used to indicate whether to activate the user plane data integrity protection function.

11. The method according to claim 9 or 10, wherein the method further comprises:
receiving, by the access network device, a second message from the terminal device, wherein the second message is used to indicate a processing result of the terminal device for the user plane data integrity protection function.

12. The method according to claim 11, wherein the method further comprises:
if the processing result is used to indicate that the terminal device cannot activate the user plane data integrity protection function, deactivating, by the access network device, the user plane data integrity protection function.

13. A terminal device, comprising:
a transceiver, configured to receive a first message from an access network device, wherein the first message comprises first information, and the first information is used to indicate whether to activate a user plane data integrity protection function, or is used to indicate whether the access network device supports a user plane data integrity protection function; and
a processor, configured to: if the first information cannot be identified, discard or store the first information.

14. The terminal device according to claim 13, wherein the transceiver is further configured to send an exception report to the access network device, wherein the exception report is used to indicate that the terminal device cannot identify the first information.

15. A terminal device, comprising:
a transceiver, configured to receive a first message from an access network device, wherein the first message comprises first information, and the first information is used to indicate whether to activate a user plane data integrity protection function, or is used to indicate whether the access network device supports a user plane data integrity protection function; and
a processor, configured to determine, based on the first information, whether the terminal device is to activate the user plane data integrity protection function.

16. The terminal device according to claim 15, wherein the transceiver is further configured to: after the processor determines, based on the first information, whether the terminal device is to activate the user plane data integrity protection function, send a fifth message to the access network device, wherein the fifth message comprises fourth information, and the fourth information is used to indicate whether to activate the user plane data integrity protection function.

17. The terminal device according to claim 16, wherein the first information is used to indicate to activate the user plane data integrity protection function, or is used to indicate that the access network device supports the user plane data integrity protection function; and
the fourth information is used to indicate that the user plane data integrity protection function needs to be activated;
the fourth information is used to indicate that the user plane data integrity protection function tends to be activated; or
the fourth information is used to indicate that the user plane data integrity protection function does not need to be activated.

18. The terminal device according to claim 15 or 16, wherein the first information is used to indicate not to activate the user plane data integrity protection function, or is used to indicate that the access network device does not support the user plane data integrity protection function; and
the processor is further configured to discard or store the first information.

19. The terminal device according to any one of claims 15 to 18, wherein the transceiver is further configured to: before receiving the first message from the access network device, send third information to the access network device, wherein the third information is used to indicate whether to activate the user plane data integrity protection function, or is used to indicate whether the terminal device supports the user plane data integrity protection function.

20. The terminal device according to claim 19, wherein
the third information is used to indicate whether to activate the user plane data integrity protection function, or is used to indicate whether the terminal device supports the user plane data integrity protection function; or
the third information comprises third integrity protection policy information, and the third integrity protection policy information is used to indicate whether to activate the user plane data integrity protection function.

21. An access network device, comprising:
a processor, configured to determine first information, wherein the first information is used to indicate whether to activate a user plane data integrity protection function, or is used to indicate whether the access network device supports a user plane data integrity protection function; and
a transceiver, configured to send a first message to a terminal device, wherein the first message carries the first information.

22. The access network device according to claim 21, wherein
the first information is used to indicate whether to activate the user plane data integrity protection function, or is used to indicate whether the access network device supports the user plane data integrity protection function; or
the first information comprises first integrity protection policy information, and the first integrity protection policy information is used to indicate whether to activate the user plane data integrity protection function.

23. The access network device according to claim 21 or 22, wherein the transceiver is further configured to receive a second message from the terminal device, wherein the second message is used to indicate a processing result of the terminal device for the user plane data integrity protection function.

24. The access network device according to claim 23, wherein the processor is further configured to: if the processing result is used to indicate that the terminal device cannot activate the user plane data integrity protection function, deactivate the user plane data integrity protection function.

25. A computer-readable storage medium, wherein the computer-readable storage medium stores a computer program, and the computer program comprises program instructions; and when the program instructions are executed by a computer, the computer is enabled to perform the method according to claim 1 or 2.

26. A computer-readable storage medium, wherein the computer-readable storage medium stores a computer program, and the computer program comprises program instructions; and when the program instructions are executed by a computer, the computer is enabled to perform the method according to any one of claims 3 to 8.

27. A computer-readable storage medium, wherein the computer-readable storage medium stores a computer program, and the computer program comprises program instructions; and when the program instructions are executed by a computer, the computer is enabled to perform the method according to any one of claims 9 to 12.
